(19) **Europäisches Patentamt / European Patent Office / Office européen des brevets**

(11) **EP 3 545 464 B1**

(12) **EUROPEAN PATENT SPECIFICATION**

(45) Date of publication and mention
of the grant of the patent:
**07.05.2025 Bulletin 2025/19**

(21) Application number: **17812277.6**

(22) Date of filing: **24.11.2017**

(51) International Patent Classification (IPC):
*G06V 20/58* (2022.01)  *G06V 40/10* (2022.01)
*G06V 10/26* (2022.01)  *G06T 7/593* (2017.01)

(52) Cooperative Patent Classification (CPC):
**G06T 7/593; G06V 10/26; G06V 20/58;**
**G06V 40/10;** G06T 2207/30252

(86) International application number:
**PCT/JP2017/042302**

(87) International publication number:
**WO 2018/097269 (31.05.2018 Gazette 2018/22)**

(54) **INFORMATION PROCESSING DEVICE, IMAGING DEVICE, EQUIPMENT CONTROL SYSTEM, MOBILE OBJECT, INFORMATION PROCESSING METHOD, AND COMPUTER-READABLE RECORDING MEDIUM**

INFORMATIONSVERARBEITUNGSVORRICHTUNG, BILDGEBUNGSVORRICHTUNG, AUSRÜSTUNGSSTEUERUNGSSYSTEM, BEWEGLICHES OBJEKT, INFORMATIONSVERARBEITUNGSVERFAHREN UND COMPUTERLESBARES AUFZEICHNUNGSMEDIUM

DISPOSITIF DE TRAITEMENT D'INFORMATIONS, DISPOSITIF D'IMAGERIE, SYSTÈME DE COMMANDE D'ÉQUIPEMENT, OBJET MOBILE, PROCÉDÉ DE TRAITEMENT D'INFORMATIONS ET SUPPORT D'ENREGISTREMENT LISIBLE PAR ORDINATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: 25.11.2016  JP 2016229468
25.11.2016  JP 2016229566
25.11.2016  JP 2016229572
15.09.2017  JP 2017177897

(43) Date of publication of application:
**02.10.2019 Bulletin 2019/40**

(73) Proprietor: **Ricoh Company, Ltd.**
**Tokyo 143-8555 (JP)**

(72) Inventors:
• **AMANO, Seiya**
**Tokyo 143-8555 (JP)**
• **YOKOTA, Soichiro**
**Tokyo 143-8555 (JP)**
• **KIMURA, Sukehiro**
**Tokyo 143-8555 (JP)**

• **YOSHIDA, Jun**
**Tokyo 143-8555 (JP)**
• **OHBAYASHI, Yohichiroh**
**Tokyo 143-8555 (JP)**
• **KIDA, Shintaroh**
**Tokyo 143-8555 (JP)**
• **KUBOZONO, Hiroki**
**Tokyo 143-8555 (JP)**
• **OKADA, Daisuke**
**Tokyo 143-8555 (JP)**
• **SUZUKI, Tabito**
**Tokyo 143-8555 (JP)**
• **TAKAHASHI, Sadao**
**Tokyo 143-8555 (JP)**

(74) Representative: **SSM Sandmair**
**Patentanwälte Rechtsanwalt**
**Partnerschaft mbB**
**Joseph-Wild-Straße 20**
**81829 München (DE)**

(56) References cited:
**US-A1- 2013 128 001    US-A1- 2016 014 406**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**(Cont. next page)**

- WU MEIQING ET AL: "Stereo based ROIs generation for detecting pedestrians in close proximity", 17TH INTERNATIONAL IEEE CONFERENCE ON INTELLIGENT TRANSPORTATION SYSTEMS (ITSC), IEEE, 8 October 2014 (2014-10-08), pages 1929 - 1934, XP032685662, DOI: 10.1109/ITSC.2014.6957988

- CHUNG-HEE LEE: "Stereo vision-based vehicle detection using a road feature and disparity histogram", OPTICAL ENGINEERING, vol. 50, no. 2, 1 February 2011 (2011-02-01), pages 027004, XP055049147, ISSN: 0091-3286, DOI: 10.1117/1.3535590

## Description

## Technical Field

The present invention relates to an information processing device, an imaging device, an equipment control system, a mobile object, an information processing method, and a computer-readable recording medium.

## Background Art

In the related art, a body structure of an automobile and the like have been developed in view of how to save a pedestrian or how to protect an occupant in a case in which the pedestrian collides with the automobile from the viewpoint of safety of automobiles. However, in recent years, an information processing technique and an image processing technique have been developed, so that a technique of rapidly detecting a person and an automobile has been developed. By applying these techniques, there has been already developed an automobile that prevents collision by automatically braking before the automobile collides with an object. To automatically control the automobile, a distance to an object such as a person or another car needs to be precisely measured. Due to this, distance measurement using a millimetric wave radar and a laser radar, a distance measurement using a stereo camera, and the like are put to practical use.

When a stereo camera is used as a technique of recognizing the object, a parallax image is generated based on a parallax of each object projected in a taken luminance image, and the object is recognized by integrating pixel groups having similar parallax values.

Patent Literature 1 discloses, for a technique of detecting an object using a distance image generated through stereo image processing, a technique of suppressing erroneous detection such that, when a group of the same objects is present among a plurality of detected objects, the same objects are erroneously regarded as a plurality of divided small objects (for example, two pedestrians) although the same objects should be regarded as one object and detected as a single object (for example, one preceding vehicle). Document WU MEIQING ET AL: "Stereo based ROIs generation for detecting pedestrians in close proximity" 17TH INTERNATIONAL IEEE CONFERENCE ON INTELLIGENT TRANSPORTATION SYSTEMS (ITSC), IEEE, 8 October 2014 (2014-10-08), page 1929-1934 XP032685662,DOI: 10.1109/ITSC.2014.6957988 discloses a pedestrian detection method using two disparity images.

## Summary of Invention

## Technical Problem

However, in the related art for detecting an object such as a vehicle or a pedestrian from a parallax image taken by a stereo camera, for example, the object such as a vehicle and another object adjacent to the former object may be detected as one object.

In view of the above-described conventional problem, there is a need to provide a technique for improving performance of recognizing an object.

## Solution to Problem

According to exemplary embodiments of the present invention, there is provided an information processing device, a method and a computer-readable medium according to claims 1, 11 and 12, respectively.

## Advantageous Effects of Invention

According to the disclosed technique, performance of recognizing an object can be improved.

## Brief Description of Drawings

[fig.1A]Fig. 1A is a side view of a vehicle on which an equipment control system according to a first embodiment is mounted.
[fig.1B]Fig. 1B is a front view of the vehicle illustrated in Fig. 1A.
[fig.2]Fig. 2 is a diagram illustrating an example of a hardware configuration of an object recognition device according to the first embodiment.
[fig.3]Fig. 3 is a diagram illustrating an example of a functional block configuration of the object recognition device according to the first embodiment.
[fig.4]Fig. 4 is a diagram illustrating an example of a functional block configuration of a recognition processing unit of the object recognition device according to the first embodiment.
[fig.5A]Fig. 5A is a diagram illustrating an example of the reference image.
[fig.5B]Fig. 5B is a diagram illustrating an example of a Vmap generated from the parallax image and the reference image.
[fig.6A]Fig. 6A is a diagram illustrating an example of the reference image.
[fig.6B]Fig. 6B is a diagram illustrating an example of a Umap generated from the reference image and the parallax image.
[fig.6C]Fig. 6C is a diagram illustrating another example of a Umap generated from the reference image and the parallax image.
[fig.7A]Fig. 7A is a diagram illustrating an example of a real Umap generated from the Umap.
[fig.7B]Fig. 7B is a diagram illustrating an example of a real Umap generated from the Umap.
[fig.8]Fig. 8 is a diagram for explaining a method of sorting a classification of the object.

[fig.9]Fig. 9 is a flowchart illustrating an example of processing performed by a clustering processing unit.

[fig.10A]Fig. 10A is a diagram for explaining processing of creating a detection frame.

[fig.10B]Fig. 10B is a diagram for explaining processing of creating a detection frame.

[fig.11] Fig. 11 is a flowchart illustrating an example of basic detection processing.

[fig.12]Fig. 12 is a flowchart illustrating an example of integration detection processing.

[fig.13]Fig. 13 is a flowchart illustrating an example of processing of selecting an object region to be output.

[fig.14]Fig. 14 is a flowchart illustrating an example of processing of selecting an object region to be output.

[fig. 15A]Fig. 15A is a diagram for explaining background detection processing in a case of a detection frame for an object region such as a vehicle.

[fig. 15B]Fig. 15B is a diagram for explaining background detection processing in a case of a detection frame for an object region such as a vehicle.

[fig. 15C]Fig. 15C is a diagram for explaining background detection processing in a case of a detection frame for an object region such as a vehicle.

[fig. 16A]Fig. 16A is a diagram for explaining background detection processing in a case of a detection frame for an object region in which two groups such as pedestrians are coupled.

[fig. 16B]Fig. 16B is a diagram for explaining background detection processing in a case of a detection frame for an object region in which two groups such as pedestrians are coupled.

[fig. 16C]Fig. 16C is a diagram for explaining background detection processing in a case of a detection frame for an object region in which two groups such as pedestrians are coupled.

[fig.17]Fig. 17 is a flowchart illustrating an example of rejection processing.

[fig.18A]Fig. 18A is a diagram for explaining rejection processing based on background information.

[fig.18B]Fig. 18B is a diagram for explaining rejection processing based on background information.

[fig.19]Fig. 19 is a schematic diagram illustrating a schematic configuration of an equipment control system according to a second embodiment.

[fig.20]Fig. 20 is a schematic block diagram of an imaging unit and an analyzing unit.

[fig.21]Fig. 21 is a diagram illustrating a positional relation between a subject and an imaging lens of each camera unit.

[fig.22]Fig. 22 is a diagram for schematically explaining a function of the analyzing unit.

[fig.23]Fig. 23 is a diagram illustrating an example of a function of an object detection processing unit.

[fig.24]Fig. 24 is a diagram illustrating an example of a function of a road surface detection processing unit.

[fig.25]Fig. 25 is a diagram illustrating an example of a taken image.

[fig.26]Fig. 26 is a diagram illustrating an example of a High Umap.

[fig.27]Fig. 27 is a diagram illustrating an example of a Standard Umap.

[fig.28]Fig. 28 is a diagram illustrating an example of a specific function of the clustering processing unit.

[fig.29]Fig. 29 is a diagram illustrating an example of a taken image.

[fig.30]Fig. 30 is a diagram illustrating an example of an isolated region.

[fig.31]Fig. 31 is a diagram illustrating a region on a parallax image corresponding to the isolated region illustrated in Fig. 30.

[fig.32]Fig. 32 is a diagram for explaining rejection processing.

[fig.33]Fig. 33 is a flowchart illustrating an example of processing performed by the clustering processing unit.

[fig.34]Fig. 34 is a flowchart illustrating an example of isolated region detection processing.

[fig.35]Fig. 35 is a flowchart illustrating an example of basic detection processing.

[fig.36]Fig. 36 is a diagram illustrating an example after binarization processing is performed.

[fig.37]Fig. 37 is a flowchart illustrating an example of separation detection processing.

[fig.38]Fig. 38 is a flowchart illustrating an example of detection processing for integration.

[fig.39A]Fig. 39A is a table illustrating an example of conditions for sorting detection results.

[fig.39B]Fig. 39B is a table illustrating an example of conditions for sorting detection results.

[fig.39C]Fig. 39C is a table illustrating an example of conditions for sorting detection results.

[fig.40]Fig. 40 is a flowchart illustrating an example of final determination processing.

[fig.41A]Fig. 41A is a diagram illustrating an example of a condition for rejection.

[fig.41B]Fig. 41B is a table illustrating an example of a condition for rejection.

[fig.42]Fig. 42 is a table illustrating an example of conditions for merge processing.

[fig.43]Fig. 43 is a diagram illustrating an example of correction processing.

[fig.44]Fig. 44 is a flowchart illustrating an example of integration correction processing.

[fig.45]Fig. 45 is a diagram illustrating a circumscribing rectangle of pixels having a parallax within an inclusive frame.

[fig.46]Fig. 46 is a flowchart illustrating a procedure of correction processing of a partial frame.

[fig.47]Fig. 47 is a table illustrating an example of a condition whether to be a target of coupling processing.

[fig.48]Fig. 48 is a flowchart illustrating a procedure of correction processing for short distance.

[fig.49]Fig. 49 is a flowchart illustrating a procedure of correction processing for long distance.

[fig.50]Fig. 50 is a diagram illustrating an example of a height map.

[fig.51]Fig. 51 is a diagram illustrating an example of a region of interest.

[fig.52]Fig. 52 is a diagram illustrating an example of a height profile.

[fig.53]Fig. 53 is a diagram illustrating an example of a height profile.

[fig.54]Fig. 54 is a flowchart illustrating a procedure of coupling determination processing. The accompanying drawings are intended to depict exemplary embodiments of the present invention and should not be interpreted to limit the scope thereof. Identical or similar reference numerals designate identical or similar components throughout the various drawings.

**Description of Embodiments**

The terminology used herein is for the purpose of describing particular embodiments only and is not intended to be limiting of the present invention.

As used herein, the singular forms "a", "an" and "the" are intended to include the plural forms as well, unless the context clearly indicates otherwise.

In describing preferred embodiments illustrated in the drawings, specific terminology may be employed for the sake of clarity. However, the disclosure of this patent specification is not intended to be limited to the specific terminology so selected, and it is to be understood that each specific element includes all technical equivalents that have the same function, operate in a similar manner, and achieve a similar result.

First Embodiment

The following specifically describes embodiments with reference to the drawings. Herein, exemplified is a case in which an object recognition device 1 is mounted on an automobile.

Schematic configuration of vehicle including object recognition device

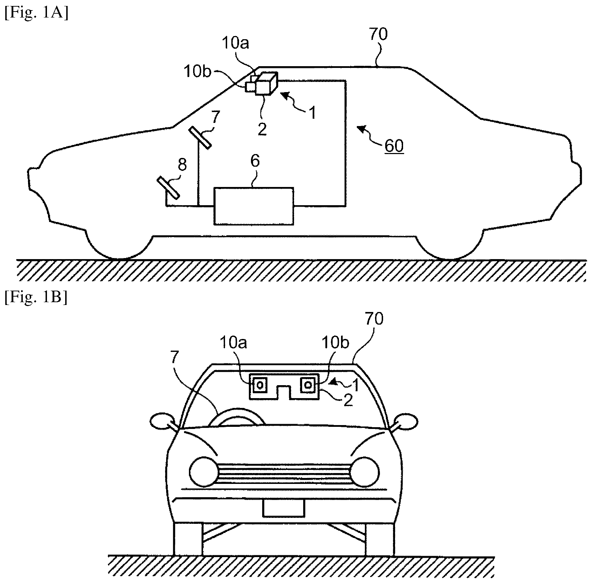

Figs. 1A and 1B are diagrams illustrating an example in which an equipment control system according to the present embodiment is mounted on a vehicle. With reference to Figs. 1A and 1B, the following describes a vehicle 70 on which an equipment control system 60 according to the present embodiment is mounted. Fig. 1A is a side view of the vehicle 70 on which the equipment control system 60 is mounted, and Fig. 1B is a front view of the vehicle 70.

As illustrated in Figs. 1A and 1B, the equipment control system 60 is mounted on the vehicle 70 as an automobile. The equipment control system 60 includes the object recognition device 1 installed in a compartment as a sitting space of the vehicle 70, a vehicle control device 6 (control device), a steering wheel 7, and a brake pedal 8.

The object recognition device 1 has an imaging function for imaging a traveling direction of the vehicle 70, and is installed on an inner side of a front window in the vicinity of a rearview mirror of the vehicle 70, for example. Details about a configuration and an operation of the object recognition device 1 will be described later. The object recognition device 1 includes a main body unit 2, and an imaging unit 10a and an imaging unit 10b fixed to the main body unit 2. The imaging units 10a and 10b are fixed to the main body unit 2 so as to take an image of a subject in the traveling direction of the vehicle 70.

The vehicle control device 6 is an electronic control unit (ECU) that executes various vehicle control based on recognition information received from the object recognition device 1. As an example of vehicle control, the vehicle control device 6 executes steering control for controlling a steering system (control object) including the steering wheel 7 to avoid an obstacle, brake control for controlling the brake pedal 8 (control object) to decelerate and stop the vehicle 70, or the like based on the recognition information received from the object recognition device 1.

As in the equipment control system 60 including the object recognition device 1 and the vehicle control device 6, safety in driving of the vehicle 70 can be improved by executing vehicle control such as steering control or brake control.

As described above, the object recognition device 1 is assumed to take an image of the front of the vehicle 70, but the embodiment is not limited thereto. That is, the object recognition device 1 may be installed to take an image of the back or a side of the vehicle 70. In this case, the object recognition device 1 can detect positions of a following vehicle and person in the rear of the vehicle 70, another vehicle and person on a side of the vehicle 70, or the like. The vehicle control device 6 can detect danger at the time when the vehicle 70 changes lanes or when the vehicle 70 joins in a lane, and execute vehicle control as described above. When determining that there is a risk of collision based on the recognition information about the obstacle in the rear of the vehicle 70 output from the object recognition device 1 in a reversing operation at the time of parking the vehicle 70 and the like, the vehicle control device 6 can execute vehicle control as described above.

Hardware configuration of object recognition device

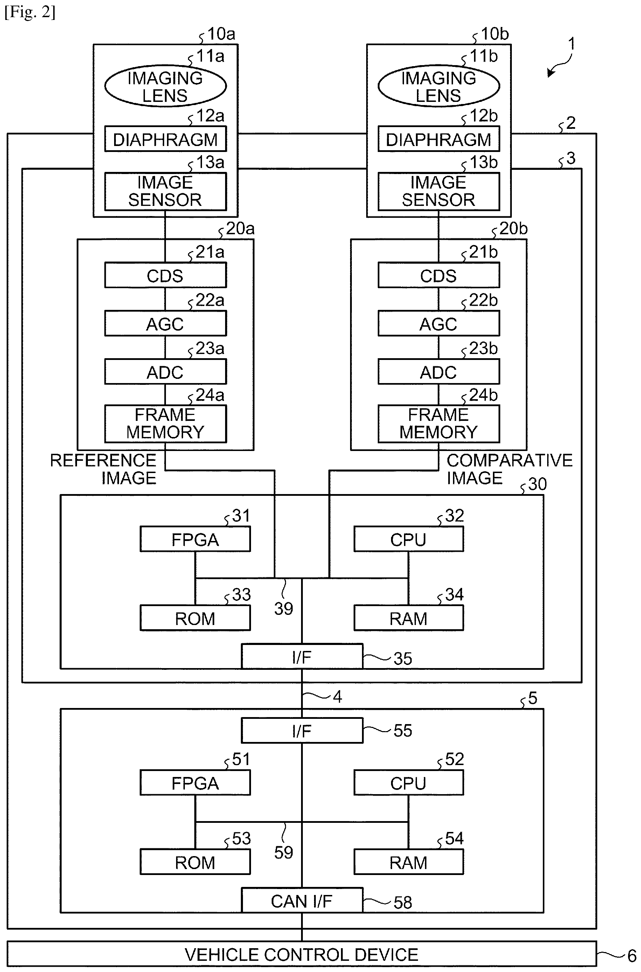

Fig. 2 is a diagram illustrating an example of a hardware configuration of the object recognition device according to the present embodiment. With reference to Fig. 2, the following describes the hardware configuration of the object recognition device 1.

As illustrated in Fig. 2, the object recognition device 1 includes a parallax value deriving unit 3 and a recognition processing unit 5 in the main body unit 2.

The parallax value deriving unit 3 derives a parallax value dp indicating a parallax for an object E from a plurality of images obtained by imaging the object E, and outputs a parallax image indicating the parallax value dp for each pixel (an example of "measurement information in which a position in a vertical direction of a detecting target, a position in a horizontal direction thereof, and a position in a depth direction thereof are associated with each other"). The recognition processing unit 5 performs object recognition processing and the like on an object such as a person and a vehicle projected in a taken image based on the parallax image output from the parallax value deriving unit 3, and outputs, to the vehicle control device 6, recognition information as information indicating a result of object recognition processing.

As illustrated in Fig. 2, the parallax value deriving unit 3 includes the imaging unit 10a, the imaging unit 10b, a signal conversion unit 20a, a signal conversion unit 20b, and an image processing unit 30.

The imaging unit 10a is a processing unit that images a forward subject and generates an analog image signal. The imaging unit 10a includes an imaging lens 11a, a diaphragm 12a, and an image sensor 13a.

The imaging lens 11a is an optical element for refracting incident light to form an image of the object on the image sensor 13a. The diaphragm 12a is a member that adjusts a quantity of light input to the image sensor 13a by blocking part of light passed through the imaging lens 11a. The image sensor 13a is a semiconductor element that converts light entering the imaging lens 11a and passing through the diaphragm 12a into an electrical analog image signal. For example, the image sensor 13a is implemented by a solid imaging element such as a charge coupled device (CCD) or a complementary metal oxide semiconductor (CMOS).

The imaging unit 10b is a processing unit that images a forward subject and generates an analog image signal. The imaging unit 10b includes an imaging lens 11b, a diaphragm 12b, and an image sensor 13b. Functions of the imaging lens 11b, the diaphragm 12b, and the image sensor 13b are the same as the functions of the imaging lens 11a, the diaphragm 12a, and the image sensor 13a described above, respectively. The imaging lens 11a and the imaging lens 11b are installed such that lens surfaces thereof are positioned on the same plane so that the left and right cameras can take an image under the same condition.

The signal conversion unit 20a is a processing unit that converts the analog image signal generated by the imaging unit 10a into digital image data. The signal conversion unit 20a includes a correlated double sampling (CDS) 21a, an auto gain control (AGC) 22a, an analog digital converter (ADC) 23a, and a frame memory 24a.

The CDS 21a removes noise from the analog image signal generated by the image sensor 13a through correlated double sampling, a differential filter in the horizontal direction, a smoothing filter in the vertical direction, or the like. The AGC 22a performs gain control for controlling strength of the analog image signal from which the noise is removed by the CDS 21a. The ADC 23a converts the analog image signal on which gain control is performed by the AGC 22a into digital image data. The frame memory 24a stores the image data converted by the ADC 23a.

The signal conversion unit 20b is a processing unit that converts the analog image signal generated by the imaging unit 10b into digital image data. The signal conversion unit 20b includes a CDS 21b, an AGC 22b, an ADC 23b, and a frame memory 24b. Functions of the CDS 21b, the AGC 22b, the ADC 23b, and the frame memory 24b are the same as the functions of the CDS 21a, the AGC 22a, the ADC 23a, and the frame memory 24a described above, respectively.

The image processing unit 30 is a device that performs image processing on the image data converted by the signal conversion unit 20a and the signal conversion unit 20b. The image processing unit 30 includes a field programmable gate array (FPGA) 31, a central processing unit (CPU) 32, a read only memory (ROM) 33, a random access memory (RAM) 34, an interface (I/F) 35, and a bus line 39.

The FPGA 31 is an integrated circuit, and herein performs processing of deriving the parallax value dp for an image based on the image data. The CPU 32 controls each function of the parallax value deriving unit 3. The ROM 33 stores a computer program for image processing executed by the CPU 32 for controlling each function of the parallax value deriving unit 3. The RAM 34 is used as a work area of the CPU 32. The I/F 35 is an interface for communicating with an I/F 55 of the recognition processing unit 5 via a communication line 4. As illustrated in Fig. 2, the bus line 39 is an address bus, a data bus, and the like that connect the FPGA 31, the CPU 32, the ROM 33, the RAM 34, and the I/F 35 to each other in a communicable manner.

The image processing unit 30 is assumed to include the FPGA 31 as an integrated circuit for deriving the parallax value dp, but the embodiment is not limited thereto. The integrated circuit may be an application specific integrated circuit (ASIC) and the like.

As illustrated in Fig. 2, the recognition processing unit 5 includes an FPGA 51, a CPU 52, a ROM 53, a RAM 54, the I/F 55, a controller area network (CAN) I/F 58, and a bus line 59.

The FPGA 51 is an integrated circuit, and herein performs object recognition processing on the object based on the parallax image received from the image processing unit 30. The CPU 52 controls each function of the recognition processing unit 5. The ROM 53 stores a computer program for object recognition processing executed by the CPU 52 for performing object recognition processing of the recognition processing unit 5. The RAM 54 is used as a work area of the CPU 52. The I/F 55 is an interface for performing data communication with the I/F 35 of the image processing unit 30 via the communication line 4. The CAN I/F 58 is an interface for communicating with an external controller (for example, the vehicle control device 6 illustrated in Fig. 2). For example, the bus line 59 connected to a CAN and the like of an automobile is an address bus, a data bus, and the like that connect the FPGA 51, the CPU 52, the ROM 53, the RAM 54, the I/F 55, and the CAN I/F 58 in a communicable manner as illustrated in Fig. 2.

With such a configuration, when the parallax image is transmitted from the I/F 35 of the image processing unit 30 to the recognition processing unit 5 via the communication line 4, the FPGA 51 performs object recognition processing and the like for the object such as a person and a vehicle projected in the taken image based on the parallax image in accordance with a command from the CPU 52 of the recognition processing unit 5.

Each computer program described above may be recorded and distributed in a computer-readable recording medium as an installable or executable file. Examples of the recording medium include a compact disc read only memory (CD-ROM) or a secure digital (SD) memory card.

Configuration and operation of functional block of object recognition device

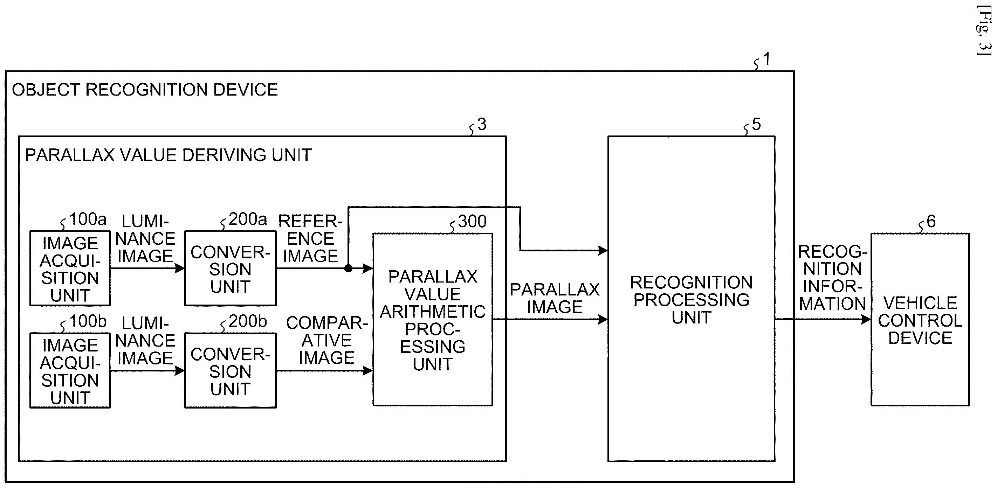

Fig. 3 is a diagram illustrating an example of a functional block configuration of the object recognition device according to the present embodiment. First, the following describes a configuration and operation of the functional block of the object recognition device 1 with reference to Fig. 3.

As described above with reference to Fig. 2, the object recognition device 1 includes the parallax value deriving unit 3 and the recognition processing unit 5 as illustrated in Fig. 3. Among these, the parallax value deriving unit 3 includes an image acquisition unit 100a (first imaging module), an image acquisition unit 100b (second imaging module), conversion units 200a and 200b, and a parallax value arithmetic processing unit (generation unit) 300.

At least some of the functional units of the object recognition device 1 may be implemented by the FPGA 31 or the FPGA 51, or may be implemented when a computer program is executed by the CPU 32 or the CPU 52.

The image acquisition unit 100a and the image acquisition unit 100b are functional units that obtain a luminance image from images taken by the right camera (imaging unit 10a) and the left camera (imaging unit 10b), respectively.

The conversion unit 200a is a functional unit that removes noise from image data of the luminance image obtained by the image acquisition unit 100a and converts the image data into digital image data to be output. The conversion unit 200a may be implemented by the signal conversion unit 20a illustrated in Fig. 2.

The conversion unit 200b is a functional unit that removes noise from image data of the luminance image obtained by the image acquisition unit 100b and converts the image data into digital image data to be output. The conversion unit 200b may be implemented by the signal conversion unit 20b illustrated in Fig. 2.

Regarding the image data of the two luminance images output by the conversion units 200a and 200b (hereinafter, simply referred to as a luminance image), the luminance image taken by the image acquisition unit 100a serving as the right camera (imaging unit 10a) is assumed to be image data of a reference image Ia (hereinafter, simply referred to as a reference image Ia), and the luminance image taken by the image acquisition unit 100b serving as the left camera (imaging unit 10b) is assumed to be image data of a comparative image Ib (hereinafter, simply referred to as a comparative image Ib). That is, the conversion units 200a and 200b output the reference image Ia and the comparative image Ib, respectively, based on the two luminance images output from the image acquisition units 100a and 100b.

The parallax value arithmetic processing unit 300 derives the parallax value for each pixel of the reference image Ia based on the reference image Ia and the comparative image Ib received from the conversion units 200a and 200b, and generates a parallax image in which each pixel of the reference image Ia is associated with the parallax value.

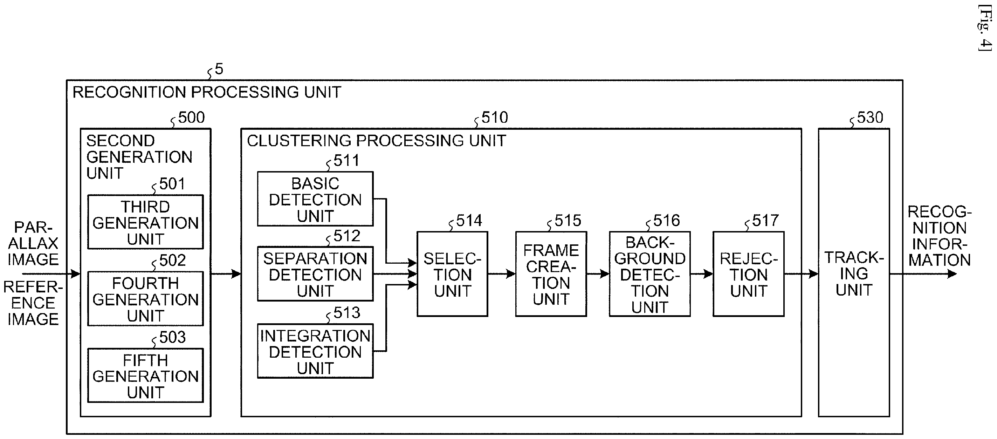

Fig. 4 is a diagram illustrating an example of a functional block configuration of the recognition processing unit of the object recognition device according to the present embodiment. With reference to Fig. 4, the following describes a configuration and operation of the functional block of the recognition processing unit 5.

As illustrated in Fig. 4, the recognition processing unit 5 includes a second generation unit 500, a clustering processing unit 510, and a tracking unit 530.

Second generation unit 500

The second generation unit 500 is a functional unit that receives the parallax image input from the parallax value arithmetic processing unit 300, receives the reference image Ia input from the parallax value deriving unit 3, and generates a V-Disparity map, a U-Disparity map, a Real U-Disparity map, and the like. The V-Disparity map is an example of "information in which a position in the vertical direction is associated with a position in the depth direction". The U-Disparity map and the Real U-Disparity map are examples of "information in which a position in the horizontal direction is associated with a position in the depth direction".

As illustrated in Fig. 4, the second generation unit 500 includes a third generation unit (movement surface estimation unit) 501, a fourth generation unit 502, and a fifth generation unit 503. With reference to Figs. 4 to 7B, the following describes a configuration and operation of the second generation unit 500 of the recognition processing unit 5.

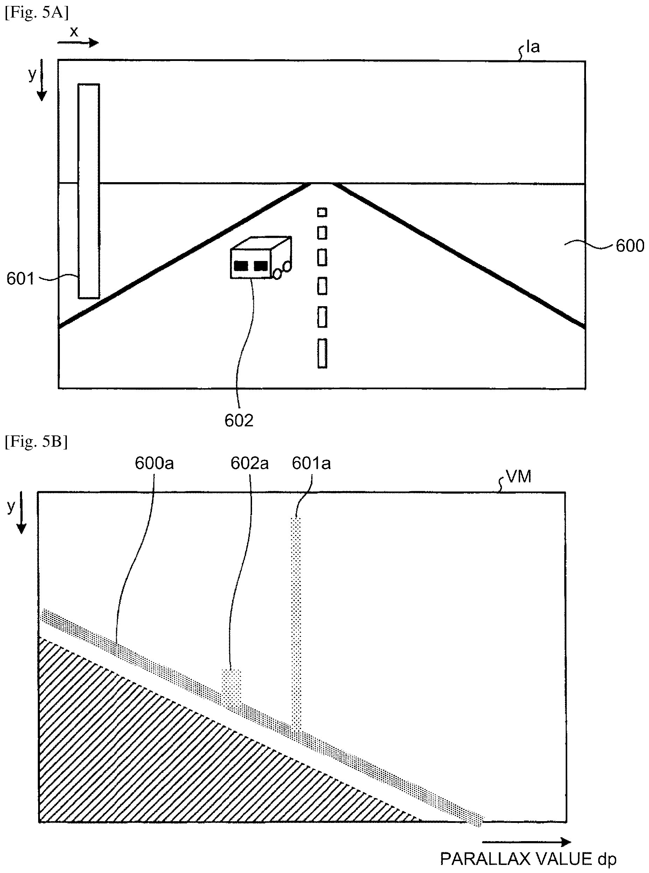

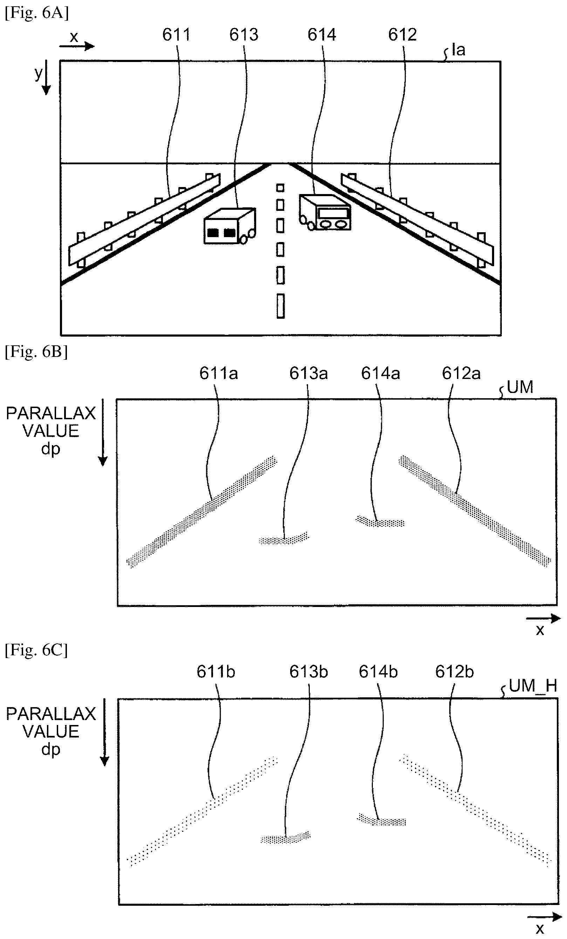

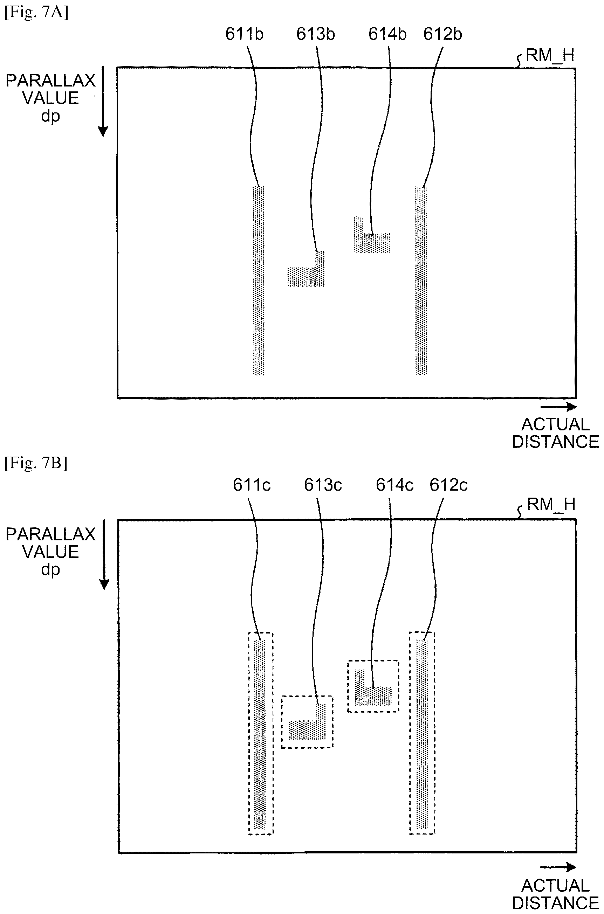

Fig. 5A is a diagram illustrating an example of the reference image, and Fig. 5B is a diagram illustrating an example of a Vmap generated from the reference image and the parallax image. Fig. 6A is a diagram illustrating an example of the reference image. Figs. 6B and 6C are diagrams illustrating examples of a Umap generated from the reference image and the parallax image. Figs. 7A and 7B are diagrams illustrating an examples of a real Umap generated from the Umap.

The third generation unit 501 is a functional unit that generates a Vmap VM as the V-Disparity map illustrated in Fig. 5B for detecting a road surface (movement surface) from the parallax image input from the parallax value arithmetic processing unit 300. Herein, the V-Disparity map is a two-dimensional histogram indicating frequency distribution of the parallax value dp assuming that the vertical axis indicates the y-axis (vertical direction) of the reference image Ia (Fig. 5A), and the horizontal axis indicates the parallax value dp of the parallax image or a distance in the depth direction. In the reference image Ia illustrated in Fig. 5A, for example, a road surface 600, a utility pole 601, and a car 602 are projected. The road surface 600 in the reference image Ia corresponds to a road surface part 600a in the Vmap VM, the utility pole 601 corresponds to a utility pole part 601a, and the car 602 corresponds to a car part 602a.

The third generation unit 501 makes linear approximation of a position estimated to be the road surface from the generated Vmap VM. Approximation can be made with one straight line when the road surface is flat, but when an inclination of the road surface is variable, linear approximation needs to be accurately made by dividing a section in the Vmap VM. As linear approximation, Hough transform, a method of least squares, or the like as a well-known technique can be utilized. In the Vmap VM, the utility pole part 601a and the car part 602a as clusters positioned above the detected road surface part 600a correspond to the utility pole 601 and the car 602 as objects on the road surface 600, respectively. When the U-Disparity map is generated by the fourth generation unit 502 described later, only information about a part positioned above the road surface is used for removing noise. If the road surface is estimated, the height of the road surface is found, so that the height of the object can be found. This process is performed by using a well-known method. For example, a linear expression representing the road surface is obtained, so that a corresponding y-coordinate y0 where the parallax value dp = 0 is determined, and the coordinate y0 is the height of the road surface. For example, when the parallax value is dp and the y-coordinate is y', y'-y0 indicates the height from the road surface in a case of the parallax value d. A height H from the road surface at the coordinates (dp, y') described above can be obtained through an arithmetic expression of $H = (z \times (y' - y0))/f$. In this case, "z" in the arithmetic expression is a distance calculated from the parallax value dp ($z = BF/(d - offset)$), and "f" is a value obtained by converting a focal length of the imaging units 10a and 10b into the same unit as a unit of (y'-y0). In this case, BF is a value obtained by multiplying a base length B by a focal length f of the imaging units 10a and 10b, and offset is a parallax in a case of photographing an infinite object.

The fourth generation unit 502 is a functional unit that generates a Umap UM (second frequency image) as the U-Disparity map illustrated in Fig. 6B for recognizing the object by utilizing only information positioned above (an example of "equal to or higher than the first height") the road surface detected in the Vmap VM, that is, utilizing information on the parallax image corresponding to a left guardrail 611, a right guardrail 612, a car 613, and a car 614 in the reference image Ia illustrated in Fig. 6A. Herein, the Umap UM is a two-dimensional histogram indicating frequency distribution of the parallax value dp assuming that the horizontal axis indicates the x-axis (horizontal direction) of the reference image Ia, and the vertical axis indicates the parallax value dp of the parallax image or a distance in the depth direction. The left guardrail 611 in the reference image Ia illustrated in Fig. 6A corresponds to a left guardrail part 611a in the Umap UM, the right guardrail 612 corresponds to a right guardrail part 612a, the car 613 corresponds to a car part 613a, and the car 614 corresponds to a car part 614a.

The fourth generation unit 502 generates a height Umap UM_H as an example of the U-Disparity map illustrated in Fig. 6C by utilizing only information positioned above the road surface detected in the Vmap VM, that is, utilizing information on the parallax image corresponding to the left guardrail 611, the right guardrail 612, the car 613, and the car 614 in the reference image Ia illustrated in Fig. 6A. The height Umap UM_H as an example of the U-Disparity map is an image in which the horizontal axis is assumed to be the x-axis of the reference image Ia, the vertical axis is assumed to indicate the parallax value dp of the parallax image, and a pixel value is assumed to be the height of the object. In this case, a value of the height of the object is the largest value of the height from the road surface. The left guardrail 611 in the reference image Ia illustrated in Fig. 6A corresponds to a left guardrail part 611b in the height Umap UM_H, the right guardrail 612 corresponds to a right guardrail part 612b, the car 613 corresponds to a car part 613b, and the car 614 corresponds to a car part 614b.

The fifth generation unit 503 generates, from the height Umap UM_H generated by the fourth generation unit 502, a real height Umap RM_H as an example of the Real U-Disparity map illustrated in Fig. 7A obtained by converting the horizontal axis into an actual distance.

The fifth generation unit 503 also generates, from the Umap UM generated by the fourth generation unit 502, a real Umap RM as an example of the Real U-Disparity map illustrated in Fig. 7B obtained by converting the horizontal axis into an actual distance through the same processing as the processing described above.

Herein, each of the real height Umap RM_H and the real Umap RM is a two-dimensional histogram assuming that the horizontal axis indicates an actual distance in a direction (horizontal direction) from the imaging unit 10b (left camera) to the imaging unit 10a (right camera), and the vertical axis indicates the parallax value dp of the parallax image (or a distance in the depth direction converted from the parallax value dp). The left guardrail part 611b in the real height Umap RM_H illustrated in Fig. 7A corresponds to a left guardrail part 611c in the real Umap RM, the right guardrail part 612b corresponds to a right guardrail part 612c, the car part 613b corresponds to a car part 613c, and the car part 614b corresponds to a car part 614c.

Specifically, in the height Umap UM_H and the Umap UM, the fifth generation unit 503 generates the real height Umap RM_H and the real Umap RM corresponding to an overhead view by not performing thinning out when the object is at a distant place (the parallax value dp is small) because the object is small and an amount of parallax information and resolution of distance are small, and by largely thinning out pixels when the object is at a short-distance place because the object is projected to be large and the amount of parallax information and the resolution of distance are large. As described later, a cluster (object region) of pixel values can be extracted from the real height Umap RM_H or the real Umap RM. In this case, the width of a rectangle surrounding the cluster corresponds to the width of the extracted object, and the height thereof corresponds to the depth of the extracted object. The fifth generation unit 503 does not necessarily generate the real height Umap RM_H from the height Umap UM_H. Alternatively, the fifth generation unit 503 can generate the real height Umap RM_H directly from the parallax image.

The second generation unit 500 can specify the position in the X-axis direction and the width (xmin, xmax) in the parallax image and the reference image Ia of the object from the generated height Umap UM_H or real height Umap RM_H. The second generation unit 500 can specify an actual depth of the object from information of the height of the object (dmin, dmax) in the generated height Umap UM_H or real height Umap RM_H. The second generation unit 500 can specify, from the generated Vmap VM, the position in the y-axis direction and the height (ymin = "y-coordinate corresponding to the maximum height from the road surface having a maximum parallax value", ymax = "y-coordinate indicating the height of the road surface obtained from the maximum parallax value") in the parallax image and the reference image Ia of the object. The second generation unit 500 can also specify an actual size in the x-axis direction and the y-axis direction of the object from the width in the x-axis direction (xmin, xmax) and the height in the y-axis direction (ymin, ymax) of the object specified in the parallax image, and the parallax value dp corresponding thereto. As described above, the second generation unit 500 can specify the position of the object in the reference image Ia and the actual width, height, and depth thereof by utilizing the Vmap VM, the height Umap UM_H, and the real height Umap RM_H. The position of the object in the reference image Ia is specified, so that the position thereof in the parallax image is also determined, and the second generation unit 500 can specify the distance to the object.

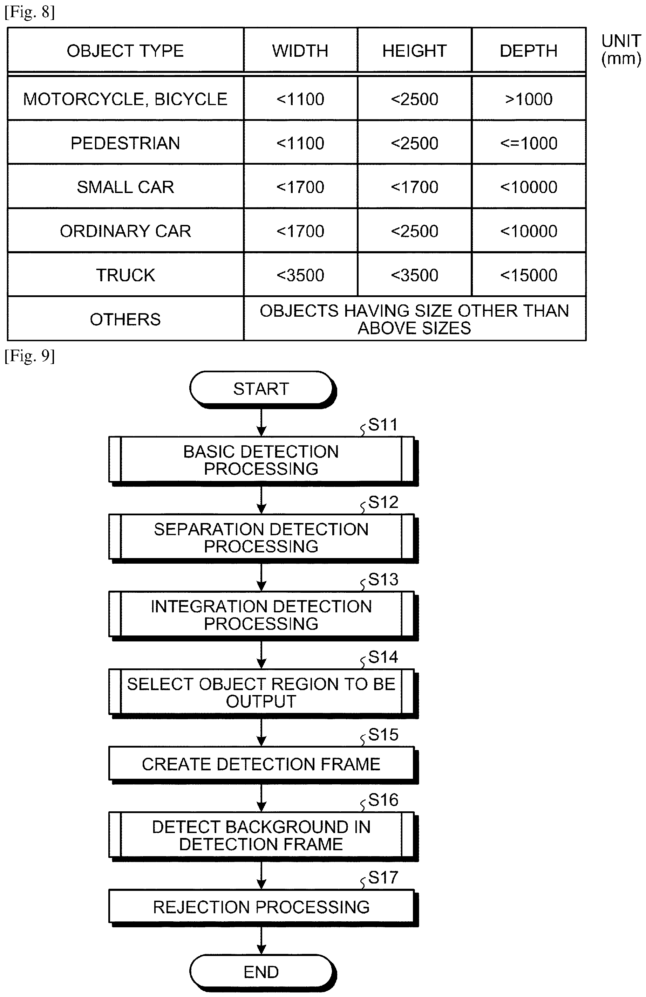

Fig. 8 is a diagram for explaining a method of sorting a classification of the object. The second generation unit 500 can specify the classification of the object (object type) using a table illustrated in Fig. 8 based on an actual size (the width, the height, and the depth) specified for the object. For example, in a case in which the width of the object is 1300 [mm], the height thereof is 1800 [mm], and the depth thereof is 2000 [mm], the object can be specified as an "ordinary car". Information associating the width, the height, and the depth with the classification of the object (object type) as illustrated in Fig. 8 may be stored as a table in the RAM 54 and the like.

Clustering processing unit 510

The clustering processing unit 510 illustrated in Fig. 4 is a functional unit that detects the object such as a vehicle based on each map input from the second generation unit 500. As illustrated in Fig. 4, the clustering processing unit 510 includes a basic detection unit 511, a separation detection unit 512, an integration detection unit 513, a selection unit 514, a frame creation unit 515, a background detection unit 516, and a rejection unit 517.

The basic detection unit 511 performs basic detection processing for detecting the depth, the width, and the like of the object such as a vehicle based on the Real U-Disparity map as a high-resolution map. The following describes an example in which the basic detection unit 511 performs detection using the Real U-Disparity map. Alternatively, the basic detection unit 511 may perform detection using the U-Disparity map. In this case, for example, the basic detection unit 511 may perform processing of converting the x-coordinate in the U-Disparity map into an actual distance and the like in the lateral direction (horizontal direction). In the basic detection processing, if the road surface that is estimated based on the Vmap VM is lower than an actual road surface, for example, detection accuracy for the object region is deteriorated.

The separation detection unit 512 performs separation detection processing for detecting the depth, the width, and the like of the object such as a vehicle using, as an example of a high position map, a map using a parallax point of which the height from the road surface is equal to or larger than a predetermined value ("second height") among parallax points included in the Real U-Disparity map. In a case in which the height of the object is relatively low, the separation detection unit 512 may separate the same object into a plurality of object regions to be detected in some cases.

The integration detection unit 513 uses, as an example of a low-resolution map, a small real Umap obtained by reducing the Real U-Disparity map by thinning out the pixels, for example, to perform integration detection processing for detecting the depth, the width, and the like of the object such as a vehicle. The number of pixels in the small real Umap is smaller than that of the real Umap, so that resolution of the small real Umap is assumed to be low. The integration detection unit 513 may perform detection using a map obtained by reducing the U-Disparity map. The integration detection unit 513 uses the small real Umap of which the resolution is relatively low, so that the integration detection unit 513 may detect a plurality of objects as the same object in some cases.

In this way, detection performance for the object can be improved by basically using the high-resolution map for object detection, and also using the high position map having higher separation performance and the low-resolution map that can integrally detect the same object.

The selection unit 514 selects an object not to be rejected from among the objects detected by the basic detection unit 511, the separation detection unit 512, and the integration detection unit 513. Herein, rejection means processing of excluding the object from processing at a later stage (tracking processing and the like).

The frame creation unit 515 creates a frame (detection frame) in a region (recognition region) in a parallax image Ip (or the reference image Ia) corresponding to a region of the object selected by the selection unit 514. Herein, the frame means information of a rectangle surrounding the object as information indicating the position and the size of the object, for example, information of coordinates of corners of the rectangle and the height and the width of the rectangle.

The background detection unit 516 detects, in the detection frame created by the frame creation unit 515, a background of the object corresponding to the detection frame.

The rejection unit 517 rejects the object corresponding to the detection frame in which a background satisfying a predetermined condition is detected by the background detection unit 516. Background detection and rejection based thereon are preferably performed, but are not necessarily performed.

Tracking unit 530

The tracking unit 530 is a functional unit that executes tracking processing as processing of tracking the object based on recognition region information as information about the object recognized by the clustering processing unit 510. Herein, the recognition region information means information about the object recognized by the clustering processing unit 510, and includes information such as the position and the size of the recognized object in the V-Disparity map, the U-Disparity map, and the Real U-Disparity map, an identification number of labeling processing described later, and a rejection flag, for example.

Processing

Next, the following describes processing performed by the clustering processing unit 510 with reference to Fig. 9. Fig. 9 is a flowchart illustrating an example of processing performed by the clustering processing unit 510.

At Step S11, the basic detection unit 511 of the clustering processing unit 510 performs basic detection processing for detecting a region of the object from the real Umap RM. In the basic detection processing, a cluster of parallax points on the real Umap RM is detected.

In the real Umap RM, the number of pixels is relatively large, so that the resolution of distance is relatively high, and parallax information of the object positioned above the road surface is utilized. Thus, in the basic detection processing, the object region is detected with relatively stable accuracy. However, when the road surface that is estimated based on the Vmap VM is lower than an actual road surface, or when the number of parallax points of the object as a detection target is small, for example, detection accuracy for the object region is deteriorated. Details about the basic detection processing will be described later.

Subsequently, the separation detection unit 512 of the clustering processing unit 510 performs separation detection processing for detecting a region of the object using a parallax point of which the height from the road surface is equal to or larger than a predetermined value among parallax points included in the real Umap RM (Step S12). In the separation detection processing, a cluster of parallax points of which the height from the road surface is equal to or larger than the predetermined value is detected from among the parallax points included in the real Umap RM. Thus, even when a plurality of objects of which the height is relatively high are adjacent to each other, an object region obtained by correctly separating the objects from each other can be detected because they are not influenced by an object of which the height from the road surface is relatively low. However, when the object has a relatively low height, the same object may be detected being separated into a plurality of object regions in some cases. Details about the separation detection processing will be described later.

Subsequently, the integration detection unit 513 of the clustering processing unit 510 performs integration detection processing for detecting the region of the object using the small real Umap as an image obtained by thinning out the pixels from the real Umap RM (Step S13). The small real Umap may be created by thinning out the pixels from the real Umap RM so that the width of one pixel corresponds to about 10 cm, for example. In thinning out the pixels, the pixel may be simply extracted from the real Umap RM, or a value of the pixel in the small real Umap may be determined based on a value of a pixel within a predetermined range from the pixel extracted from the real Umap RM. In the integration detection processing, in a case of an object of which the number of parallax points is small, the same object is relatively hardly detected being separated into a plurality of object regions. However, the resolution of distance is relatively low, so that a plurality of objects adjacent to each other may be detected as the same object, for example. Details about the integration detection processing will be described later.

The basic detection processing, the separation detection processing, and the integration detection processing described above may be performed in any order, or may be performed in parallel.

Subsequently, the selection unit 514 of the clustering processing unit 510 selects the object region to be output to the frame creation unit 515 from among object regions detected through the "basic detection processing", the "separation detection processing", and the "integration detection processing" described above (Step S14). Details about processing of selecting the object region to be output to the frame creation unit 515 will be described later.

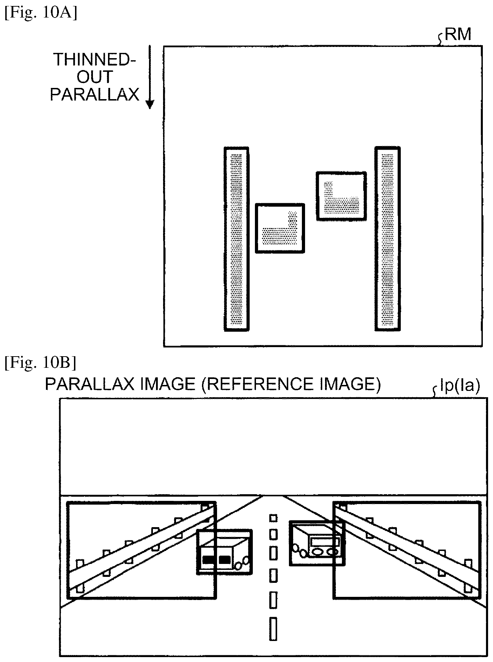

Subsequently, the frame creation unit 515 of the clustering processing unit 510 creates a detection frame corresponding to the object region selected by the selection unit 514 (Step S15). Fig. 10A and 10B are diagrams for explaining the processing of creating the detection frame, Fig. 10A is a diagram illustrating an example of the real Umap RM, and Fig. 10B is a diagram illustrating an example of the parallax image Ip (the reference image Ia) based on the real Umap RM. By using the object region that is detected through object region detection processing and is not rejected through road surface region rejection processing, as illustrated in Fig. 10B, a frame is created in a region (recognition region) corresponding to the object region in the parallax image Ip (or the reference image Ia).

Subsequently, the background detection unit 516 of the clustering processing unit 510 detects a background in a detection frame corresponding to the object region detected through the "integration detection processing" among created detection frames (Step S16). Details about the processing of detecting the background in the detection frame will be described later.

Subsequently, the rejection unit 517 of the clustering processing unit 510 performs rejection processing (Step S17). Details about the rejection processing will be described later.

Basic detection processing

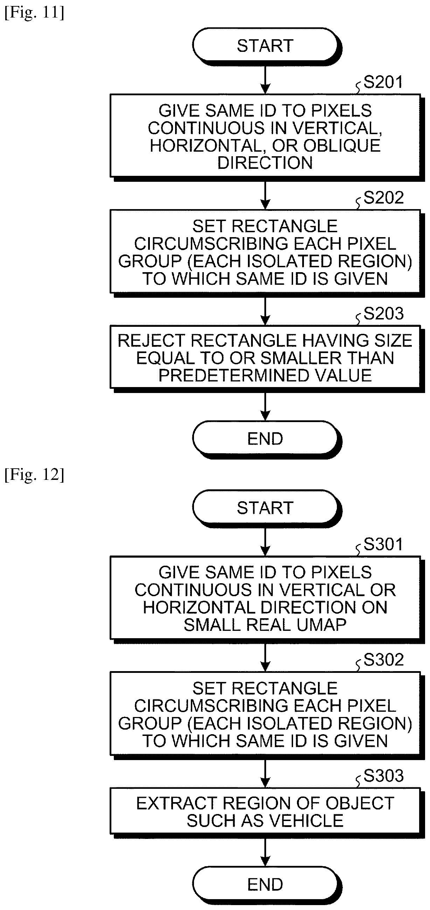

Next, with reference to Fig. 11, the following describes the basic detection processing at Step S11 performed by the basic detection unit 511. Fig. 11 is a flowchart illustrating an example of the basic detection processing.

At Step S201, the basic detection unit 511 performs 8-neighbor labeling processing for giving the same ID to pixels that are continuous in a vertical, horizontal, or oblique direction for a parallax point as a pixel having a pixel value (frequency of the parallax) equal to or larger than a predetermined value in the real Umap RM. Well-known labeling processing can be utilized.

Subsequently, the basic detection unit 511 sets a rectangle circumscribing each pixel group (each isolated region) to which the same ID is given (Step S202).

Subsequently, the basic detection unit 511 rejects the rectangle having a size equal to or smaller than a predetermined value (Step S203). This is because the rectangle having a size equal to or smaller than the predetermined value can be determined to be noise. The basic detection unit 511 may also reject a rectangle having an average value of the pixel value (frequency of the parallax) in an area of the real Umap RM with respect to an area of each rectangle is smaller than the predetermined value, for example.

Accordingly, the rectangle circumscribing each isolated region is detected as the object region.

In the basic detection processing, it is sufficient that the region indicating the object is detected based on the parallax image. The basic detection processing may be performed using a well-known technique.

Separation detection processing

Next, the following describes the separation detection processing at Step S12 performed by the separation detection unit 512. The separation detection processing is significantly different from the "basic detection processing" described above in that used is the parallax point of which the height from the road surface is equal to or larger than the predetermined value among the parallax points included in the real Umap RM instead of using all parallax points included in the real Umap RM. Other points may be the same as those of the "basic detection processing" described above. In performing the 8-neighbor labeling processing at Step S201 in the "separation detection processing", a break of the parallax point equal to or smaller than a predetermined value (for example, corresponding to one pixel) in the horizontal direction in the real Umap RM is possibly caused by noise, so that the parallax point may be regarded to be continuous.

Integration detection processing

Next, with reference to Fig. 12, the following describes the integration detection processing at Step S13 performed by the integration detection unit 513. Fig. 12 is a flowchart illustrating an example of the integration detection processing.

At Step S301, the integration detection unit 513 performs 4-neighbor labeling processing for giving the same ID to pixels (parallax points) that are continuous in the vertical direction (depth direction) or the lateral direction (horizontal direction) on the small real Umap. In the above processing, the 8-neighbor labeling processing may be used.

Subsequently, the integration detection unit 513 sets a rectangle circumscribing each pixel group (each isolated region) to which the same ID is given (Step S302).

Subsequently, the integration detection unit 513 extracts the object such as a vehicle (Step S303). The integration detection unit 513 extracts the region of the object such as a vehicle based on the width, the depth, frequency of the parallax, and the like of each isolated region. Accordingly, the rectangle circumscribing each isolated region is detected as the object region.

Selection processing

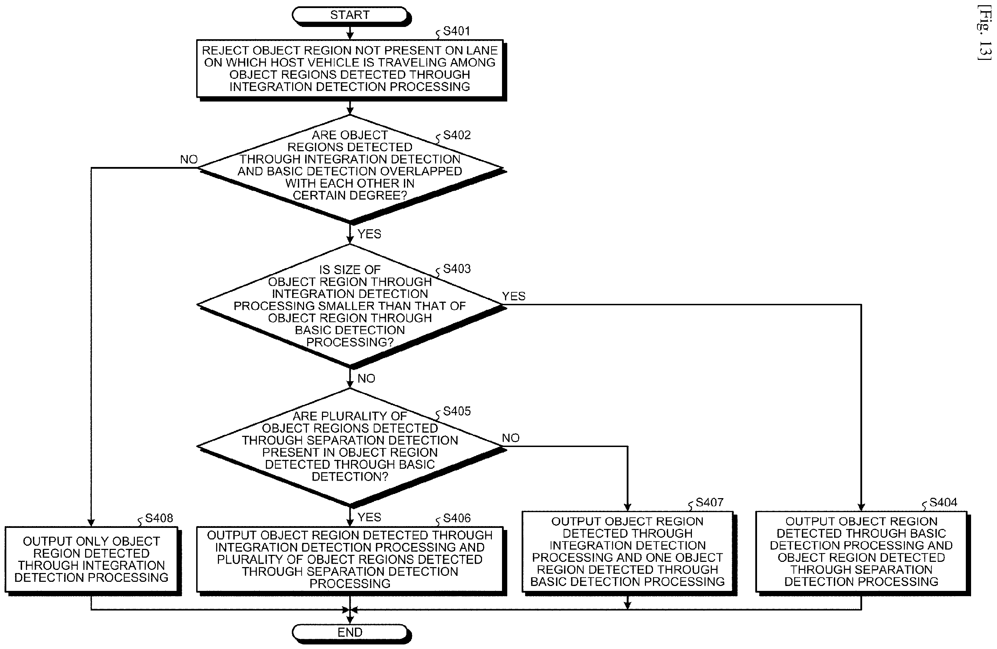

Next, with reference to Fig. 13, the following describes processing of selecting the object region to be output to the frame creation unit 515 at Step S14 performed by the selection unit 514. Fig. 13 is a flowchart illustrating an example of processing of selecting the object region to be output.

At Step S401, the selection unit 514 rejects an object region not present on a lane on which a host vehicle is traveling among the object regions detected through the integration detection processing. For example, when the position of the object region is outside a predetermined range from a forward direction of the host vehicle, the selection unit 514 rejects the object region. Accordingly, for an object that may hamper the host vehicle from traveling, the object region detected through the integration detection processing is output.

At a distant place the distance of which from the host vehicle is relatively long, accuracy in detecting the position of the object region is deteriorated. Thus, the predetermined range may be set to be relatively wide corresponding to the distance from the host vehicle.

Subsequently, the selection unit 514 determines whether the object region detected through the integration detection processing is overlapped with one object region detected through the basic detection processing in a certain degree in the real Umap RM (Step S402). For example, if a value obtained by dividing an area of a region in which the object region detected through the integration detection processing is overlapped with the object region detected through the basic detection processing in the real Umap RM by an area of the object region detected through the basic detection processing is equal to or larger than a predetermined threshold, it is determined that they are overlapped with each other in a certain degree.

If the object regions are overlapped with each other in a certain degree (YES at Step S402), the selection unit 514 determines whether the size of the object region as a result of the integration detection processing is smaller than the object region as a result of the basic detection processing (Step S403). If the size is determined to be smaller (YES at Step S403), the object region detected through the basic detection processing and the object region detected through the separation detection processing are output to the frame creation unit 515 (Step S404), and the process is ended. That is, a result of the basic detection processing as an inclusive detection result and a result of the separation detection processing as a partial detection result are output while being associated with each other as information indicating the same object. This is because there is a high possibility that the result of the integration detection processing is erroneous when the size of the object region as the result of the integration detection processing is smaller than that of the object region as the result of the basic detection processing, so that the result of the basic detection processing is considered to be most reliable as information indicating one object, and the result of the separation detection processing is considered to be most reliable as information indicating a plurality of objects.

If the size is determined not to be smaller (NO at Step S403), the selection unit 514 determines whether a plurality of object regions detected through the separation detection processing are present in the one object region detected through the basic detection processing (Step S405).

If a plurality of object regions are present (YES at Step S405), the selection unit 514 outputs the object region detected through the integration detection processing and the object regions detected through the separation detection processing to the frame creation unit 515 (Step S406), and the process is ended. That is, the result of the integration detection processing as an inclusive detection result and the result of the separation detection processing as a partial detection result are output while being associated with each other as information indicating the same object. This is because the result of the integration detection processing is considered to be most reliable as information indicating one object, and the result of the separation detection processing is considered to be most reliable as information indicating a plurality of objects when there are a plurality of object regions detected through the separation detection processing in one object region detected through the basic detection processing.

If a plurality of object regions are not present (NO at Step S405), the selection unit 514 outputs the object region detected through the integration detection processing and the one object region detected through the basic detection processing to the frame creation unit 515 (Step S407), and the process is ended. That is, the result of the integration detection processing as an inclusive detection result and the result of the basic detection processing as a partial detection result are output while being associated with each other as information indicating the same object. This is because the result of the basic detection processing and the result of the separation detection processing can be equally treated when a plurality of object regions detected through the separation detection processing are not present in one object region detected through the basic detection processing, so that the result of the integration detection processing is considered to be most reliable as information indicating one object, and the result of the basic detection processing is considered to be most reliable as information indicating a plurality of objects.

If the object regions are not overlapped with each other in a certain degree (NO at Step S402), the selection unit 514 outputs only the object region detected through the integration detection processing to the frame creation unit 515 (Step S408), and the process is ended. That is, the result of the integration detection processing as an inclusive detection result and a result indicating that the object region is not detected as a partial detection result are output while being associated with each other as information indicating the same object. This is because the result of the integration detection processing that is hardly influenced by noise is considered to be most reliable as information indicating a rough position of the object when the object region detected through the integration detection processing is not overlapped with one object region detected through the basic detection processing in a certain degree.

The processing subsequent to Step S402 is executed for each object region detected through the integration detection processing.

As described above, respective detection processing results are simply compared and associated with each other to be output, so that a highly accurate detection result can be output in a relatively short time.

Processing of detecting background in detection frame

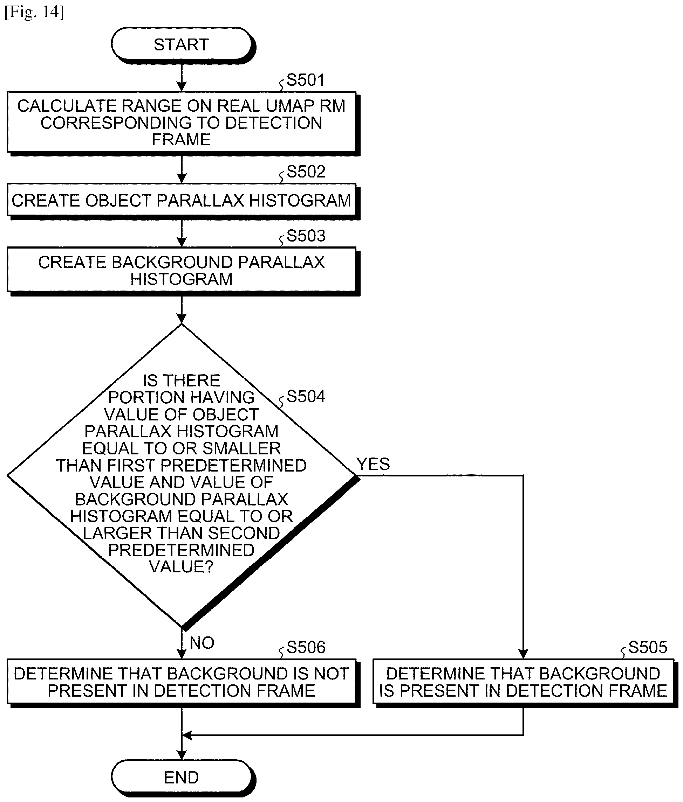

Next, with reference to Fig. 14, the following describes processing of detecting a background in the detection frame at Step S16. Fig. 14 is a flowchart illustrating an example of processing of selecting an object region to be output.

At Step S501, the background detection unit 516 calculates a range on the real Umap RM corresponding to the detection frame created in the parallax image Ip. When the detection frame is positioned in the vicinity of a straight advancing direction of the host vehicle, the range may be a range between a left end of the coordinate in the horizontal direction in the real Umap RM of the object region corresponding to the detection frame and a right end of the coordinate in the horizontal direction of the object region. Alternatively, for example, the range may be a range between two different straight lines connecting the center of the imaging unit 10a and the imaging unit 10b and the parallax point of the object region on the real Umap RM corresponding to the detection frame, that is, a first straight line having the largest angle with respect to the horizontal direction and a second straight line having the smallest angle with respect to the horizontal direction.

Subsequently, the background detection unit 516 creates a histogram (hereinafter, referred to as an "object parallax histogram") indicating a total value of parallax frequency of the parallax points of the object region on the real Umap RM corresponding to the detection frame in the range (Step S502).

Subsequently, the background detection unit 516 creates a histogram (hereinafter, referred to as a "background parallax histogram") indicating a total value of parallax frequency of the parallax points distant from the object region on the real Umap RM corresponding to the detection frame by a predetermined distance or more in the range (Step S503).

Subsequently, the background detection unit 516 determines whether there is a portion having a value of the object parallax histogram equal to or smaller than a first predetermined value and a value of the background parallax histogram equal to or larger than a second predetermined value in the range (Step S504).

If the portion is present (Yes at Step S504), the background detection unit 516 determines that the background is present in the detection frame (Step S505), and the process is ended.

If the portion is not present (NO at Step S504), the background detection unit 516 determines that the background is not present in the detection frame (Step S506), and the process is ended.

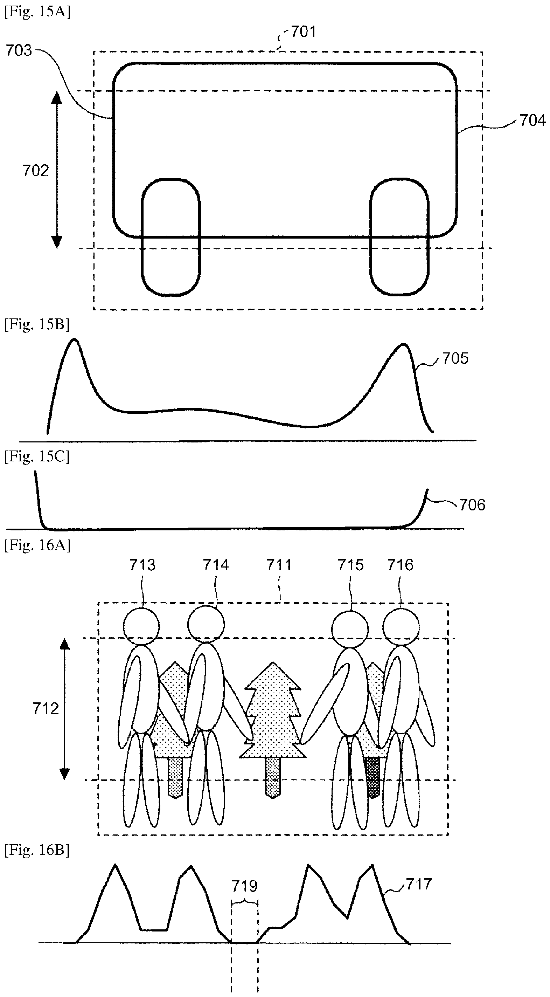

Figs. 15A, 15B, and 15C are diagrams for explaining background detection processing in a case of the detection frame for the object region such as a vehicle. Only parallax points on the real Umap RM present in a range 702 of a predetermined height may be used, among the predetermined height of a detection frame 701 for the object region such as a vehicle in Fig. 15A. In this case, in an object parallax histogram 705, a total value of parallax frequency is increased at portions corresponding to the vicinities of both ends 703 and 704 of a vehicle and the like as illustrated in Fig. 15B. In this case, an object more distant than the object such as a vehicle is not photographed by being blocked by the object such as a vehicle, so that the total value of parallax frequency is not substantially present in the background parallax histogram 706 as illustrated in Fig. 15C. In this case, at Step S506, it is determined that the background is not present in the detection frame.

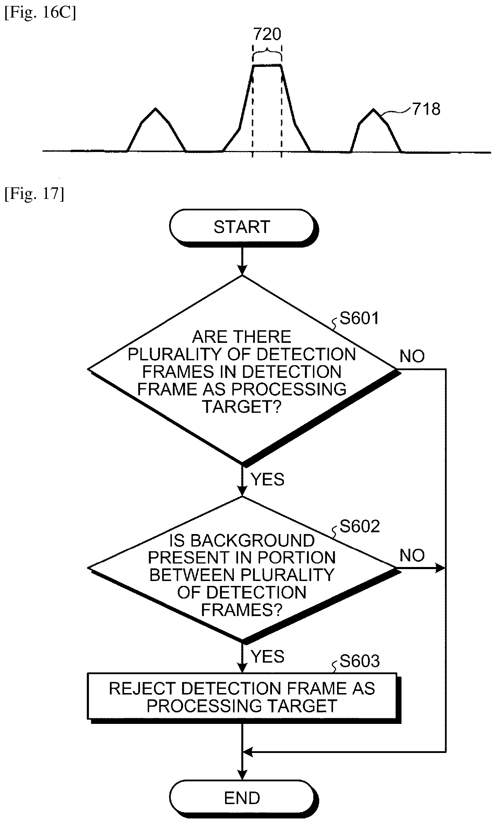

Figs. 16A, 16B, and 16C are diagrams for explaining background detection processing in a case of a detection frame for an object region in which two groups such as pedestrians are coupled. Similarly to the case of Figs. 15A-15C, only parallax points on the real Umap RM present in a range 712 of a predetermined height may be used, the predetermined height of a detection frame 711 for the object region in Fig. 16A. In this case, in an object parallax histogram 717, a total value of parallax frequency is increased in the vicinity of pedestrians 713, 714, 715, 716, and the like as illustrated in Fig. 16B. In this case, an object more distant than the objects such as the pedestrians is photographed through a gap between the pedestrians and the like. Thus, in a background parallax histogram 718, as illustrated in Fig. 16C, there is a portion 720 where a value of the background parallax histogram 718 is equal to or larger than a predetermined value in a portion 719 where a value of the object parallax histogram 717 is not substantially present. In this case, at Step S505, it is determined that the background is present in the detection frame.

Rejection processing

Next, with reference to Fig. 17, the following describes the rejection processing at Step S17. Fig. 17 is a flowchart illustrating an example of the rejection processing. In the rejection processing, a detection frame satisfying a predetermined condition is rejected among the detection frames corresponding to the object regions selected at Step S14.

In the following description, in the processing of detecting the background in the detection frame at Step S16 described above, each detection frame determined to include a background may be caused to be a processing target from among the detection frames corresponding to the object regions detected through the "integration detection processing".

At Step S601, the rejection unit 517 determines whether there are a plurality of detection frames corresponding to a plurality of object regions detected through the basic detection processing or the separation detection processing in the detection frame as a processing target.

If a plurality of detection frames are not present (NO at Step S601), the process is ended.

If a plurality of detection frames are present (YES at Step S601), the rejection unit 517 determines whether the background is present in a portion between the detection frames (Step S602). At this point, when a value of the background parallax histogram is equal to or larger than the predetermined value in the portion similarly to the processing of detecting the background in the detection frame described above, it is determined that the background is present.

If the background is not present (NO at Step S602), the process is ended.

If the background is present (YES at Step S602), the rejection unit 517 rejects the detection frame as a processing target (Step S603).

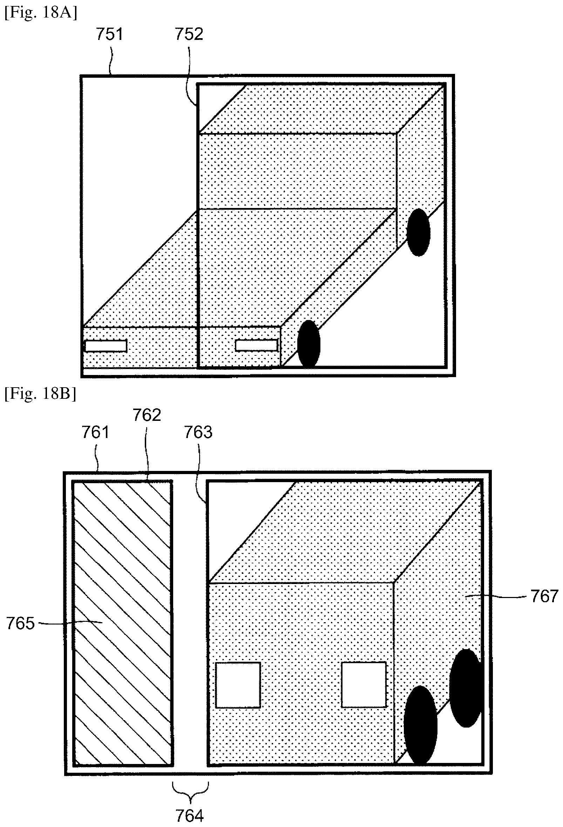

Figs. 18A and 18B are diagrams for explaining rejection processing based on background information. In an example of Fig. 18A, a detection frame 752 corresponding to one object region detected through the basic detection processing is present in a detection frame 751 as a processing target. As illustrated in Fig. 18A, when a plurality of detection frames are not present in the detection frame 751 as a processing target, the detection frame 751 as a processing target is not rejected.

In an example of Fig. 18B, a plurality of detection frames 762 and 763 corresponding to a plurality of object regions detected through the basic detection processing or the separation detection processing are present in the detection frame 761 as a processing target. At this point, similarly to the processing of detecting the background in the detection frame described above, if the value of the background parallax histogram is equal to or larger than the predetermined value in a portion 764 between the detection frames 762 and 763, it is determined that the background is present.

As illustrated in Fig. 18B, even in a case in which a side object 765 such as a pole and a vehicle 767 are detected as the same object through the basic detection processing, they may be detected as different objects with the detection frames 762 and 763 through background detection and rejection processing based thereon.

The rejection unit 517 may reject the detection frame using another method without performing background detection. Among the detection frames corresponding to the object regions selected at Step S14, for example, the rejection unit 517 may reject a detection frame corresponding to the region of the object sorted into "others" using a method of sorting a classification of the object illustrated in Fig. 8. Among the detection frames corresponding to the object regions selected at Step S14, the rejection unit 517 may reject a detection frame overlapped with another detection frame, the overlapped area thereof being equal to or larger than a predetermined ratio.

Conclusion

According to the embodiment described above, a first detection result having relatively low separation performance and a second detection result having relatively high separation performance are generated to be associated with each other. This configuration can improve performance of easily recognizing the object by performing simple processing at a later stage. One of the first detection result and the second detection result associated with each other is rejected based on a predetermined condition. This configuration can improve performance of recognizing each of a plurality of objects.

The value of distance (distance value) and the parallax value can be treated equivalently, so that the parallax image is used as an example of a distance image in the present embodiment. However, the embodiment is not limited thereto. For example, the distance image may be generated by integrating a parallax image generated by using a stereo camera with distance information generated by using a detection device such as a millimetric wave radar and a laser radar. Alternatively, a stereo camera and a detection device such as a millimetric wave radar and a laser radar may be used at the same time, and a result may be combined with a detection result of the object obtained by the stereo camera described above to further improve accuracy in detection.

It goes without saying that the system configuration in the embodiment described above is merely an example, and there are various examples of the system configuration in accordance with an application and a purpose. Some or all components in the embodiment described above may be combined.

For example, a functional unit that performs at least part of processing of the functional units such as the parallax value arithmetic processing unit 300, the second generation unit 500, the clustering processing unit 510, and the tracking unit 530 of the object recognition device 1 may be implemented by cloud computing constituted of one or more computers.

In the embodiment described above, described is an example in which the object recognition device 1 is mounted on the automobile as the vehicle 70. However, the embodiment is not limited thereto. For example, the object recognition device 1 may be mounted on a vehicle such as a motorcycle, a bicycle, a wheelchair, and a cultivator for farming as an example of other vehicles. The object recognition device 1 may be mounted on a mobile object such as a robot in addition to the vehicle as an example of a mobile object.

In the above embodiment, in a case in which at least one of the functional units of the parallax value deriving unit 3 and the recognition processing unit 5 in the object recognition device 1 is implemented by executing a computer program, the computer program is embedded and provided in a ROM and the like. The computer program executed by the object recognition device 1 according to the embodiment described above may be recorded and provided in a computer-readable recording medium such as a compact disc read only memory (CD-ROM), a flexible disk (FD), a compact disc recordable (CD-R), and a digital versatile disc (DVD), as an installable or executable file. The computer program executed by the object recognition device 1 according to the embodiment described above may be stored in a computer connected to a network such as the Internet and provided by being downloaded via the network. Furthermore, the computer program executed by the object recognition device 1 according to the embodiment described above may be provided or distributed via a network such as the Internet. The computer program executed by the object recognition device 1 according to the embodiment described above has a module configuration including at least one of the functional units described above. As actual hardware, when the CPU 52 (CPU 32) reads out and executes a computer program from the ROM 53 (ROM 33) described above, the functional units described above are loaded into a main storage device (RAM 54 (RAM 34) and the like) to be generated.

Second Embodiment

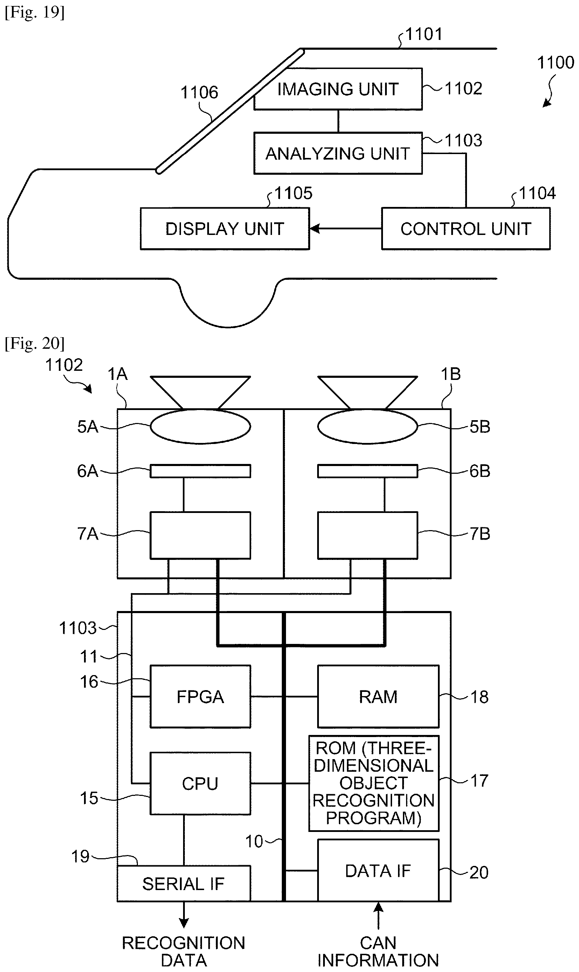

Fig. 19 is a schematic diagram illustrating a schematic configuration of an equipment control system 1100 according to a second embodiment. As illustrated in Fig. 19, the equipment control system 1100 is arranged in a vehicle 1101 such as an automobile as an example of equipment (a mobile object). The equipment control system 1100 includes an imaging unit 1102, an analyzing unit 1103, a control unit 1104, and a display unit 1105.

The imaging unit 1102 is arranged in the vicinity of a room mirror on a windshield 1106 of the vehicle 1101 as an example of a mobile object, and takes an image in a traveling direction of the vehicle 1101, for example. Various pieces of data including image data obtained through an imaging operation performed by the imaging unit 1102 are supplied to the analyzing unit 1103. The analyzing unit 1103 analyzes an object to be recognized such as a road surface on which the vehicle 1101 is traveling, a forward vehicle of the vehicle 1101, a pedestrian, and an obstacle based on the various pieces of data supplied from the imaging unit 1102. The control unit 1104 gives a warning and the like to a driver of the vehicle 1101 via the display unit 1105 based on an analysis result of the analyzing unit 1103. The control unit 1104 performs traveling support such as control of various onboard devices, and steering wheel control or brake control of the vehicle 1101 based on the analysis result. Although the following describes the vehicle as an example of equipment, the equipment control system according to the present embodiment can also be applied to a ship, an aircraft, a robot, and the like.

Fig. 20 is a schematic block diagram of the imaging unit 1102 and the analyzing unit 1103. In this example, the analyzing unit 1103 functions as an "information processing device", and a pair of the imaging unit 1102 and the analyzing unit 1103 functions as an "imaging device". The control unit 1104 described above functions as a "control unit", and controls the equipment (in this example, the vehicle 1101) based on an output result of the imaging device. The imaging unit 1102 is configured such that two camera units are assembled to each other in parallel, the camera units including a first camera unit 1A for a left eye and a second camera unit 1B for a right eye. That is, the imaging unit 1102 is configured as a stereo camera for taking a stereo image. The stereo image means an image including a plurality of taken images (a plurality of taken images corresponding to a plurality of viewpoints on a one-to-one basis) obtained through imaging for each of the viewpoints, and the imaging unit 1102 is a device for taking the stereo image (functions as an "imaging unit"). The camera units 1A and 1B include imaging lenses 5A and 5B, image sensors 6A and 6B, and sensor controllers 7A and 7B, respectively. The image sensors 6A and 6B are, for example, a CCD image sensor or a CMOS image sensor.

The analyzing unit 1103 includes a data bus line 10, a serial bus line 11, a CPU 15, an FPGA 16, a ROM 17, a RAM 18, a serial IF 19, and a data IF 20.

The imaging unit 1102 described above is connected to the analyzing unit 1103 via the data bus line 10 and the serial bus line 11. The CPU 15 executes and controls the entire operation, image processing, and image recognition processing of the analyzing unit 1103. Luminance image data of an image taken by the image sensors 6A and 6B of the first camera unit 1A and the second camera unit 1B is written into the RAM 18 of the analyzing unit 1103 via the data bus line 10. Change control data of sensor exposure value, change control data of an image reading parameter, various pieces of setting data, and the like from the CPU 15 or the FPGA 16 are transmitted or received via the serial bus line 11.

The FPGA 16 performs processing required to have real-time performance on the image data stored in the RAM 18. The FPGA 16 causes one of respective pieces of luminance image data (taken images) taken by the first camera unit 1A and the second camera unit 1B to be a reference image, and causes the other one thereof to be a comparative image. The FPGA 16 then calculates, as a parallax value (parallax image data) of a corresponding image portion, a position shift amount between a corresponding image portion on the reference image and a corresponding image portion on the comparative image, both of which corresponding to the same point in an imaging area.

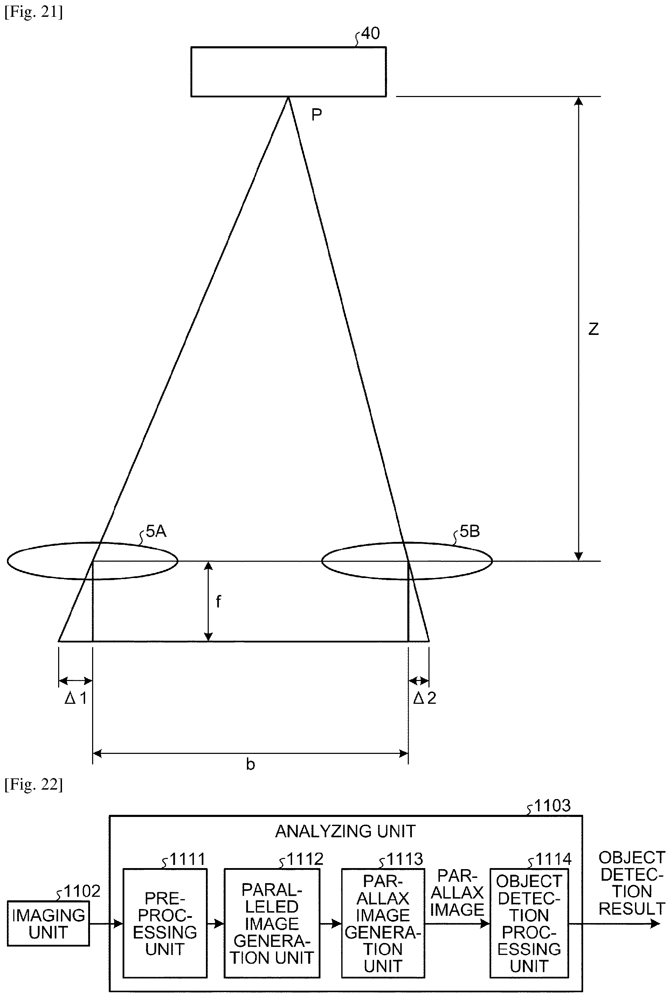

Fig. 21 illustrates a positional relation among a subject 40, the imaging lens 5A of the first camera unit 1A, and the imaging lens 5B of the second camera unit 1B on an XZ-plane. In Fig. 21, a distance b between the imaging lenses 5A and 5B and the focal length f of the imaging lenses 5A and 5B are fixed values, respectively. A shift amount of the X-coordinate of the imaging lens 5A with respect to a gazing point P of the subject 40 is assumed to be $\Delta 1$. A shift amount of the X-coordinate of the imaging lens 5B with respect to the gazing point P of the subject 40 is assumed to be $\Delta 2$. In this case, the FPGA 16 calculates the parallax value d as a difference between X-coordinates of the imaging lenses 5A and 5B with respect to the gazing point P of the subject 40 through the following expression 1.

$$\text{Parallax value d=}|\Delta 1\text{-}\Delta 2| \qquad (1)$$

The FPGA 16 of the analyzing unit 1103 performs processing required to have real-time performance such as gamma correction processing and distortion correction processing (paralleling of left and right taken images) on the luminance image data supplied from the imaging unit 1102. By performing the arithmetic operation of the expression 1 described above using the luminance image data on which the processing required to have real-time performance is performed, the FPGA 16 generates parallax image data to be written into the RAM 18.

The description will be continued returning to Fig. 20. The CPU 15 performs control of the sensor controllers 7A and 7B of the imaging unit 1102, and overall control of the analyzing unit 1103. The ROM 17 stores a three-dimensional object recognition program for executing situation recognition, prediction, three-dimensional object recognition, and the like described later. The three-dimensional object recognition program is an example of an image processing program. The CPU 15 acquires, for example, CAN information of the host vehicle (vehicle speed, acceleration, a rudder angle, a yaw rate, and the like) as parameters via the data IF 20. By executing and controlling various pieces of processing such as situation recognition using a luminance image and a parallax image stored in the RAM 18 in accordance with the three-dimensional object recognition program stored in the ROM 17, the CPU 15 recognizes a recognition target such as a preceding vehicle, for example.

Recognition data of the recognition target is supplied to the control unit 1104 via the serial IF 19. The control unit 1104 performs traveling support such as brake control of the host vehicle and speed control of the host vehicle using the recognition data of the recognition target.

Fig. 22 is a diagram for schematically explaining a function of the analyzing unit 1103. A stereo image taken by the imaging unit 1102 included in the stereo camera is supplied to the analyzing unit 1103. For example, the first camera unit 1A and the second camera unit 1B have a color specification, each of the first camera unit 1A and the second camera unit 1B performs an arithmetic operation of the following expression 2 to perform color luminance conversion processing for generating a luminance (y) signal from each signal of RGB (red, green, and blue). Each of the first camera unit 1A and the second camera unit 1B supplies luminance image data (taken image) generated through the color luminance conversion processing to a preprocessing unit 1111 included in the analyzing unit 1103. It can be considered that the stereo image is a set of the luminance image data (taken image) taken by the first camera unit 1A and the luminance image data (taken image) taken by the second camera unit 1B. In this example, the preprocessing unit 1111 is implemented by the FPGA 16.

$$Y=0.3R+0.59G+0.11B \qquad (2)$$

The preprocessing unit 1111 preprocesses the luminance image data received from the first camera unit 1A and the second camera unit 1B. In this example, gamma correction processing is performed as preprocessing. The preprocessing unit 1111 supplies the preprocessed luminance image data to a paralleled image generation unit 1112.

The paralleled image generation unit 1112 performs paralleling processing (distortion correction processing) on the luminance image data supplied from the preprocessing unit 1111. The paralleling processing is processing of converting the luminance image data output from the first camera unit 1A and the second camera unit 1B into an ideal paralleled stereo image obtained when two pinhole cameras are attached in parallel. Specifically, by using a calculation result obtained by calculating a distortion amount of each pixel using polynomial

expressions such as $\Delta x = f(x, y)$, $\Delta y = g(x, y)$, each pixel of the luminance image data output from the first camera unit 1A and the second camera unit 1B is converted. The polynomial expression is, for example, based on a quintic polynomial expression related to x (a horizontal direction position of an image) and y (a vertical direction position of an image). Accordingly, paralleled luminance image can be obtained in which distortion of an optical system of the first camera unit 1A and the second camera unit 1B is corrected. In this example, the paralleled image generation unit 1112 is implemented by the FPGA 16.

The parallax image generation unit 1113 is an example of a "distance image generation unit", and generates a parallax image including a parallax value for each pixel as an example of a distance image including distance information for each pixel from the stereo image taken by the imaging unit 1102. In this case, the parallax image generation unit 1113 performs the arithmetic operation expressed by the expression 1 described above assuming that the luminance image data of the first camera unit 1A is standard image data and the luminance image data of the second camera unit 1B is comparative image data, and generates parallax image data indicating a parallax between the standard image data and the comparative image data. Specifically, the parallax image generation unit 1113 defines a block including a plurality of pixels (for example, 16 pixels × 1 pixel) centered on one focused pixel for a predetermined "row" of the standard image data. On the other hand, in the same "row" of the comparative image data, a block having the same size as that of the defined block of the standard image data is shifted one pixel by one pixel in a horizontal line direction (X-direction). The parallax image generation unit 1113 then calculates each correlation value indicating correlation between a feature amount indicating a feature of a pixel value of the defined block in the standard image data and a feature amount indicating a feature of a pixel value of each block in the comparative image data. In this case, the parallax image means information associating the vertical direction position, the horizontal direction position, and a depth direction position (parallax) with each other.

The parallax image generation unit 1113 performs matching processing for selecting the block of the comparative image data that is most closely correlated with the block of the standard image data among blocks in the comparative image data based on the calculated correlation value. Thereafter, a position shift amount is calculated as the parallax value d, the position shift amount between the focused pixel in the block of the standard image data and a corresponding pixel in the block of the comparative image data selected through the matching processing. When such processing of calculating the parallax value d is performed on the entire region or a specific region of the standard image data, the parallax image data is obtained. As a method of generating the parallax image, various well-known techniques can be utilized. In short, it can be considered that the parallax image generation unit 1113 calculates (generates) the distance image (in this example, the parallax image) including the distance information for each pixel from the stereo image taken by the stereo camera.

As the feature amount of the block used in the matching processing, for example, a value (luminance value) of each pixel in the block can be used. As the correlation value, the sum total of absolute values of differences between a value (luminance value) of each pixel in the block of the standard image data and a value (luminance value) of each pixel in the block of the comparative image data corresponding to the former pixel can be used. In this case, the block including the smallest sum total is detected as the most correlated block.

As the matching processing of the parallax image generation unit 1113, for example, used is a method such as Sum of Squared Difference (SSD), Zero-mean Sum of Squared Difference (ZSSD), Sum of Absolute Difference (SAD), or Zero-mean Sum of Absolute Difference (ZSAD). When a parallax value of a sub-pixel level that is smaller than one pixel is required in the matching processing, an estimation value is used. Examples of a method of estimating the estimation value include an equiangular linear method or a quadratic curve method. However, an error is caused in the estimated parallax value of sub-pixel level. Thus, a method such as estimation error correction (EEC) and the like may be used for reducing an estimation error.

In this example, the parallax image generation unit 1113 is implemented by the FPGA 16. The parallax image generated by the parallax image generation unit 1113 is supplied to the object detection processing unit 1114. In this example, the function of the object detection processing unit 1114 is implemented when the CPU 15 executes a three-dimensional object recognition program.

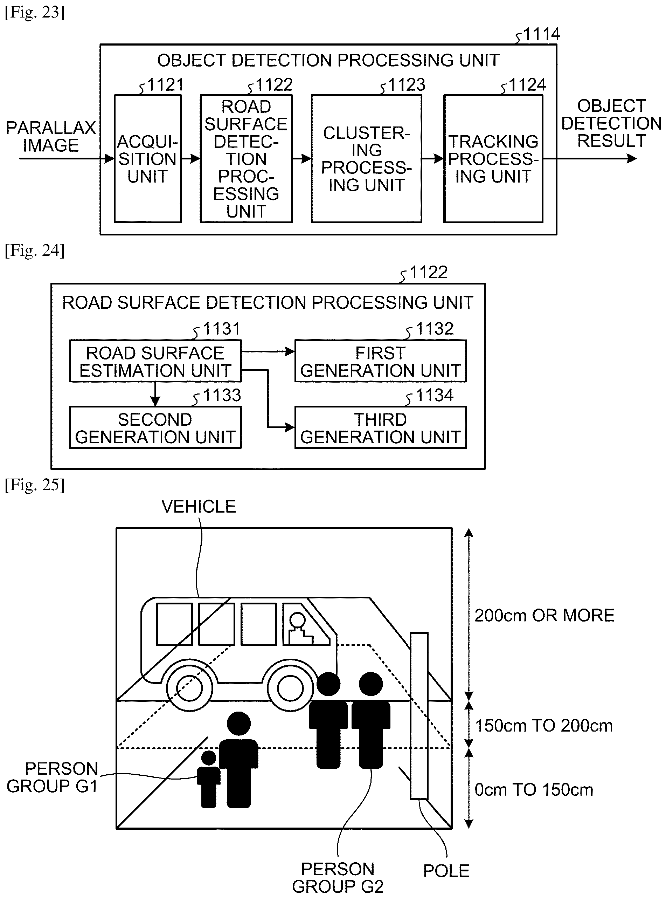

Fig. 23 is a diagram illustrating an example of a function of the object detection processing unit 1114. As illustrated in Fig. 23, the object detection processing unit 1114 includes an acquisition unit 1121, a road surface detection processing unit 1122, a clustering processing unit 1123, and a tracking processing unit 1124. The acquisition unit 1121 acquires the parallax image generated by the parallax image generation unit 1113. It can be considered that the acquisition unit 1121 has a function of acquiring a distance image (in this example, the parallax image) including distance information for each pixel calculated from the stereo image taken by the stereo camera. The parallax image acquired by the acquisition unit 1121 is input to the road surface detection processing unit 1122 and the clustering processing unit 1123.

As illustrated in Fig. 24, the road surface detection processing unit 1122 includes a road surface estimation unit 1131, a first generation unit 1132, a second generation unit 1133, and a third generation unit 1134. By using the parallax image, the road surface estimation unit 1131 generates correspondence information in which a position in the vertical direction indicating the vertical direction (vertical direction orthogonal to an optical axis of the stereo camera) of the image is associated with a position in the depth direction indicating a direction of the optical axis of the stereo camera. In this example, the road surface estimation unit 1131 votes each pixel (parallax value) of the parallax image into a map (hereinafter, referred to as a "Vmap (V-Disparity map)") in which a vertical axis indicates a coordinate (y) in the vertical direction of the image and a horizontal axis indicates the parallax value d, selects a sample point from voted parallax points using a predetermined method, and performs linear approximation (or curve approximation) on a selected point group to estimate a road surface shape. As a method of estimating a road surface, various well-known techniques can be utilized. The Vmap is a two-dimensional histogram in which the X-axis indicates the parallax value d, the Y-axis indicates a y-coordinate value, and the Z-axis indicates frequency in a group of (the X-coordinate value, the y-coordinate value, the parallax value d) of the parallax image. In short, it can be considered that the correspondence information (in this example, the Vmap) is information in which a frequency value of the parallax is recorded for each combination of the position in the vertical direction and the parallax value d (corresponding to the position in the depth direction). An estimation result (road surface estimation information) obtained by the road surface estimation unit 1131 is input to the first generation unit 1132, the second generation unit 1133, the third generation unit 1134, and the clustering processing unit 1123. In the following description, the road surface detection processing unit 1122 is assumed to include three generation units including the first generation unit 1132, the second generation unit 1133, and the third generation unit 1134. Alternatively, any two generation units may be selected therefrom to be mounted.

Based on a plurality of pixels corresponding to a second range indicating a range of height equal to or larger than a predetermined value within a first range higher than the road surface (an example of a reference object as a reference of height of an object) in the parallax image, the first generation unit 1132 generates first information in which the position in the horizontal direction indicating a direction orthogonal to the optical axis of the stereo camera is associated with the position in the depth direction indicating the direction of the optical axis of the stereo camera. In this example, the first information is a two-dimensional histogram in which the horizontal axis (X-axis) indicates a distance (actual distance) in the horizontal direction, the vertical axis (Y-axis) indicates the parallax value d of the parallax image, and the axis in the depth direction indicates frequency. It can be considered that the first information is information in which the frequency value of the parallax is recorded for each combination of the actual distance and the parallax value d. In the following description, the first information is referred to as a "High Umap". Assuming that the position in the horizontal direction of the parallax image is x, the position in the vertical direction is y, and the parallax value set for each pixel is d, the first generation unit 1132 generates a two-dimensional histogram in which the horizontal axis indicates x of the parallax image, the vertical axis indicates the parallax value d, and the axis in the depth direction indicates the frequency by voting a point (x, y, d) in the parallax image corresponding to the second range based on a value of (x, d). The horizontal axis of the two-dimensional histogram is converted into the actual distance to generate the High Umap. It can be considered that the vertical axis of the High Umap indicates the position in the depth direction (a smaller parallax value d represents a larger distance in the depth direction).

A linear expression representing the road surface is obtained through road surface estimation by the road surface estimation unit 1131 described above, so that when the parallax value d is determined, a corresponding y-coordinate $y_0$ is determined, and the coordinate $y_0$ represents the height of the road surface. For example, when the parallax value is d and the y-coordinate is y', y'-$y_0$ represents the height from the road surface in a case in which the parallax value is d. The height H from the road surface at coordinates (d, y') can be obtained through an arithmetic expression $H = (z \times (y' - y_0))/f$. In this arithmetic expression, "z" is a distance calculated based on the parallax value d ($z = BF/(d - offset)$), and "f" is a value obtained by converting a focal length of the imaging unit 1102 into the same unit as a unit of (y'-$y_0$). In this case, BF is a value obtained by multiplying a base length B by a focal length f of the imaging unit 1102, and offset is a parallax in a case of photographing an infinite object.

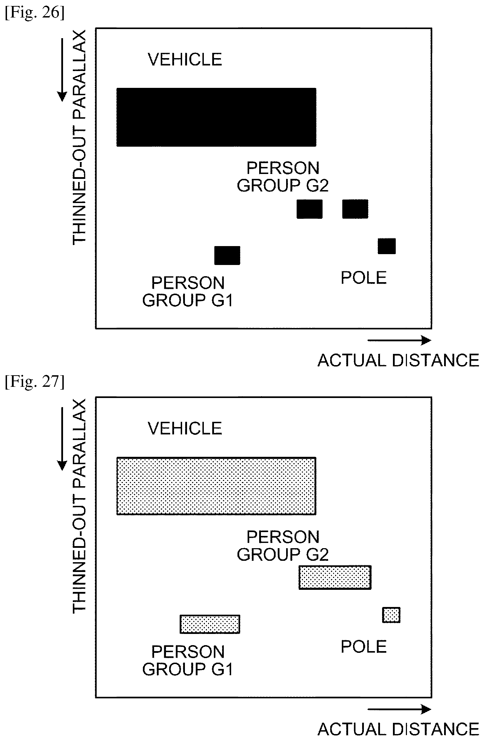

For example, in the taken image illustrated in Fig. 25, a person group G1 including an adult and a child, a person group G2 including adults, a pole, and a vehicle are projected. In this example, a range in which an actual height from the road surface is 150 cm to 200 cm is set as the second range, and Fig. 26 illustrates the High Umap to which the parallax value d within the second range is voted. The parallax value d of the child having a height smaller than 150 cm is not voted, so that the child does not appear on the map. The vertical axis indicates a thinned-out parallax obtained by performing thinning processing on the parallax value d using a thinning rate corresponding to the distance. The High Umap generated by the first generation unit 1132 is input to the clustering processing unit 1123.

The following continues the description with reference to Fig. 24. The second generation unit 1133 generates second information in which the position in the horizontal direction of the stereo camera is associated with the depth direction based on a plurality of pixels corresponding to the first range in the parallax image. In the following description, the second information is referred to as a "Standard Umap". Assuming that the position in the horizontal direction of the parallax image is x, the position in the vertical direction is y, and the parallax value set for each pixel is d, the second generation unit 1133 generates a two-dimensional histogram in which the horizontal axis indicates x of the parallax image, the vertical axis indicates the parallax value d, and the axis in the depth direction indicates the frequency by voting a point (x, y, d) in the parallax image corresponding to the first range based on a value of (x, d). The horizontal axis of the two-dimensional histogram is converted into the actual distance to generate the Standard Umap. It can be considered that the vertical axis of the Standard Umap indicates the position in the depth direction. In the example of Fig. 25, a range from 0 cm to 200 cm (including the second range described above) is set as the first range, and Fig. 27 illustrates the Standard Umap to which the parallax value d within the first range is voted. In addition to the Standard Umap, the second generation unit 1133 generates height information in which the height of the parallax point having the largest height (H) from the road surface is recorded from among parallax points (groups of the actual distance and the parallax value d) voted to the Standard Umap, the horizontal axis indicates the actual distance (a distance in a right and left direction of the camera), the vertical axis indicates the parallax value d, and the height is recorded for each corresponding point. It can be considered that the height information is information in which the height is recorded for each combination of the actual distance and the parallax value d. The Standard Umap generated by the second generation unit 1133 is input to the clustering processing unit 1123.

The following continues the description with reference to Fig. 24. The third generation unit 1134 generates third information in which the position in the horizontal direction is associated with the position in the depth direction of the stereo camera by using a plurality of pixels present in a range higher than the road surface in the parallax image, the number of pixels being smaller than that in a case of generating the first information or the second information. In this example, the third information is a two-dimensional histogram in which the horizontal axis indicates the distance (actual distance) in the horizontal direction, the vertical axis indicates the parallax value d of the parallax image, and the axis in the depth direction indicates the frequency. It can be considered that the third information is information in which the frequency value of the parallax is recorded for each combination of the actual distance and the parallax value d. In the following description, the third information is referred to as a "Small Umap". Assuming that the position in the horizontal direction of the parallax image is x, the position in the vertical direction is y, and the parallax value set for each pixel is d, the third generation unit 1134 generates a two-dimensional histogram in which the horizontal axis indicates x of the parallax image, the vertical axis indicates the parallax value d, and the axis in the depth direction indicates the frequency by voting a point (x, y, d) (the number of points to be voted is smaller than that in a case of generating the Standard Umap) in the parallax image corresponding to the first range based on a value of (x, d). The horizontal axis of the two-dimensional histogram is converted into the actual distance to generate the Small Umap. It may be considered that the vertical axis of the Small Umap indicates the position in the depth direction. The Small Umap has distance resolution for one pixel lower than that of the Standard Umap. In addition to the Small Umap, the third generation unit 1134 generates height information in which the height of the parallax point having the largest height (H) from the road surface is recorded from among parallax points (groups of the actual distance and the parallax value d) voted to the Small Umap, the horizontal axis indicates the actual distance (a distance in a right and left direction of the camera), the vertical axis indicates the parallax value d, and the height is recorded for each corresponding point. It may be considered that the height information is information in which the height is recorded for each combination of the actual distance and the parallax value d. The Small Umap generated by the third generation unit 1134 is input to the clustering processing unit 1123.

In the following description, the Standard Umap, the High Umap, and the Small Umap are each referred to as a "real Umap" when they are not required to be distinguished from each other. The real Umap may be regarded as an overhead map (an overhead image, a bird's-eye view image) in which the horizontal axis is the vertical direction (the right and left direction of the camera) with respect to the optical axis of the stereo camera, and the vertical axis is an optical axis direction of the stereo camera.

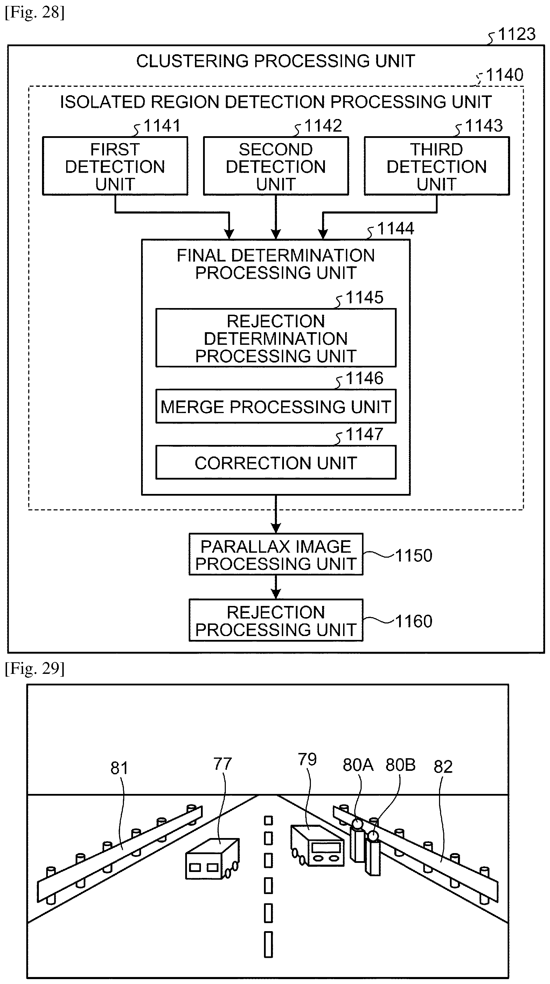

The following continues the description returning to Fig. 23. The clustering processing unit 1123 detects an object position on the parallax image acquired by the acquisition unit 1121 using various pieces of information received from the road surface detection processing unit 1122. Fig. 28 is a diagram illustrating an example of a specific function of the clustering processing unit 1123. As illustrated in Fig. 28, the clustering processing unit 1123 includes an isolated region detection processing unit 1140, a parallax image processing unit 1150, and a rejection processing unit 1160.

The isolated region detection processing unit 1140 performs isolated region detection processing for detecting an isolated region (assembly region) as a region of a cluster of parallax values d from each real Umap (the High Umap, the Standard Umap, and the Small Umap) received from the road surface detection processing unit 1122. Specific content of the isolated region detection processing unit 1140 will be described later.

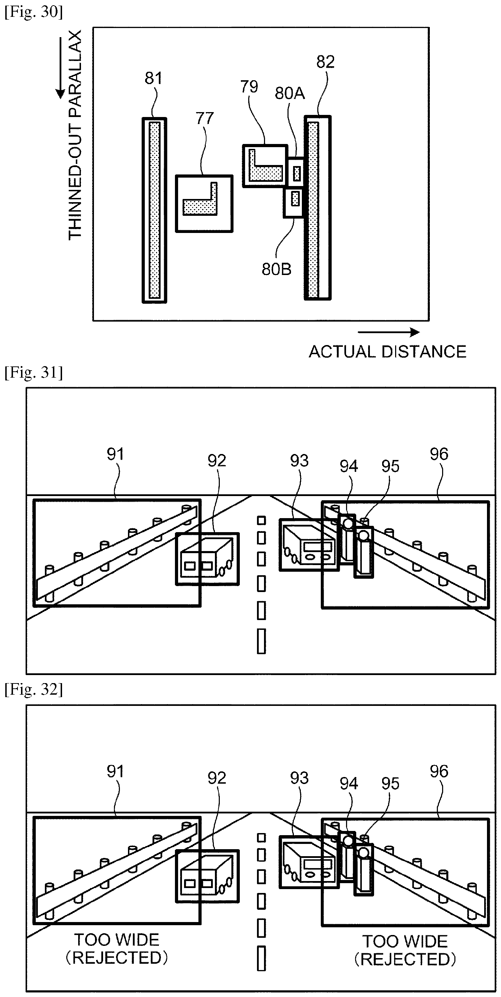

For example, in a case of the taken image illustrated in Fig. 29, guardrails 81 and 82 are present on the left and right sides, respectively, and a vehicle 77 and a vehicle 79 make two-way traffic across a center line. One vehicle 77 or one vehicle 79 is traveling on each traveling lane. Two poles 80A and 80B are present between the vehicle 79 and the guardrail 82. Fig. 30 is a real Umap obtained based on the taken image illustrated in Fig. 29, and a framed region corresponds to the isolated region.

The parallax image processing unit 1150 performs parallax image processing for detecting object information in a real space or a region on the parallax image corresponding to the isolated region on the real Umap detected by the isolated region detection processing unit 1140. Fig. 31 is a diagram illustrating a region on the parallax image (a result of processing performed by the parallax image processing unit 1150) corresponding to the isolated region illustrated in Fig. 30. A region 91 in Fig. 31 is a region corresponding to the guardrail 81, a region 92 is a region corresponding to the vehicle 77, a region 93 is a region corresponding to the vehicle 79, a region 94 is a region corresponding to the pole 80A, a region 95 is a region corresponding to the pole 80B, and a region 96 is a region corresponding to the guardrail 82.

The rejection processing unit 1160 performs rejection processing for selecting an object to be output based on the object information in the real space or the region on the parallax image detected by the parallax image processing unit 1150. The rejection processing unit 1160 performs size rejection focusing on a size of the object, and overlap rejection focusing on a positional relation between objects. For example, in the size rejection, rejected is a detection result of a size not falling within a size range determined for each object type illustrated in Fig. 8 described above. In the example of Fig. 32, the region 91 and the region 96 are rejected. In the overlap rejection, an overlapping result is selected for regions corresponding to isolated regions on the parallax image (the detection result on the real Umap) detected through the parallax image processing.

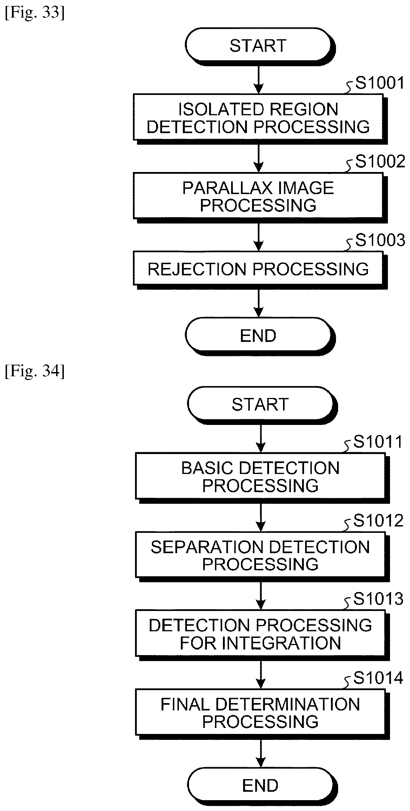

Fig. 33 is a flowchart illustrating an example of processing performed by the clustering processing unit 1123. In this example, the Standard Umap, the High Umap, the Small Umap, the parallax image, the road surface estimation information, and the height information are input as input information, and the detection result on the parallax image is output as output information. First, the isolated region detection processing unit 1140 performs isolated region detection processing (Step S1001). Specific content of the isolated region detection processing will be described later. Next, the parallax image processing unit 1150 performs parallax image processing (Step S1002). The rejection processing unit 1160 then performs rejection processing using a result of the parallax image processing at Step S1002 (Step S1003), and outputs a detection result on a final parallax image as output information.

The output information (detection result) from the clustering processing unit 1123 is input to the tracking processing unit 1124 illustrated in Fig. 23. If the detection result (detected object) obtained by the clustering processing unit 1123 continuously appears over a plurality of frames, the tracking processing unit 1124 determines the detection result to be a tracking target. When the detection result is the tracking target, the tracking processing unit 1124 outputs the detection result to the control unit 1104 as an object detection result.

Next, the following describes specific content of the isolated region detection processing unit 1140 illustrated in Fig. 28. As illustrated in Fig. 28, the isolated region detection processing unit 1140 includes a first detection unit 1141, a second detection unit 1142, a third detection unit 1143, and a final determination processing unit 1144.

The first detection unit 1141 detects an assembly region of the parallax value d (an example of distance information) from the High Umap (first information). In the following description, detection processing performed by the first detection unit 1141 is referred to as "separation detection processing", and a processing result thereof is referred to as a "separation detection result (including the detected assembly region)". The High Umap is hardly influenced by an object present in a region at a low height as compared with the Standard Umap, so that separation performance of the High Umap is excellent. However, erroneous separation detection tends to be caused for an object having no parallax in a region having a high height from the road surface. Specific processing content will be described later.

The second detection unit 1142 detects an assembly region from the Standard Umap (second information). In the following description, detection processing performed by the second detection unit 1142 is referred to as "basic detection processing", and a processing result thereof is referred to as a "basic detection result (including the detected assembly region)". The separation detection result described above is assumed to accompany the basic detection result (to be included in the basic detection result). With the Standard Umap, stable detection can be expected for the entire detection range because distance resolution for one pixel is high and the detection range includes a low position to a high position of the road surface. However, when an estimated road surface is detected to be lower than an actual road surface through road surface estimation or the parallax of the detection target is low, erroneous detection is easily caused due to a characteristic of the Standard Umap. Specific processing content will be described later.

The third detection unit 1143 detects an assembly region from the Small Umap (third information). In the following description, detection processing performed by the third detection unit 1143 is referred to as "detection processing for integration", and a processing result thereof is referred to as an "integration detection result (including the detected assembly region)". The Small Umap has a characteristic such that erroneous separation is hardly caused for an object that hardly has a parallax because resolution for one pixel is lower than that of the Standard Umap. However, because separation performance (resolution) is low, objects tend to be detected being coupled to each other in the detection processing (detection processing for integration) using the Small Umap.

The final determination processing unit 1144 performs final determination processing of causing the "basic detection result", the "separation detection result", and the "integration detection result" to be inputs, selecting and correcting the detection result to be output, and clarifying a relation between the detection results. As illustrated in Fig. 28, the final determination processing unit 1144 includes a rejection determination processing unit 1145, a merge processing unit 1146, and a correction unit 1147. The rejection determination processing unit 1145 performs rejection determination processing for determining whether to reject the integration detection result. Specific content thereof will be described later. The merge processing unit 1146 merges the "integration detection result" with the "basic detection result" and the "separation detection result" accompanying therewith. Specific content will be described later. The correction unit 1147 corrects and outputs the merged detection result. Specific content of this correction processing will be described later.

Fig. 34 is a flowchart illustrating an example of isolated region detection processing. In this example, the Standard Umap, the High Umap, the Small Umap, and the height information are input as input information, and the detection result on the Standard Umap is output as output information. As illustrated in Fig. 34, the second detection unit 1142 performs basic detection processing (Step S1011), the first detection unit 1141 performs separation detection processing (Step S1012), and the third detection unit 1143 performs detection processing for integration (Step S1013). The order of Step S1011 to Step S1013 is optional, and the steps may be executed in parallel. Next, the final determination processing unit 1144 performs final determination processing (Step S1014).

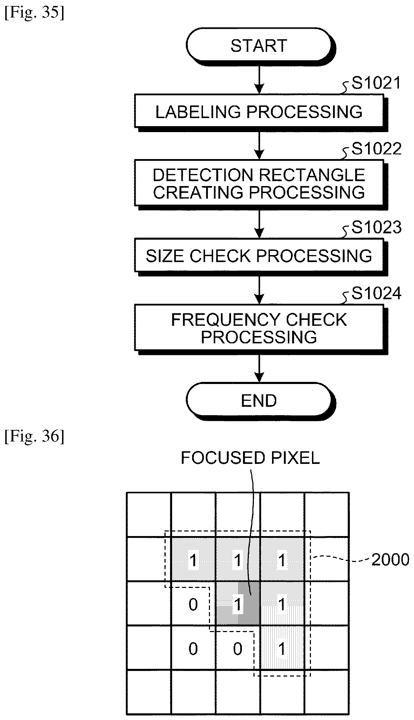

For convenience of explanation, first, the following describes specific content of the basic detection processing. Fig. 35 is a flowchart illustrating an example of the basic detection processing. In this example, the Standard Umap is input as input information. Output information will be clarified in the later description. First, the second detection unit 1142 performs labeling processing for grouping each cluster of parallaxes in the Standard Umap and giving an ID thereto (Step S1021). Specifically, the second detection unit 1142 focuses on each group of a plurality of pixels included in the Standard Umap, and sets a pixel value of a pixel including a frequency value to be "1" and sets a pixel value of a pixel not including the frequency value to be "0" to be binarized among a focused pixel and pixels present in the vicinity of the focused pixel (for example, eight pixels corresponding to eight directions on a one-to-one basis, the eight direction including a right direction, a right obliquely upward direction, an upward direction, a left obliquely upward direction, a left direction, a left obliquely downward direction, a downward direction, and a right obliquely downward direction). A method of binarization is not limited thereto and is optional. For example, the method of binarization may have a form such that a pixel value of a pixel including a frequency value of the parallax equal to or larger than a threshold is set to be "1" among the eight pixels described above present in the vicinity, and pixel values of the other pixels are set to be "0". A closed region formed by a set of pixel values "1" is caused to be a cluster (one group) of parallaxes, and an ID is given to each pixel included in the closed region. The ID is set to be a value that can identify each group.

Fig. 36 is a diagram illustrating an example after binarization processing, and the same ID is given to each of five pixels included in a region 2000.

The description will be continued returning to Fig. 35. After Step S1021, the second detection unit 1142 performs detection rectangle creating processing (Step S1022). Specifically, the second detection unit 1142 calculates a rectangle circumscribing the assembly region of pixels to which the same ID is given, and causes the calculated circumscribing rectangle to be a detection rectangle. Next, the second detection unit 1142 performs size check for checking a size of the detection rectangle created at Step S1022 (Step S1023). For example, when the size of the detection rectangle created at Step S1022 is equal to or smaller than a predetermined threshold as a size corresponding to noise, the second detection unit 1142 performs processing of discarding the detection rectangle. Next, the second detection unit 1142 performs frequency check for checking the frequency value (frequency value of the parallax) of each pixel included in the detection rectangle created at Step S1022(Step S1024). For example, when a cumulative value of the frequency value (frequency value of the parallax) included in the detection rectangle created at Step S1022 is equal to or smaller than a predetermined threshold as a number required for representing the object, the second detection unit 1142 performs processing of discarding the detection rectangle.

Through the basic detection processing described above, information indicating the detection rectangle on the Standard Umap is output as output information. An ID for identifying a group is assigned to grouped pixels (pixels included in the detected assembly region) in the detection rectangle on the Standard Umap. That is, information indicating a map of the ID grouped on the Standard Umap (an "ID Umap on the Standard Umap", or simply referred to as an "ID Umap" when it is not required to be distinguished from others in some cases) is output as output information.

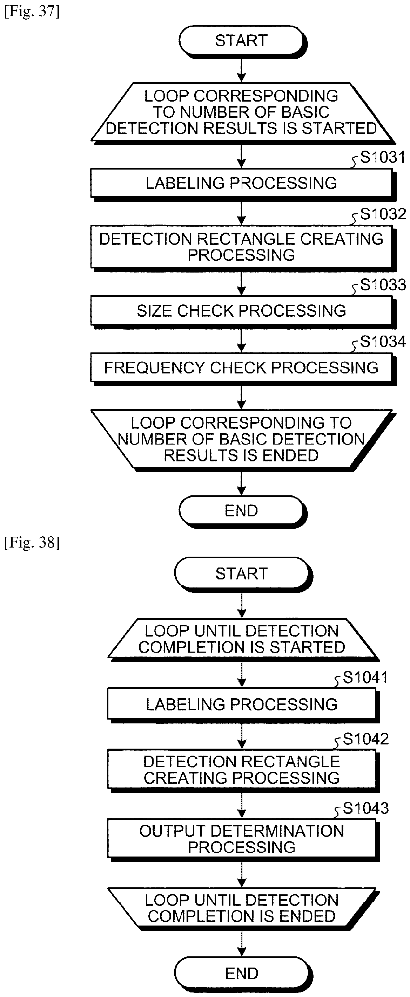

Next, the following describes specific content of the separation detection processing. Fig. 37 is a flowchart illustrating an example of separation detection processing. In this example, the Standard Umap and the High Umap are input as input information. Output information will be clarified in the later description. As described above, the separation detection result accompanies the basic detection result, and the following processing will be repeated corresponding to the number of basic detection results. The first detection unit 1141 sets, for one or more separation detection results accompanying a focused basic detection result, a region of interest including the separation detection result, and performs labeling processing on the set region of interest (Step S1031). Specific content of the labeling processing is described above. Next, the first detection unit 1141 performs, for each assembly region of pixels to which the same ID is given in the labeling processing at Step S1031, detection rectangle creating processing for calculating a rectangle circumscribing the assembly region (Step S1032).

Next, the first detection unit 1141 performs size check processing for each detection rectangle created at Step S1032 (Step S1033). Specific content of size check processing is described above. Next, the first detection unit 1141 performs frequency check processing (Step S1034). Specific content of the frequency check processing is described above. When the processing described above is not completed for all basic detection results (when loop processing corresponding to the number of basic detection results is not finished), processing subsequent to Step S1031 is repeated. That is, the first detection unit 1141 repeats the processing described above corresponding to the number of basic detection results.

Through the separation detection processing described above, information indicating the detection rectangle on the High Umap (a detection result on the High Umap associated with the basic detection result) is output as output information. An ID for identifying a group is assigned to each grouped pixel in the detection rectangle on the High Umap. That is, information indicating a map of the ID grouped on the High Umap (an "ID Umap on the High Umap", or simply referred to as an "ID Umap" when it is not required to be distinguished from others in some cases) is output as output information.

Next, the following describes specific content of detection processing for integration. Basic content of the detection processing for integration is similar to that of the basic detection processing. Fig. 38 is a flowchart illustrating an example of detection processing for integration. In this example, the Small Umap and the height information are input as input information. Output information will be clarified in the later description. The third detection unit 1143 repeats the following processing until detection is completed. First, the third detection unit 1143 performs labeling processing for grouping each cluster of parallaxes in the Small Umap and giving an ID thereto (Step S1041). Specific content of the labeling processing is described above. However, the third detection unit 1143 focuses on each group of a plurality of pixels included in the Small Umap, and sets a pixel value of a pixel including a frequency value to be "1" and sets a pixel value of a pixel not including the frequency value to be "0" to be binarized among a focused pixel and pixels present in the vicinity of the focused pixel (for example, the eight pixels described above). A method of binarization is not limited thereto and is optional. For example, the method of binarization may have a form such that a pixel value of a pixel including a frequency value of the parallax equal to or larger than a threshold is set to be "1" among the eight pixels present in the vicinity, and pixel values of the other pixels are set to be "0". A closed region formed by a set of pixel values "1" is caused to be a cluster (one group) of parallaxes, and an ID is given to each pixel included in the closed region.

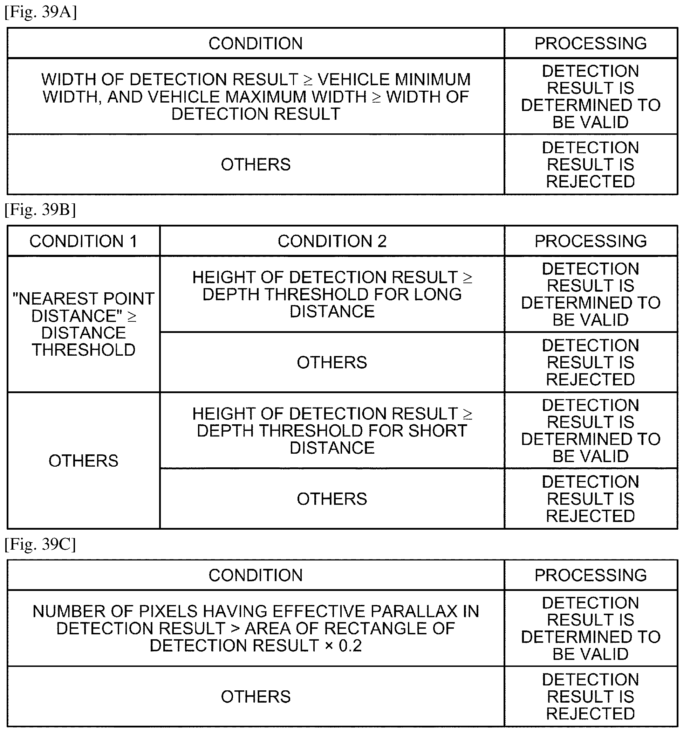

After Step S1041, the third detection unit 1143 performs detection rectangle creating processing (Step S1042). Specific content thereof is described above. Next, the third detection unit 1143 performs output determination processing (Step S1043). The output determination processing is processing for selecting a detection result to be output by determining whether the size, the frequency value of the parallax, a depth length, and the like of the detection rectangle (detection result) created at Step S1042 meet a condition thereof. In the detection processing for integration, objects tend to be detected being coupled to each other, so that it is assumed herein that only a detection result having a characteristic which seems to be a vehicle is output. Figs. 39A, 39B, and 39C are tables illustrating examples of the conditions described above. Fig. 39A is a table indicating an example of a condition related to the size (width) of the detection result. Fig. 39B is a table indicating an example of a condition related to the depth length of the detection result. A "nearest point distance" in Fig. 39B will be described later. The "nearest point distance" indicates a distance from the center of a predetermined valid range (a range in which detection is valid) to a point of the detection result (object) nearest to the center in the depth direction. Fig. 39C is a table illustrating an example of conditions related to the frequency value of the parallax.

Through the detection processing for integration described above, the information indicating the detection rectangle on the Small Umap is output as output information. An ID for identifying a group is assigned to each grouped pixel in the detection rectangle on the Small Umap. That is, information indicating a map of the ID grouped on the Small Umap (an "ID Umap on the Small Umap", or simply referred to as an "ID Umap" when it is not required to be distinguished from others in some cases) is output as output information.

Next, the following describes final determination processing performed by the final determination processing unit 1144. The final determination processing unit 1144 receives three results including the basic detection result, the separation detection result, and the integration detection result, calculates a correspondence relation among the detection results, and sets an inclusive frame and a partial frame accompanying the inclusive frame. The final determination processing unit 1144 corrects the inclusive frame and the partial frame, and selects an output target therefrom. The inclusive frame stores a result detected through processing having low separation performance. That is, the inclusive frame indicates a frame having a larger size for the same object. In this case, the integration detection result or the basic detection result is set as the inclusive frame. The partial frame stores a result detected through processing having separation performance higher than that of the inclusive frame. The partial frame is a detection frame (an outer frame of the detection result) associated with the inclusive frame, and is a result obtained by separating the inside of the inclusive frame. In this case, the basic detection result or the separation detection result corresponds to the partial frame. Herein, the frame indicates a position and a size of the object, and is information associating coordinates of a corner of the rectangle surrounding the object with the height and the width, for example.

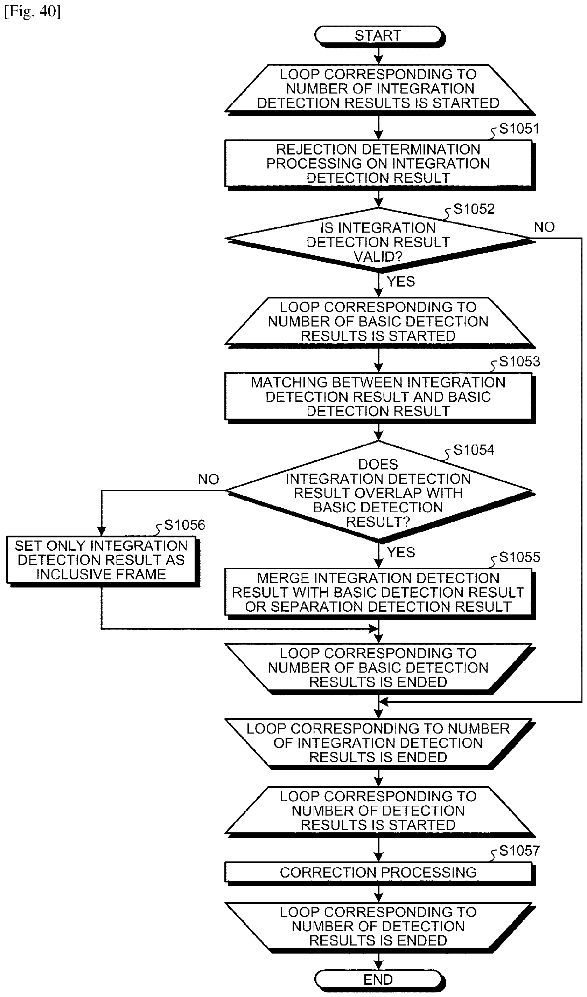

Fig. 40 is a flowchart illustrating an example of final determination processing. In this example, the Standard Umap, the High Umap, the height information, the basic detection result (the detection rectangle on the Standard Umap), the separation detection result associated with the basic detection result (the detection rectangle on the High Umap), and the integration detection result (the detection rectangle on the Small Umap) are input as input information. As output information, output is an ID table in which the detection result on the Standard Umap, the ID Umap corresponding thereto, and a relation between the detection results are recorded.

The processing from Step S1051 to Step S1056 illustrated in Fig. 40 will be repeated corresponding to the number of integration detection results. First, the rejection determination processing unit 1145 performs rejection determination processing on a focused integration detection result (Step S1051). The following describes specific content of the rejection determination processing. The rejection determination processing unit 1145 performs rejection determination processing for selecting only an integration detection result satisfying a condition of a vehicle size present on an own lane, and rejecting other results. In this case, performed is processing of converting the detection rectangle (integration detection result) on the Small Umap into the detection rectangle on the Standard Umap, and the integration detection result outside the valid range set in advance on the Standard Umap is rejected. The embodiment is not limited thereto. For example, the valid range may be set in advance on the Small Umap, and the integration detection result outside the valid range set in advance on the Small Umap may be rejected.

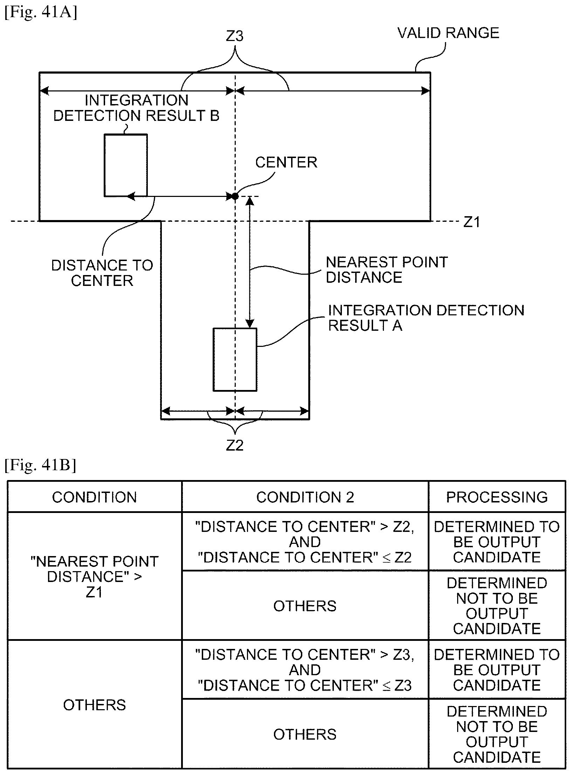

Fig. 41A is a diagram illustrating an example of a condition for rejection, Fig. 41B is a table illustrating an example of a condition for rejection. For example, like an integration detection result A, when the "nearest point distance" indicating a distance between the center of the valid range and a point of the integration detection result nearest to the center in the depth direction (the optical axis direction of the camera) is larger than a threshold Z1, the result is determined to be valid (to be an output candidate) only when a "distance to the center" indicating a distance between the center of the valid range and the center of the integration detection result in a camera horizontal direction (a right and left direction of the camera) is larger than -Z2 (a threshold on a negative side) and equal to or smaller than Z2 (a threshold on a positive side), and other results are rejected. For example, like an integration detection result B, when the nearest point distance is equal to or smaller than the threshold Z1, the result is determined to be valid only when the distance to the center is larger than -Z3 (a threshold on the negative side) and equal to or smaller than Z3 (a threshold on the positive side), and other results are rejected.

When the integration detection result is determined to be valid through the rejection determination processing described above, the result of Step S1052 in Fig. 40 is "Yes", and the processing from Step S1053 to Step S1056 is repeated corresponding to the number of basic detection results. On the other hand, when the result of Step S1052 is "No", the processing on the focused integration detection result is ended, and loop processing corresponding to the number of other integration detection results is repeated.

At Step S1053, the merge processing unit 1146 performs matching between the integration detection result and the basic detection result. Specific content thereof is described below. The merge processing unit 1146 detects overlapping between the detection frame of the integration detection result and the detection frame of the basic detection result on the Large Umap, clarifies a correspondence relation based on the detection result, and selects the integration detection result to be a processing target.

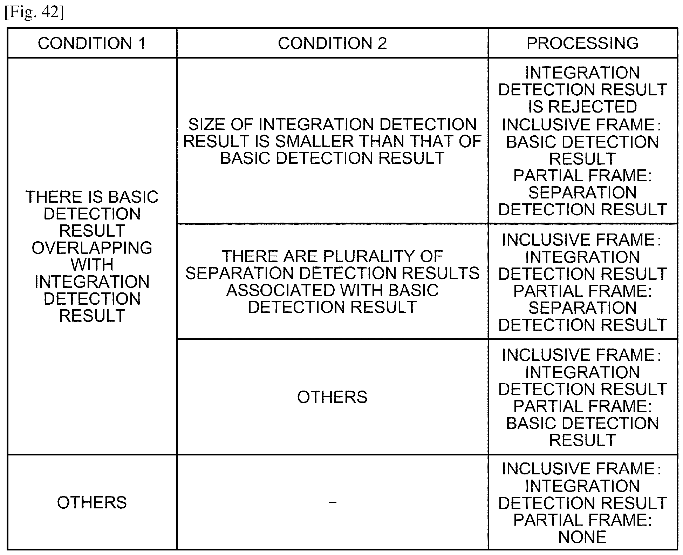

In this example, first, the merge processing unit 1146 calculates an overlapping rate of the integration detection result and the basic detection result. When the size of the basic detection result is smaller than the size of the integration detection result, the overlapping rate is calculated by dividing an area of an overlapping region of the basic detection result and the integration detection result by an area of the basic detection result. When the size of the basic detection result is larger than the size of the integration detection result (when the size of the integration detection result is smaller than the size of the basic detection result), the overlapping rate is calculated by dividing an area of an overlapping region of the basic detection result and the integration detection result by an area of the integration detection result. In this example, when the overlapping rate is larger than a threshold (for example, 0.5), the merge processing unit 1146 determines that the basic detection result overlapping with the integration detection result is present. The merge processing unit 1146 then sets the inclusive frame and the partial frame based on the condition illustrated in Fig. 42.

In the example of Fig. 42, when the basic detection result overlapping with the integration detection result is present and the size of the integration detection result is smaller than that of the basic detection result, the merge processing unit 1146 rejects the integration detection result, sets the basic detection result as the inclusive frame, and sets the separation detection result associated with the basic detection result as the partial frame. When the basic detection result overlapping with the integration detection result is present and a plurality of separation detection results associated with the basic detection result are present, the merge processing unit 1146 rejects the basic detection result, sets the integration detection result as the inclusive frame, and sets the separation detection result associated with the basic detection result as the partial frame. Additionally, when the basic detection result overlapping with the integration detection result is present and the size of the integration detection result is larger than that of the basic detection result, or when only one separation detection result associated with the basic detection result is present (a case other than a case in which the size of the integration detection result is smaller than that of the basic detection result, or a plurality of separation detection results associated with the basic detection result are present), the merge processing unit 1146 sets the integration detection result as the inclusive frame, and sets the basic detection result as the partial frame. When the basic detection result overlapping with the integration detection result is not present (when the basic detection result corresponding to the integration detection result is not present), the merge processing unit 1146 sets the integration detection result as the inclusive frame, and sets no partial frame. Content of matching performed by the merge processing unit 1146 has been described above.

The description will be continued returning to Fig. 40. When the integration detection result overlaps with the basic detection result as a result of matching at Step S1053, the result of Step S1054 is "Yes". If the result of Step S1054 is "Yes", the merge processing unit 1146 merges the inclusive frame (integration detection result) with the partial frame (the basic detection result or the separation detection result) (Step S1055), and generates one "detection result". As described above, merge processing in this example is performed based on the condition illustrated in Fig. 42.

On the other hand, if the result of Step S1054 is "No", the merge processing unit 1146 sets only the integration detection result as the inclusive frame (Step S1056). No partial frame is set because a corresponding basic detection result is not present. That is, the integration detection result is set as the inclusive frame, and one "detection result" in which no partial frame is set is generated.

The correction processing at Step S1057 is performed corresponding to the number of "detection results" generated as described above. The following describes the correction processing performed by the correction unit 1147. The correction unit 1147 performs integration correction processing when the detection result includes the integration detection result. Specific content of the integration correction processing will be described later. On the other hand, when the detection result does not include the integration detection result, the correction unit 1147 corrects a first assembly region using a correction method corresponding to a distance of an assembly region (the first assembly region indicating an assembly region (a set of pixels to which an ID is given) detected by the first detection unit 1141) included in the separation detection result set as the partial frame. The distance of the first assembly region indicates a distance (distance in the depth direction) from the stereo camera, and can be obtained using the parallax value d of each pixel included in the first assembly region. When the distance of the first assembly region is smaller than a threshold, the correction unit 1147 performs first correction processing on the first assembly region. When the distance of the first assembly region is equal to or larger than the threshold, the correction unit 1147 performs second correction processing on the first assembly region. In a case of short distance, erroneous separation of the separation detection result is hardly caused due to high road surface estimation accuracy. On the other hand, in a case of long distance, erroneous separation of the separation detection result is easily caused due to low road surface estimation accuracy. Thus, as the threshold, it is preferable to set a value of distance that can secure the road surface estimation accuracy. In this example, the threshold is set to be 30 m, but the embodiment is not limited thereto.

The first correction processing is processing of expanding the first assembly region using a relative standard of the height of the first assembly region from the reference object (road surface). More specifically, the first correction processing is processing of expanding the first assembly region to a boundary, a boundary being a position at which the height of the region of interest from the reference object is lower than a relative height threshold that indicates a relative value in accordance with an average value of the height of the first assembly region (the height from the reference object) in a second assembly region (an assembly region included in the basic detection result associated with the separation detection result) including the first assembly region and indicating the assembly region detected by the second detection unit 1142 in a direction in which the region of interest indicating a region directed outward from the first assembly region continues. Specific content thereof will be described later. In the following description, the first correction processing is referred to as "correction processing for short distance".

The second correction processing is processing of coupling two first assembly regions by using a relative standard of the height of the first assembly region from the reference object (road surface). More specifically, the second correction processing is processing of coupling one first assembly region and the other first assembly region when the height of the region of interest from the reference object is equal to or larger than the relative height threshold that indicates a relative value in accordance with an average value of the height (the height from the reference object) of the first assembly region in a direction continuous from one first assembly region to the other first assembly region in the region of interest indicating a region between two first assembly regions in the second assembly region including two or more first assembly regions. Specific content will be described later. In the following description, the second correction processing is referred to as "correction processing for long distance".

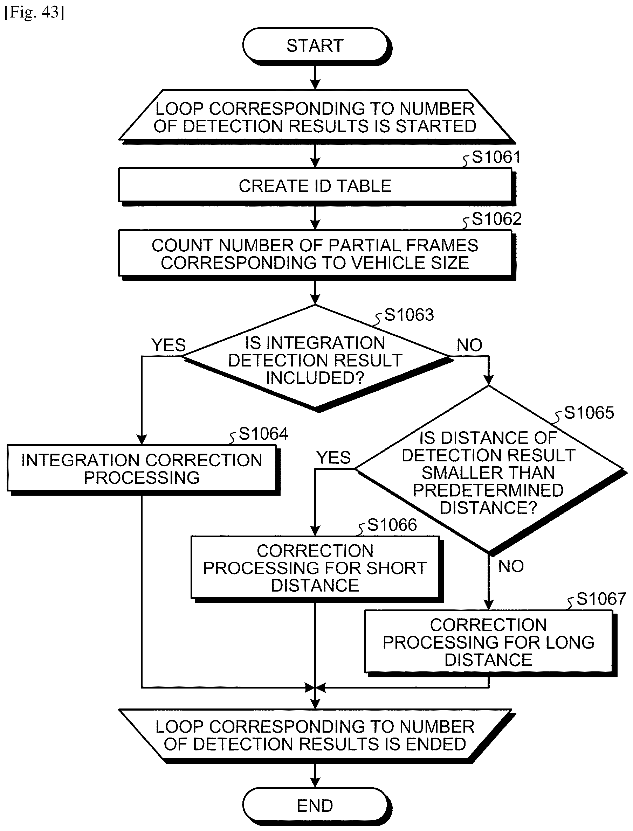

Fig. 43 is a flowchart illustrating an example of correction processing at Step S1057 in Fig. 40. In this example, a list of inclusive frames, partial frames accompanying the inclusive frames, the ID Umap, the Standard Umap, and the height information are input as input information, and a corrected list of inclusive frames, partial frames accompanying the inclusive frames, a corrected ID Umap, and an ID table in which a relation between detection results is recorded are output as output information.

The correction unit 1147 repeats the processing from Step S1061 to Step S1067 corresponding to the number of "detection results". First, the correction unit 1147 creates an ID table (Step S1061). The ID table is information having a table format in which the inclusive frame and the partial frame are associated with each other using an ID. Next, the correction unit 1147 counts the number of partial frames having a size corresponding to a vehicle size among partial frames included in a focused detection result (a group of the inclusive frame and the partial frame) (Step S1062). Next, the correction unit 1147 determines whether the detection result includes the integration detection result (Step S1063). That is, the correction unit 1147 determines whether the inclusive frame included in the detection result is the integration detection result.

If the result of Step S1063 is "Yes" (Yes at Step S1063), the correction unit 1147 performs integration correction processing (Step S1064). If the result of Step S1063 is "No" (No at Step S1063), the correction unit 1147 determines whether a distance of the detection result is smaller than a predetermined distance (for example, 30 m) (Step S1065). If the result of Step S1065 is "Yes" (Yes at Step S1065), the correction unit 1147 performs correction processing for short distance (Step S1066). If the result of Step S1065 is "No" (No at Step S1065), the correction unit 1147 performs correction processing for long distance (Step S1067).

In the present embodiment, when the detection result includes the integration detection result (a result of detection using the Small Umap as a map having low resolution), integration correction processing is performed considering a distance difference and a horizontal position on the basic detection result and the separation detection result. Accordingly, the detection result can be corrected to have high separation performance while reducing erroneous separation. In the present embodiment, appropriate one of the correction processing for short distance and the correction processing for long distance is used depending on the distance of the detection result. Accordingly, correction can be performed using an appropriate method for short distance having high road surface estimation accuracy and long distance having low road surface estimation accuracy.

Next, the following describes specific content of the integration correction processing. The integration detection result is obtained by using a map having coarse resolution (Small Umap). Due to this, erroneous separation of the object can be reduced, but separation performance is deteriorated. On the other hand, the basic detection result and the separation detection result are obtained by using a map having high resolution, so that separation performance is high but erroneous separation of the object is problematic. In correction processing for integration detection, all partial frames (the basic detection result or the separation detection result) associated with the integration detection result are not coupled (integrated) with each other as the same object, but the partial frame is corrected to be a detection result having high separation performance while reducing erroneous separation by making coupling determination based on a distance difference or a horizontal direction.

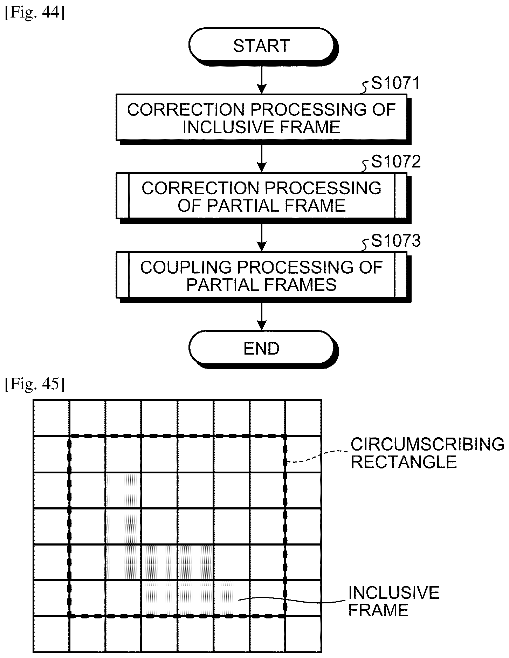

Fig. 44 is a flowchart illustrating an example of integration correction processing.

First, the correction unit 1147 performs correction processing on the inclusive frame (integration detection result) (Step S1071). Next, the correction unit 1147 performs correction processing on the partial frame (the basic detection result or the separation detection result) included in the inclusive frame (Step S1072). Next, the correction unit 1147 performs coupling processing on partial frames after the correction processing at Step S1072 (Step S1073). Specific content of each step will be described later. When the inclusive frame includes only one partial frame, the coupling processing at Step S1073 is not performed.

First, the following describes correction processing of the inclusive frame. As illustrated in Fig. 45, the correction unit 1147 calculates a circumscribing rectangle of pixels having a parallax in the inclusive frame. The ID of the inclusive frame is given to the pixel having no ID and having a frequency value of the parallax among the pixels included in the circumscribing rectangle. A pixel having the frequency value but not having the ID may be present, and the correction processing of the inclusive frame is processing of setting the ID to such a pixel as part of the inclusive frame. Accordingly, an appropriate inclusive frame can be set to an object the parallax value of which is hardly obtained. This processing may be omitted as needed.

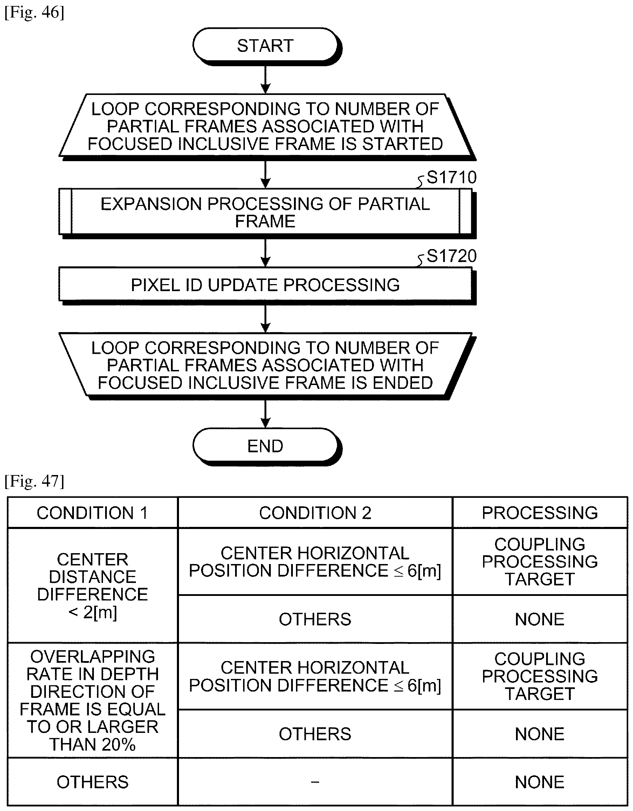

Next, the following describes correction processing of the partial frame. Fig. 46 is a flowchart illustrating a procedure of the correction processing of the partial frame. The correction unit 1147 repeatedly performs processing at Step S1710 and Step S1720 for each partial frame associated with a focused inclusive frame.

At Step S1710, the correction unit 1147 performs expansion processing of the partial frame. Thereafter, at Step S1720, the correction unit 1147 performs processing of updating the ID of the pixel in an expanded region to an ID of the partial frame. The expansion processing is performed based on height information, for example. That is, a pixel having connectivity with the height information but having no frequency value is caused to be valid. An ID is then set to the valid pixel. This is the correction processing of the partial frame. Due to this, an appropriate partial frame can be set to an object the parallax value of which is hardly obtained. This processing may be omitted as needed.

Next, the following describes coupling processing of the partial frames at Step S1073 in Fig. 44. The correction unit 1147 couples, among all combinations of partial frames, partial frames having a closer distance difference (center distance difference) between the partial frames in the optical axis direction (depth direction) of the camera and a closer distance difference (center horizontal position difference) between the partial frames in the right and left direction of the camera. As the coupling processing, a circumscribing rectangle (a circumscribing rectangle of two partial frames to be coupled) of the partial frame as a coupling target is calculated, and a region of the circumscribing rectangle is set as a coupled partial frame. As the ID of the pixel included in the coupled partial frame, an ID of one of the partial frames may be assigned, or a new ID may be assigned. In this case, the same ID as that of the partial frame as a coupling target is assigned to each of a plurality of pixels present between the first assembly region included in one of the partial frames and the first assembly region included in the other one of the partial frames. Fig. 47 is a table illustrating an example of a condition whether to be a target of coupling processing. Respective thresholds of the center distance difference and the center horizontal position difference are not limited to the example of Fig. 47 (2 m, 6 m), and can be optionally changed in a range in which erroneous separation may be caused for the same object. The center horizontal position difference corresponds to a distance between the frames described later. The center distance difference is obtained as a difference between an average value of a distance (a distance derived from the parallax value d) for each pixel included in one of the partial frames and an average value of a distance for each pixel included in the other one of the partial frames. Partial frames having at least one of a closer distance difference (center distance difference) between the partial frames in the optical axis direction (depth direction) of the camera and a closer distance difference (center horizontal position difference) between the partial frames in the right and left direction of the camera may be coupled to each other.

Under the condition of Fig. 47, when the center distance difference is smaller than 2 m and the center horizontal position difference is equal to or smaller than 6 m, two partial frames as targets are caused to be targets of coupling processing. As described above, in this example, a difference between the average value of the distance of each pixel included in one of the partial frames and the average value of the distance of each pixel included in the other one of the partial frames is assumed to be the center distance difference, and the center distance difference is compared with the threshold to determine whether to be the target of coupling processing. However, when the partial frames are vertically long (long in the depth direction), for example, the center distance difference may be equal to or larger than the threshold in some cases even when the partial frames are very close to each other to be overlapped with each other. Thus, even when the partial frame should be a target of the coupling processing, the partial frame may be excluded from the target of the coupling processing. Thus, in this example, even when the center distance difference is equal to or larger than the threshold, whether the overlapping rate in the depth direction of the partial frame is equal to or larger than a predetermined ratio (that can be optionally set within a range in which it can be determined that erroneous separation may be caused, for example, 20%) is checked. The overlapping rate herein is obtained by dividing an area of an overlapping region of two partial frames by an area of any one of the two partial frames (typically, a partial frame having a smaller size). When the overlapping rate is equal to or larger than the predetermined ratio and the center horizontal position difference is equal to or smaller than 6 m, the two partial frames as targets are caused to be the targets of the coupling processing. Through the integration correction processing described above, a corrected list of inclusive frames, corrected (expanded, coupled) partial frames accompanying the inclusive frames, and a corrected ID Umap are output as output information.

Next, the following describes specific content of the correction processing for short distance at Step S1066 in Fig. 43. As described above, estimation accuracy for the road surface is high in a case of short distance, so that erroneous separation of the separation detection result is hardly caused. The separation detection processing is detection processing using the High Umap to which only the parallax value of a region having a high height from the road surface is voted, so that separation performance is high. However, in the separation detection processing, an object spreading in a region having a low height from the road surface (close to the road surface) may be detected to have a smaller frame than an actual frame. Considering the above points, in the correction processing for short distance, the detection frame of the separation detection result is corrected using a relative standard of the height from the road surface of the detection frame.

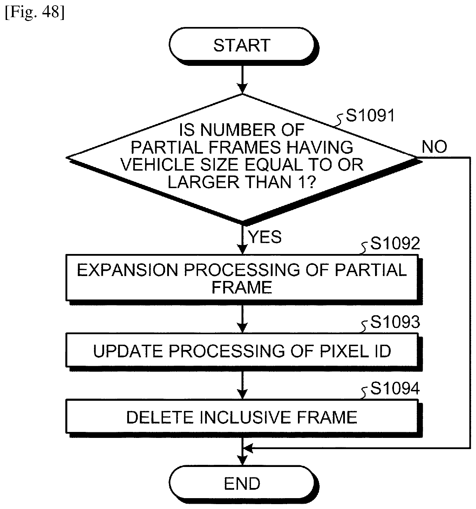

Fig. 48 is a flowchart illustrating a procedure of correction processing for short distance. The correction unit 1147 checks whether one or more partial frames (in this case, separation detection results) having a vehicle size are present in the inclusive frame of the focused detection result (in this case, the basic detection result) (Step S1091). If the result of Step S1091 is "No" (No at Step S1091), the processing is ended. If the result of Step S1091 is "Yes" (Yes at Step S1091), the correction unit 1147 performs expansion processing of the partial frame (Step S1092). This specific content is similar to the content described in the integration correction processing. Next, the correction unit 1147 performs update processing on a pixel ID (Step S1093). This content is also similar to the content described in the integration correction processing, so that detailed description thereof will not be repeated. Next, the correction unit 1147 deletes the inclusive frame (Step S1094).

Next, the following describes specific content of the correction processing for long distance at Step S1067 in Fig. 43. As described above, estimation accuracy for the road surface in a case of long distance is lower than that in the case of short distance. Specifically, when the estimation result of the road surface is estimated to be lower than an actual road surface, the parallax of the road surface is voted, which causes coupling of the detection frames or expansion of the detection frame. This problem can be solved by employing the separation detection result as a detection result of a region having a high height from the road surface. However, the separation detection result has high separation performance, so that erroneous separation may be caused and the object may be detected to be smaller than the actual object with high possibility when the estimation result of the road surface is estimated to be higher than the actual road surface or the vehicle has a low height. In the correction processing for long distance, the coupling processing and the correction processing of the detection frame are performed considering the above points.

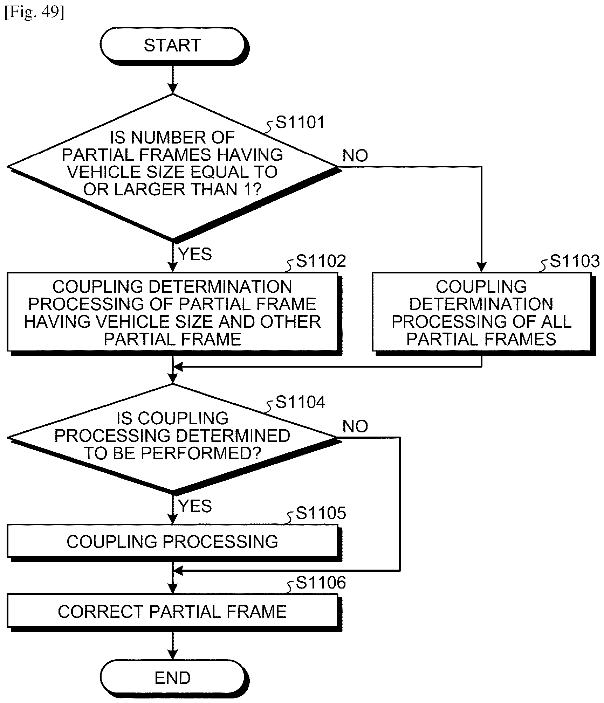

Fig. 49 is a flowchart illustrating a procedure of correction processing for long distance. The correction unit 1147 checks whether one or more partial frames (in this case, separation detection results) having a vehicle size are present in the inclusive frame of the focused detection result (in this case, the basic detection result) (Step S1101). If the result of Step S1101 is "Yes" (Yes at Step S1101), the correction unit 1147 performs coupling determination processing described later for each combination of the partial frame having a vehicle size and the other partial frame (Step S1102). On the other hand, if the result of Step S1101 is "No" (No at Step S1101), the correction unit 1147 performs the coupling determination processing described later for each combination of all partial frames (for each combination of two partial frames) (Step S1103).

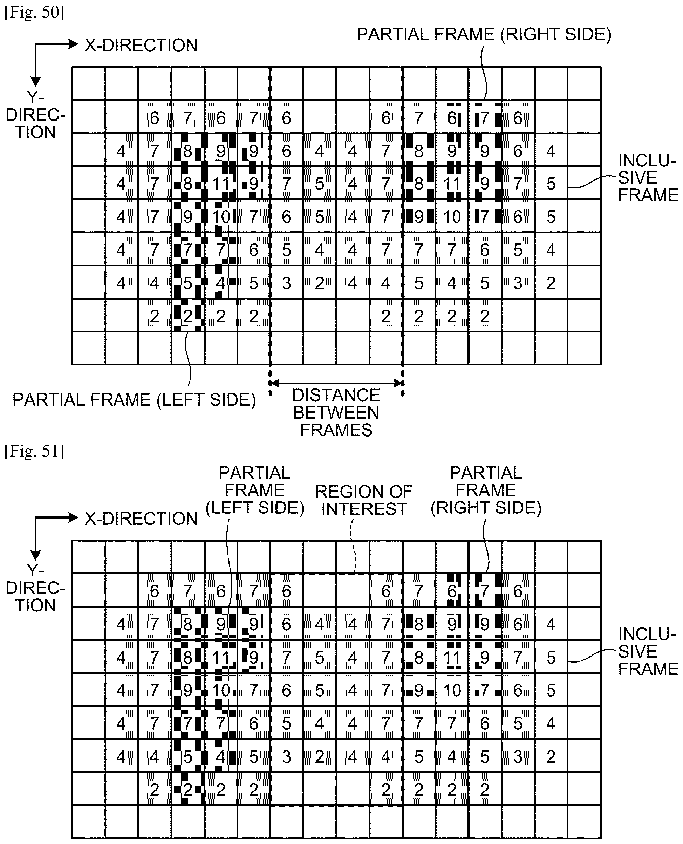

The following describes specific content of the coupling determination processing. As illustrated in Fig. 50, the correction unit 1147 specifies height information corresponding to the region of the inclusive frame, and the region of the partial frame associated with the inclusive frame in advance. The correction unit 1147 calculates a distance (in the following description, referred to as a "distance between the frames") between portions facing each other in the X-direction (the right and left direction of the camera) of focused two partial frames. In the example of Fig. 50, a difference between a distance of a boundary on the right side of the left partial frame and a distance of a boundary on the left side of the right partial frame is calculated as the distance between the frames. When the distance between the frames calculated as described above is smaller than a predetermined threshold set in a range in which erroneous separation may be caused for the same object, the correction unit 1147 causes the two partial frames to be coupling targets. On the other hand, when the distance between the frames is equal to or larger than the predetermined threshold, the objects may be different objects with high possibility, so that coupling processing is not performed on the two partial frames. In this case, 1.5 m is employed as the predetermined threshold, but the embodiment is not limited thereto. The following describes processing in a case in which the two partial frames become coupling targets.

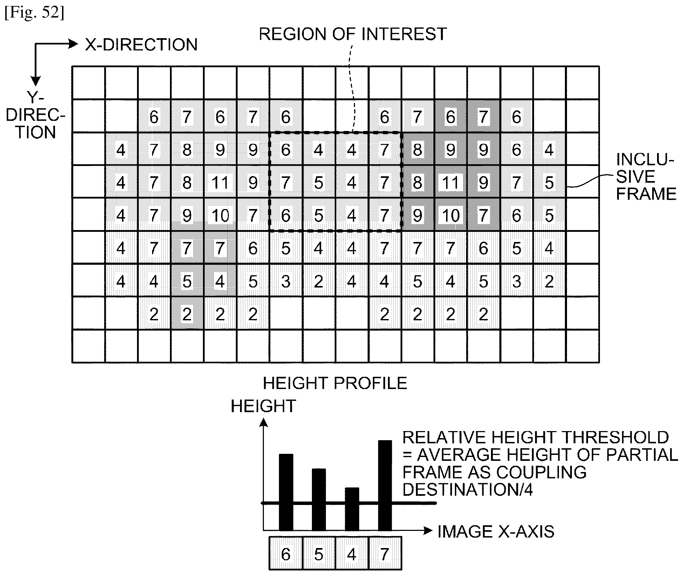

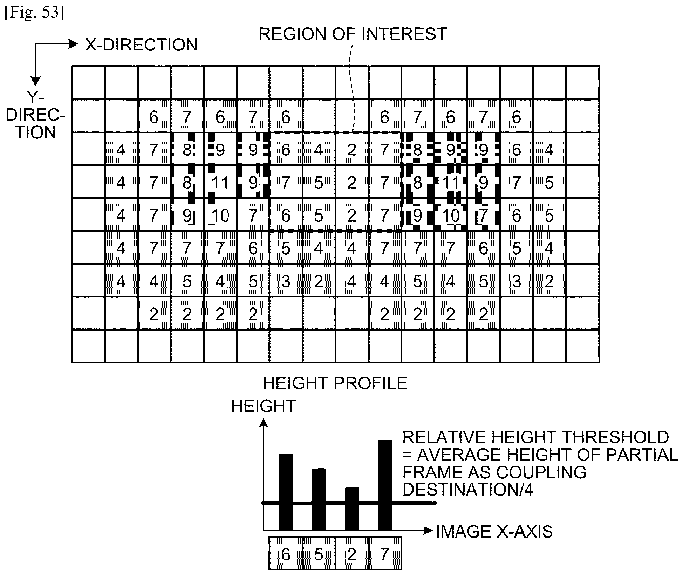

As illustrated in Fig. 51, the correction unit 1147 sets a region between the focused partial frames (in the example of Fig. 51, a region continuous from the partial frame on the left side (right side) to the partial frame on the right side (left side)) as a region of interest. The correction unit 1147 then obtains an average value of the height (average value of the height of each pixel included in the partial frame in a height map) from the road surface of the partial frame as a coupling destination (for example, any of the partial frame on the right side and the partial frame on the left side), and uses a value relative to the average value as a threshold (hereinafter, referred to as a "relative height threshold"). In this example, 1/4 of the average value is assumed to be the relative height threshold. In this case, the value relative to the average value of the height of one of the two partial frames as coupling targets is assumed to be the relative height threshold, but the embodiment is not limited thereto. For example, a value relative to the average value of the height of the two partial frames as coupling targets may be assumed to be the relative height threshold. The correction unit 1147 then creates a height profile indicating distribution of the most frequent height in a direction in which the region of interest continues. For example, as illustrated in Fig. 52 and Fig. 53, the correction unit 1147 obtains the most frequent height in each column of the region of interest to create the height profile. The correction unit 1147 then checks continuity of height based on the relative height threshold and the height profile. More specifically, the correction unit 1147 checks continuity of height by checking whether the most frequent height smaller than the relative height threshold is present in all most frequent heights indicated by the height profile, and determines to perform coupling processing on the partial frames only when there is continuity of height. For example, as illustrated in Fig. 52, all the most frequent heights indicated by the height profile are equal to or larger than the relative height threshold (when the most frequent height is equal to or larger than the relative height threshold in all columns of the region of interest), the correction unit 1147 determines that there is continuity of height, and determines to perform coupling processing on the two partial frames. On the other hand, as illustrated in Fig. 53 for example, when the most frequent height smaller than the relative height threshold is present in all the most frequent heights indicated by the height profile, the correction unit 1147 determines that there is no continuity of height, and determines not to perform coupling processing on the two partial frames.

For example, considering occurrence of distortion in the object in a case of long distance, the region of interest may be divided into an upper part and a lower part, and whether to perform coupling processing may be determined by checking continuity of height for each divided region of interest.

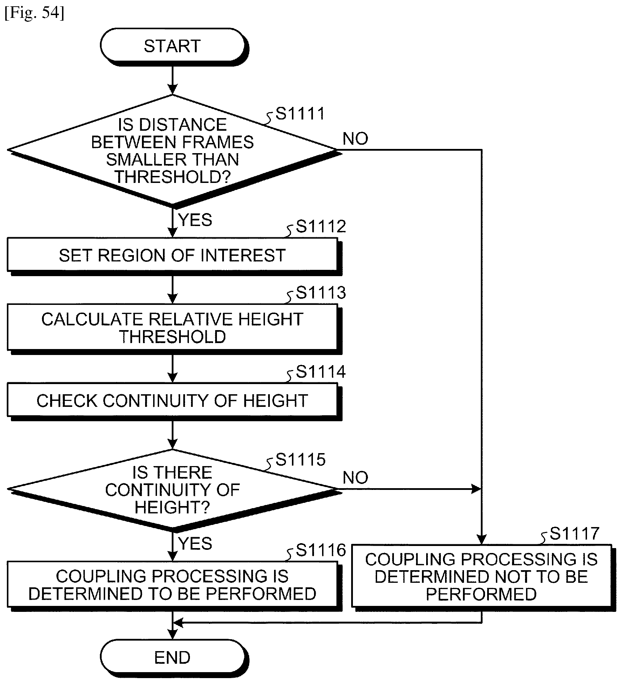

Fig. 54 is a flowchart illustrating a procedure of coupling determination processing described above. Specific content of each step is described above, so that the description thereof will be appropriately omitted. First, the correction unit 1147 checks whether the distance between the frames is smaller than the threshold (Step S1111). If the result of Step S1111 is "No" (No at Step S1111), the correction unit 1147 determines not to perform coupling processing on the focused two partial frames (Step S1117), and ends the processing. If the result of Step S1111 is "Yes" (Yes at Step S1111), the correction unit 1147 sets the region of interest (Step S1112). Next, the correction unit 1147 calculates the relative height threshold (Step S1113), and checks the continuity of height (Step S1114). Specific content of Step S1112 to Step S1114 is described above. If it is determined that there is the continuity of height as a result of Step S1114 (Yes at Step S1115), the correction unit 1147 determines to perform coupling processing (Step S1116), and ends the processing. On the other hand, if it is determined that there is no continuity of height as a result of Step S1114 (No at Step S1115), the correction unit 1147 determines not to perform coupling processing (Step S1117), and ends the processing.

The following continuously describes the procedure of Fig. 49. The correction unit 1147 performs coupling processing on two partial frames determined to be coupled in the coupling determination processing among combinations of partial frames, and does not perform coupling processing on two partial frames determined not to be coupled. That is, the processing at Step S1104 illustrated in Fig. 49 is performed for each combination of partial frames. If the coupling processing is determined to be performed (Yes at Step S1104), the correction unit 1147 performs coupling processing on the focused two partial frames (Step S1105), and the process proceeds to Step S1106. As the coupling processing, a circumscribing rectangle of the partial frames as coupling targets is calculated, a region of the circumscribing rectangle is set as a partial frame after coupling, and update processing of the ID is performed. On the other hand, if the result of Step S1104 is "No" (No at Step S1104), the processing directly proceeds to Step S1106.

At Step S1106, the correction unit 1147 performs correction processing on the partial frame. Content of the correction processing is the same as that of the correction processing at Step S1072 in Fig. 44, so that detailed description thereof will not be repeated. The processing at Step S1106 will be repeatedly performed corresponding to the number of partial frames.

As described above, in the present embodiment, the correction unit 1147 corrects the first assembly region while switching the correction method in accordance with the distance of the first assembly region obtained through the separation detection processing. More specifically, the correction unit 1147 performs correction processing for short distance on the first assembly region when the distance of the first assembly region is smaller than a threshold, and performs correction processing for long distance on the first assembly region when the distance of the first assembly region is equal to or larger than the threshold. As described above, estimation accuracy for the road surface is high in a case of short distance, so that erroneous separation of the separation detection result is hardly caused, but an object spreading in a region having a low height from the road surface may be detected to have a smaller frame than an actual frame in the separation detection processing. Considering the above points, the correction processing for short distance is processing of expanding the first assembly region by using a relative standard of the height of the first assembly region from the road surface obtained through the separation detection processing. In the case of short distance, estimation accuracy for the road surface is high, so that processing such as coupling is not required. As described above, estimation accuracy for the road surface in a case of long distance is lower than that in the case of short distance, so that erroneous separation of the separation detection result is easily caused. Considering the above points, the correction processing for long distance is processing of coupling two first assembly regions by using a relative standard of the height of the first assembly region from the road surface obtained through the separation detection processing. As described above, detection accuracy for the object can be sufficiently secured by switching between the correction processing for short distance and the correction processing for long distance in accordance with the distance of the first assembly region obtained through the separation detection processing to correct the first assembly region.

The embodiments according to the present invention have been described above, but the present invention is not limited to the embodiments. The present invention is limited by the appended claims.

The computer program executed by the equipment control system 1100 according to the embodiments described above may be recorded and provided in a computer-readable recording medium such as a compact disc read only memory (CD-ROM), a flexible disk (FD), a compact disc recordable (CD-R), a digital versatile disc (DVD), and a Universal Serial Bus (USB) as an installable or executable file, or may be provided or distributed via a network such as the Internet. Various computer programs may be embedded and provided in a ROM, for example.

Further, any of the above-described apparatus, devices or units can be implemented as a hardware apparatus, such as a special-purpose circuit or device, or as a hardware/ software combination, such as a processor executing a software program. Further, as described above, any one of the above-described and other methods of the present invention may be embodied in the form of a computer program stored in any kind of storage medium. Examples of storage mediums include, but are not limited to, flexible disk, hard disk, optical discs, magneto-optical discs, magnetic tapes, nonvolatile memory, semiconductor memory, read-only-memory (ROM), etc. Alternatively, any one of the above-described and other methods of the present invention may be implemented by an application specific integrated circuit (ASIC), a digital signal processor (DSP) or a field programmable gate array (FPGA), prepared by interconnecting an appropriate network of conventional component circuits or by a combination thereof with one or more conventional general purpose microprocessors or signal processors programmed accordingly.

## Reference Signs List

1 Object recognition device (example of "information processing device")
2 Main body unit (example of "imaging device")
3 Parallax value deriving unit
4 Communication line
5 Recognition processing unit
6 Vehicle control device (example of "control device")
60 Equipment control system
70 Vehicle
100a, 100b Image acquisition unit
200a, 200b Conversion unit
300 Parallax value arithmetic processing unit (example of "generation unit")
500 Second generation unit
501 Third generation unit (example of "movement surface estimation unit")
502 Fourth generation unit
503 Fifth generation unit
510 Clustering processing unit
511 Basic detection unit (example of "first detection unit")
512 Separation detection unit (example of "second detection unit")
513 Integration detection unit (example of "first detection unit")
514 Selection unit
515 Frame creation unit
516 Background detection unit
517 Rejection unit
530 Tracking unit
1100 Equipment control system
1101 Vehicle
1102 Imaging unit
1103 Analyzing unit
1104 Control unit
1105 Display unit
1106 Windshield
1111 Preprocessing unit
1112 Paralleled image generation unit
1113 Parallax image generation unit
1114 Object detection processing unit
1121 Acquisition unit
1122 Road surface detection processing unit
1123 Clustering processing unit
1124 Tracking processing unit
1131 Road surface estimation unit
1132 First generation unit
1133 Second generation unit
1134 Third generation unit
1140 Isolated region detection processing unit
1141 First detection unit
1142 Second detection unit
1143 Third detection unit
1144 Final determination processing unit
1145 Rejection determination processing unit
1146 Merge processing unit
1147 Correction unit
1150 Parallax image processing unit
1160 Rejection processing unit

## Citation List

## Patent Literature

PTL 1: Japanese Laid-open Patent Publication No. 2008-065634

## Claims

1. An information processing device (1) comprising:

a road surface estimation unit (1131) configured to estimate a road surface in a parallax image captured using a stereo camera (1102);
a first generation unit (1133) configured to generate a first U-disparity map, which is first information in which a position of an object in a horizontal direction and a position of the object in a depth direction are associated with each other, from pixels of the parallax image which are in a first height range above the road surface, wherein the horizontal direction is a direction perpendicular to an optical axis of the stereo camera (1102) and the depth direction is a direction of the optical axis of the stereo camera (1102);

a first detection unit (1142) configured to detect one region in the parallax image indicating an object based on the first U-disparity map;

a second generation unit (1132) configured to generate, from pixels of the parallax image which are in a second height range above the road surface, a second U-disparity map, which is second information in which the position of an object in the horizontal direction and the position of the object in the depth direction are associated with each other, wherein the second height range is a range of height larger than a predetermined value within the first height range;

a second detection unit (1141) configured to detect a plurality of regions in the parallax image indicating objects based on the second U-disparity map; and

an output unit (1144) configured to associate the one region detected based on the first information with the regions detected based on the second information as indicating the same object, and to output the one region and the regions that are associated with each other.

2. The information processing device (1) according to claim 1, wherein the second generation unit (1132) generates the second U-disparity map having higher resolution than the resolution of the first U-disparity map.

3. The information processing device (1) according to claim 1 or 2, further comprising a rejection unit (1160) configured to reject one of the one region and the regions that are associated with each other and output by the output unit (1144).

4. The information processing device (1) according to claim 3, wherein the rejection unit (1160) rejects the one region detected by the first detection unit (1142) when an object more distant than an object estimated to be present in the one region detected by first detection unit (1142) is detected in the one region detected by the first detection unit (1142).

5. The information processing device (1) according to claim 3 or 4, wherein the rejection unit (1160) rejects a non-corresponding region when there is the non-corresponding region not corresponding to a size of a region estimated in advance among the one region detected by the first detection unit (1142) and the regions.

6. The information processing device (1) according to any one of claims 3 to 5, wherein the rejection unit (1160) rejects the regions when the regions occupy a predetermined ratio or more of the one region detected by the first detection unit (1142).

7. The information processing device (1) according to any one of claims 1 to 6, further comprising a correction unit (1147) configured to couple the regions detected by the second detection unit (1141) when at least one of a distance in a depth direction and a distance in a horizontal direction between the regions is equal to or smaller than a predetermined threshold.

8. An imaging device (2) comprising the information processing device (1) according to any one of claims 1 to 7.

9. An equipment control system (1100) comprising the imaging device (2) according to claim 8.

10. A mobile object (1101) comprising the equipment control system (1100) according to claim 9.

11. An information processing method comprising:

a road surface estimation process of estimating a road surface in a parallax image captured using a stereo camera (1102);

a first generation process of generating a first U-disparity map, which is first information in which a position of an object in a horizontal direction and a position of the object in a depth direction are associated with each other, from pixels of the parallax image which are in a first height range above the road surface, wherein the horizontal direction is a direction perpendicular to an optical axis of the stereo camera (1102) and the depth direction is a direction of the optical axis of the stereo camera (1102);

a first detection process of detecting one region in the parallax image indicating an object based on the first U-disparity map;

a second generation process of generating, from pixels of the parallax image which are in a second height range above the road surface, a second U-disparity map, which is second information in which the position of an object in the horizontal direction and the position of the object in the depth direction are associated with each other, wherein the second height range is a range of height larger than a predetermined value within the first height range;

a second detection process of detecting a plurality of regions in the parallax image indicating objects based on the second U-disparity map; and

an output process of associating the one region detected based on the first information with the of regions detected based on the second information as indicating the same object, and to output the one region and the regions that are associated with each other.

12. A computer-readable recording medium that contains a computer program that causes a computer to execute the information processing method of claim 11.


**Patentansprüche**

1. Informationsverarbeitungsvorrichtung (1), die aufweist:

eine Oberflächenabschätzungseinheit (1131), die konfiguriert ist, um eine Straßenoberfläche in einem Parallaxenbild abzuschätzen, das unter Verwendung einer Stereokamera (1102) gemacht worden ist;
eine erste Erzeugungseinheit (1133), die konfiguriert ist, um eine erste U-Ungleichheitskarte zu erzeugen, welche erste Informationen, in welchen eine Position von einem Objekt in einer horizontalen Richtung und eine Position von dem Objekt in einer Tiefenrichtung miteinander verknüpft sind, aus Pixeln von einem Parallaxenbild erzeugt, und welche in einer ersten Höhenrichtung über der Straßenoberfläche sind, wobei die horizontale Richtung eine Richtung senkrecht zu einer optischen Achse von der Stereokamera (1102) ist und die Tiefenrichtung eine Richtung von der optischen Achse von der Stereokamera (1102) ist;
eine erste Erfassungseinheit (1142), die konfiguriert ist, um einen Bereich in dem Parallaxenbild zu erfassen, der ein Objekt basierend auf der ersten U-Ungleichheitskarte anzeigt;
eine zweite Erzeugungseinheit (1132), die konfiguriert ist, um von Bildelementen in dem Parallaxenbild, welche in einem zweiten Höhenbereich oberhalb der Straßenoberfläche sind, eine zweite U-Ungleichheitskarte zu erzeugen, welche zweite Informationen enthält, in welchen die Position von einem Objekt in der horizontalen Richtung und die Position von dem Objekt in der Tiefenrichtung miteinander verknüpft sind, wobei der zweite Höhenbereich in einem Bereich einer Höhe ist, die größer als ein vorbestimmter Wert innerhalb des ersten Höhenbereiches ist;
eine zweite Erfassungseinheit (1141), die konfiguriert ist, um mehrere Bereiche in dem Parallaxenbild zu erfassen, die Objekte basierend auf der zweiten U-Ungleichheitskarte anzeigen, und

eine Ausgabeeinheit (1144), die konfiguriert ist, um den einen Bereich, der basierend auf den ersten Informationen erfasst worden ist, mit den Bereichen zu verknüpfen, die basierend auf den zweiten Informationen erfasst worden sind, als das gleiche Objekt anzeigend, und um den einen Bereich und die Bereiche auszugeben, die miteinander verknüpft sind.

2. Informationsverarbeitungsvorrichtung (1) gemäß Anspruch 1, wobei die zweite Erzeugungseinheit (1132) die zweite U-Ungleichheitskarte mit einer höheren Auflösung erzeugt als die Auflösung von der ersten U-Ungleichheitskarte.

3. Informationsverarbeitungsvorrichtung (1) gemäß Anspruch 1 oder 2, die ferner aufweist, eine Zurückweisungseinheit (1160), die konfiguriert ist, um einen von dem ersten Bereich und den Bereichen, die miteinander verknüpft worden sind, zurückzuweisen und durch die Ausgabeeinheit (1144) auszugeben.

4. Informationsverarbeitungsvorrichtung (1) gemäß Anspruch 3, wobei die Zurückweisungseinheit (1160) den einen Bereich zurückweist, der durch die erste Erfassungseinheit (1142) erfasst worden ist, wenn ein Objekt weiter entfernt ist als ein Objekt, das als vorhanden in dem einen Bereich abgeschätzt worden ist, das durch die erste Erfassungseinheit (1142) erfasst worden ist, in dem einen Bereich durch die erste Erfassungseinheit (1142) erfasst wird.

5. Informationsverarbeitungsvorrichtung (1) gemäß Anspruch 3 oder 4, wobei die Zurückweisungseinheit (1160) einen nicht entsprechenden Bereich zurückweist, wenn dort der nicht entsprechende Bereich ist, der nicht zu einer Größe von einem Bereich entspricht, der im Voraus unter dem einen Bereich, der durch die erste Erfassungseinheit (1142) erfasst worden ist, und den Bereichen abgeschätzt worden ist.

6. Informationsverarbeitungsvorrichtung (1) gemäß irgendeinem der Ansprüche 3 bis 5, wobei die Zurückweisungseinheit (1160) die Bereiche zurückweist, wenn die Bereiche ein vorbestimmtes Verhältnis oder mehr von dem einen Bereich, der durch die erste Erfassungseinheit (1142) erfasst worden ist, besetzen.

7. Informationsverarbeitungsvorrichtung (1) gemäß irgendeinem der Ansprüche 1 bis 6, die ferner eine Korrektureinheit (1147) aufweist, die konfiguriert ist, um die Bereiche, die durch die zweite Erfassungseinheit (1141) erfasst worden sind, wenn zumindest einer von einem Abstand in einer Tiefenrichtung und einem Abstand in einer horizontalen Richtung zwischen den Bereichen gleich zu oder kleiner als ein vorbestimmter Schwellenwert ist, zu koppeln.

8. Abbildungsvorrichtung (2), die aufweist, die Informationsverarbeitungsvorrichtung (1) gemäß irgendeinem der Ansprüche 1 bis 7.

9. Gerätesteuerungssystem (1100), das aufweist, eine Abbildungsvorrichtung (2) gemäß Anspruch 8.

10. Mobiles Objekt (1101), das aufweist, das Gerätesteuerungssystem (1100) gemäß Anspruch 9.

11. Informationsverarbeitungsverfahren, das aufweist:

ein Straßenoberflächenabschätzungsverfahren zum Abschätzen einer Straßenoberfläche in einem Parallaxenbild, das unter Verwendung einer Stereokamera (1102) gemacht worden ist; ein erstes Erzeugungsverfahren zum Erzeugen einer ersten U-Ungleichheitskarte, welche erste Informationen enthält, in welchen eine Position von einem Objekt in einer horizontalen Richtung und eine Position von dem Objekt in einer Tiefenrichtung miteinander verknüpft werden, aus Pixeln von dem Parallaxenbild, welche in einem ersten Höhenbereich oberhalb der Straßenoberfläche sind, wobei die horizontale Richtung eine Richtung senkrecht zu einer optischen Achse von der Stereokamera (1102) und die Tiefenrichtung eine Richtung von der optischen Achse von der Stereokamera (1102) ist; ein erstes Erfassungsverfahren zum Erfassen eines Bereiches in dem Parallaxenbild, der ein Objekt basierend auf der ersten U-Ungleichheitskarte anzeigt; ein zweites Erzeugungsverfahren zum Erzeugen einer zweiten U-Ungleichheitskarte aus Pixeln von dem Parallaxenbild, welche in einem zweiten Höhenbereich oberhalb der Straßenoberfläche sind, welches zweite Informationen sind, in welchen die Position von einem Objekt in der horizontalen Richtung und die Position von dem Objekt in der Tiefenrichtung miteinander verknüpft werden, wobei der zweite Höhenbereich ein Bereich einer Höhe ist, die größer als ein vorbestimmter Wert innerhalb des ersten Höhenbereichs ist; ein zweites Erfassungsverfahren zum Erfassen mehrerer Bereiche in dem Parallaxenbild, die Objekte basierend auf der zweiten U-Ungleichheitskarte anzeigen; und ein Ausgabeverfahren zum Verknüpfen des einen Bereiches, der basierend auf den ersten Informationen erfasst worden ist, mit den Bereichen, die basierend auf den zweiten Informationen als das gleiche Objekt anzeigend erfasst worden sind, und der eine Bereich und die Bereiche, die miteinander verknüpft sind, werden ausgegeben.

12. Computerlesbares Aufzeichnungsmedium, das ein Computerprogramm enthält, das einen Computer dazu veranlasst, das Informationsverarbeitungsverfahren nach Anspruch 11 auszuführen.

## Revendications

1. Dispositif de traitement d'informations (1) comprenant :

une unité d'estimation de surface de route (1131) configurée pour estimer une surface de route dans une image parallaxe capturée à l'aide d'une caméra stéréo (1102) ; une première unité de génération (1133) configurée pour générer une première carte de disparité U, qui est constituée de premières informations dans lesquelles une position d'un objet dans une direction horizontale et une position de l'objet dans une direction de profondeur sont associées l'une à l'autre, à partir de pixels de l'image parallaxe qui se trouvent dans une première plage de hauteur au-dessus de la surface de route, dans lequel la direction horizontale est une direction perpendiculaire à un axe optique de la caméra stéréo (1102) et la direction de profondeur est une direction de l'axe optique de la caméra stéréo (1102) ; une première unité de détection (1142) configurée pour détecter une région dans l'image parallaxe indiquant un objet sur la base de la première carte de disparité U ; une deuxième unité de génération (1132) configurée pour générer, à partir de pixels de l'image parallaxe qui se trouvent dans une deuxième plage de hauteur au-dessus de la surface de route, une deuxième carte de disparité U, qui est constituée de deuxièmes informations dans lesquelles la position d'un objet dans la direction horizontale et la position de l'objet dans la direction de profondeur sont associées l'une à l'autre, dans lequel la deuxième plage de hauteur est une plage de hauteur supérieure à une valeur prédéterminée dans la première plage de hauteur ; une deuxième unité de détection (1141) configurée pour détecter une pluralité de régions dans l'image parallaxe indiquant des objets sur la base de la deuxième carte de disparité U ; et une unité de sortie (1144) configurée pour associer ladite région détectée sur la base des premières informations avec les régions détectées sur la base des deuxièmes informations comme indiquant le même objet, et pour fournir en sortie ladite région et les régions qui sont associées l'une aux autres.

**2.** Dispositif de traitement d'informations (1) selon la revendication 1, dans lequel la deuxième unité de génération (1132) génère la deuxième carte de disparité U ayant une résolution plus élevée que la résolution de la première carte de disparité U.

**3.** Dispositif de traitement d'informations (1) selon la revendication 1 ou 2, comprenant en outre une unité de rejet (1160) configurée pour rejeter l'une parmi ladite région et les régions qui sont associées l'une aux autres et fournies en sortie par l'unité de sortie (1144).

**4.** Dispositif de traitement d'informations (1) selon la revendication 3, dans lequel l'unité de rejet (1160) rejette ladite région détectée par la première unité de détection (1142) lorsqu'un objet plus distant qu'un objet estimé être présent dans ladite région détectée par la première unité de détection (1142) est détecté dans ladite région détectée par la première unité de détection (1142).

**5.** Dispositif de traitement d'informations (1) selon la revendication 3 ou 4, dans lequel l'unité de rejet (1160) rejette une région non correspondante lorsque la région non correspondante ne correspond pas à une taille de région estimée à l'avance parmi ladite région détectée par la première unité de détection (1142) et les régions.

**6.** Dispositif de traitement d'informations (1) selon l'une quelconque des revendications 3 à 5, dans lequel l'unité de rejet (1160) rejette les régions lorsque les régions occupent au moins un rapport prédéterminé de ladite région détectée par la première unité de détection (1142).

**7.** Dispositif de traitement d'informations (1) selon l'une quelconque des revendications 1 à 6, comprenant en outre une unité de correction (1147) configurée pour coupler les régions détectées par la deuxième unité de détection (1141) lorsqu'au moins l'une parmi une distance dans une direction de profondeur et une distance dans une direction horizontale entre les régions est inférieure ou égale à un seuil prédéterminé.

**8.** Dispositif d'imagerie (2) comprenant le dispositif de traitement d'informations (1) selon l'une quelconque des revendications 1 à 7.

**9.** Système de commande d'équipement (1100) comprenant le dispositif d'imagerie (2) selon la revendication 8.

**10.** Objet mobile (1101) comprenant le système de commande d'équipement (1100) selon la revendication 9.

**11.** Procédé de traitement d'informations comprenant :

un processus d'estimation de surface de route consistant à estimer une surface de route dans une image parallaxe capturée à l'aide d'une caméra stéréo (1102) ;
un premier processus de génération d'une première carte de disparité U, qui est constituée de premières informations dans lesquelles une position d'un objet dans une direction horizontale et une position de l'objet dans une direction de profondeur sont associées l'une à l'autre, à partir de pixels de l'image parallaxe qui se trouvent dans une première plage de hauteur au-dessus de la surface de route, dans lequel la direction horizontale est une direction perpendiculaire à un axe optique de la caméra stéréo (1102) et la direction de profondeur est une direction de l'axe optique de la caméra stéréo (1102) ;
un premier processus de détection consistant à détecter une région dans l'image parallaxe indiquant un objet sur la base de la première carte de disparité U ;
un deuxième processus de génération consistant à générer, à partir de pixels de l'image parallaxe qui se trouvent dans une deuxième plage de hauteur au-dessus de la surface de route, une deuxième carte de disparité U, qui est constituée de deuxièmes informations dans lesquelles la position d'un objet dans la direction horizontale et la position de l'objet dans la direction de profondeur sont associées l'une à l'autre, dans lequel la deuxième plage de hauteur est une plage de hauteur supérieure à une valeur prédéterminée dans la première plage de hauteur ;
un deuxième processus de détection consistant à détecter une pluralité de régions dans l'image parallaxe indiquant des objets sur la base de la deuxième carte de disparité U ; et
un processus de fourniture en sortie consistant à associer ladite région détectée sur la base des premières informations avec les régions détectées sur la base des deuxièmes informations comme indiquant le même objet, et à fournir en sortie ladite région et les régions qui sont associées l'une aux autres.

**12.** Support d'enregistrement lisible par ordinateur contenant un programme informatique qui amène un ordinateur à exécuter le procédé de traitement d'informations de la revendication 11.

[Fig. 1A]

[Fig. 1B]

[Fig. 2]

[Fig. 3]

[Fig. 4]

[Fig. 5A]

[Fig. 5B]

PARALLAX VALUE dp

[Fig. 6A]

611    613    614    612

x →

y ↓

Ia

[Fig. 6B]

611a    613a    614a    612a

PARALLAX
VALUE
dp ↓

UM

x →

[Fig. 6C]

611b    613b    614b    612b

PARALLAX
VALUE
dp ↓

UM_H

x →

[Fig. 7A]

611b     613b     614b     612b

RM_H

PARALLAX VALUE dp

ACTUAL DISTANCE

[Fig. 7B]

611c     613c     614c     612c

RM_H

PARALLAX VALUE dp

ACTUAL DISTANCE

[Fig. 8]

| OBJECT TYPE | WIDTH | HEIGHT | DEPTH |
|---|---|---|---|
| MOTORCYCLE, BICYCLE | <1100 | <2500 | >1000 |
| PEDESTRIAN | <1100 | <2500 | <=1000 |
| SMALL CAR | <1700 | <1700 | <10000 |
| ORDINARY CAR | <1700 | <2500 | <10000 |
| TRUCK | <3500 | <3500 | <15000 |
| OTHERS | OBJECTS HAVING SIZE OTHER THAN ABOVE SIZES | | |

UNIT (mm)

[Fig. 9]

START

BASIC DETECTION PROCESSING  S11

SEPARATION DETECTION PROCESSING  S12

INTEGRATION DETECTION PROCESSING  S13

SELECT OBJECT REGION TO BE OUTPUT  S14

CREATE DETECTION FRAME  S15

DETECT BACKGROUND IN DETECTION FRAME  S16

REJECTION PROCESSING  S17

END

[Fig. 10A]

THINNED-
OUT
PARALLAX

[Fig. 10B]

PARALLAX IMAGE (REFERENCE IMAGE)

[Fig. 11]

```
        ┌─────────────┐
        │    START    │
        └──────┬──────┘
               │        ⌇S201
        ┌──────▼──────────────────┐
        │  GIVE SAME ID TO PIXELS  │
        │ CONTINUOUS IN VERTICAL,  │
        │  HORIZONTAL, OR OBLIQUE  │
        │        DIRECTION         │
        └──────┬───────────────────┘
               │        ⌇S202
        ┌──────▼──────────────────┐
        │     SET RECTANGLE        │
        │ CIRCUMSCRIBING EACH PIXEL│
        │ GROUP (EACH ISOLATED     │
        │   REGION) TO WHICH SAME  │
        │       ID IS GIVEN        │
        └──────┬───────────────────┘
               │        ⌇S203
        ┌──────▼──────────────────┐
        │ REJECT RECTANGLE HAVING  │
        │ SIZE EQUAL TO OR SMALLER  │
        │ THAN PREDETERMINED VALUE │
        └──────┬───────────────────┘
               │
        ┌──────▼──────┐
        │     END     │
        └─────────────┘
```

[Fig. 12]

```
        ┌─────────────┐
        │    START    │
        └──────┬──────┘
               │        ⌇S301
        ┌──────▼──────────────────┐
        │  GIVE SAME ID TO PIXELS  │
        │ CONTINUOUS IN VERTICAL OR│
        │  HORIZONTAL DIRECTION ON │
        │     SMALL REAL UMAP      │
        └──────┬───────────────────┘
               │        ⌇S302
        ┌──────▼──────────────────┐
        │     SET RECTANGLE        │
        │ CIRCUMSCRIBING EACH PIXEL│
        │ GROUP (EACH ISOLATED     │
        │   REGION) TO WHICH SAME  │
        │       ID IS GIVEN        │
        └──────┬───────────────────┘
               │        ⌇S303
        ┌──────▼──────────────────┐
        │ EXTRACT REGION OF OBJECT │
        │    SUCH AS VEHICLE       │
        └──────┬───────────────────┘
               │
        ┌──────▼──────┐
        │     END     │
        └─────────────┘
```

[Fig. 13]

START

S401
REJECT OBJECT REGION NOT PRESENT ON LANE ON WHICH HOST VEHICLE IS TRAVELING AMONG OBJECT REGIONS DETECTED THROUGH INTEGRATION DETECTION PROCESSING

S402
ARE OBJECT REGIONS DETECTED THROUGH INTEGRATION DETECTION AND BASIC DETECTION OVERLAPPED WITH EACH OTHER IN CERTAIN DEGREE?

NO

YES

S403
IS SIZE OF OBJECT REGION THROUGH INTEGRATION DETECTION PROCESSING SMALLER THAN THAT OF OBJECT REGION THROUGH BASIC DETECTION PROCESSING?

YES

NO

S405
ARE PLURALITY OF OBJECT REGIONS DETECTED THROUGH SEPARATION DETECTION PRESENT IN OBJECT REGION DETECTED THROUGH BASIC DETECTION?

NO

YES

S408
OUTPUT ONLY OBJECT REGION DETECTED THROUGH INTEGRATION DETECTION PROCESSING

S406
OUTPUT OBJECT REGION DETECTED THROUGH INTEGRATION DETECTION PROCESSING AND PLURALITY OF OBJECT REGIONS DETECTED THROUGH SEPARATION DETECTION PROCESSING

S407
OUTPUT OBJECT REGION DETECTED THROUGH INTEGRATION DETECTION PROCESSING AND ONE OBJECT REGION DETECTED THROUGH BASIC DETECTION PROCESSING

S404
OUTPUT OBJECT REGION DETECTED THROUGH BASIC DETECTION PROCESSING AND OBJECT REGION DETECTED THROUGH SEPARATION DETECTION PROCESSING

END

[Fig. 14]

START

CALCULATE RANGE ON REAL UMAP RM CORRESPONDING TO DETECTION FRAME ⌐S501

CREATE OBJECT PARALLAX HISTOGRAM ⌐S502

CREATE BACKGROUND PARALLAX HISTOGRAM ⌐S503

IS THERE PORTION HAVING VALUE OF OBJECT PARALLAX HISTOGRAM EQUAL TO OR SMALLER THAN FIRST PREDETERMINED VALUE AND VALUE OF BACKGROUND PARALLAX HISTOGRAM EQUAL TO OR LARGER THAN SECOND PREDETERMINED VALUE? ⌐S504

YES

NO

DETERMINE THAT BACKGROUND IS NOT PRESENT IN DETECTION FRAME ⌐S506

DETERMINE THAT BACKGROUND IS PRESENT IN DETECTION FRAME ⌐S505

END

[Fig. 15A]

[Fig. 15B]

[Fig. 15C]

[Fig. 16A]

[Fig. 16B]

[Fig. 16C]

[Fig. 17]

[Fig. 18A]

751    752

[Fig. 18B]

762
761    763

765

767

765

764

[Fig. 19]

[Fig. 20]

[Fig. 21]

[Fig. 22]

[Fig. 23]

1114

OBJECT DETECTION PROCESSING UNIT

PARALLAX IMAGE →

| 1121 | 1122 | 1123 | 1124 |
|---|---|---|---|
| ACQUI-SITION UNIT | ROAD SURFACE DETEC-TION PROC-ESSING UNIT | CLUSTER-ING PROCESS-ING UNIT | TRACKING PROCESS-ING UNIT |

→ OBJECT DETECTION RESULT

[Fig. 24]

1122

ROAD SURFACE DETECTION PROCESSING UNIT

| 1131 | 1132 |
|---|---|
| ROAD SURFACE ESTIMATION UNIT | FIRST GENERATION UNIT |

| 1133 | 1134 |
|---|---|
| SECOND GENERATION UNIT | THIRD GENERATION UNIT |

[Fig. 25]

VEHICLE

200cm OR MORE

150cm TO 200cm

0cm TO 150cm

PERSON GROUP G1

PERSON GROUP G2

POLE

[Fig. 26]

[Fig. 27]

[Fig. 28]

$\varsigma$1123

CLUSTERING PROCESSING UNIT

$\varsigma$1140

ISOLATED REGION DETECTION PROCESSING UNIT

$\varsigma$1141

FIRST DETECTION UNIT

$\varsigma$1142

SECOND DETECTION UNIT

$\varsigma$1143

THIRD DETECTION UNIT

$\varsigma$1144

FINAL DETERMINATION PROCESSING UNIT

$\varsigma$1145

REJECTION DETERMINATION PROCESSING UNIT

$\varsigma$1146

MERGE PROCESSING UNIT

$\varsigma$1147

CORRECTION UNIT

PARALLAX IMAGE PROCESSING UNIT ~1150

REJECTION PROCESSING UNIT ~1160

[Fig. 29]

[Fig. 30]

[Fig. 31]

[Fig. 32]

[Fig. 33]

```
                    ┌─────────────┐
                    │    START    │
                    └──────┬──────┘
                           │           ⌠S1001
                           ▼
                 ┌───────────────────────┐
                 │   ISOLATED REGION     │
                 │ DETECTION PROCESSING  │
                 └───────────┬───────────┘
                             │         ⌠S1002
                             ▼
                 ┌───────────────────────┐
                 │    PARALLAX IMAGE     │
                 │      PROCESSING       │
                 └───────────┬───────────┘
                             │         ⌠S1003
                             ▼
                 ┌───────────────────────┐
                 │  REJECTION PROCESSING │
                 └───────────┬───────────┘
                             │
                             ▼
                    ┌─────────────┐
                    │     END     │
                    └─────────────┘
```

[Fig. 34]

```
                    ┌─────────────┐
                    │    START    │
                    └──────┬──────┘
                           │           ⌠S1011
                           ▼
                 ┌───────────────────────┐
                 │    BASIC DETECTION    │
                 │      PROCESSING       │
                 └───────────┬───────────┘
                             │         ⌠S1012
                             ▼
                 ┌───────────────────────┐
                 │ SEPARATION DETECTION  │
                 │      PROCESSING       │
                 └───────────┬───────────┘
                             │         ⌠S1013
                             ▼
                 ┌───────────────────────┐
                 │ DETECTION PROCESSING  │
                 │    FOR INTEGRATION    │
                 └───────────┬───────────┘
                             │         ⌠S1014
                             ▼
                 ┌───────────────────────┐
                 │  FINAL DETERMINATION  │
                 │      PROCESSING       │
                 └───────────┬───────────┘
                             │
                             ▼
                    ┌─────────────┐
                    │     END     │
                    └─────────────┘
```

[Fig. 35]

```
        ┌─────────────────┐
        │      START      │
        └─────────────────┘
                 │
                 ▼            ⌇S1021
    ┌──────────────────────────┐
    │   LABELING PROCESSING    │
    └──────────────────────────┘
                 │
                 ▼            ⌇S1022
    ┌──────────────────────────┐
    │   DETECTION RECTANGLE    │
    │    CREATING PROCESSING   │
    └──────────────────────────┘
                 │
                 ▼            ⌇S1023
    ┌──────────────────────────┐
    │   SIZE CHECK PROCESSING  │
    └──────────────────────────┘
                 │
                 ▼            ⌇S1024
    ┌──────────────────────────┐
    │    FREQUENCY CHECK       │
    │      PROCESSING          │
    └──────────────────────────┘
                 │
                 ▼
        ┌─────────────────┐
        │       END       │
        └─────────────────┘
```

[Fig. 36]

FOCUSED PIXEL

[Fig. 37]

```
                    ┌──────────────┐
                    │    START     │
                    └──────┬───────┘
                           ▼
              ╱────────────────────────────╲
             ╱   LOOP CORRESPONDING          ╲
            ╱     TO NUMBER OF BASIC          ╲
            ╲  DETECTION RESULTS IS STARTED   ╱
             ╲──────────────┬────────────────╱
                            ▼              ⌐S1031
              ┌────────────────────────────┐
              │     LABELING PROCESSING     │
              └──────────────┬─────────────┘
                             ▼             ⌐S1032
              ┌────────────────────────────┐
              │ DETECTION RECTANGLE CREATING│
              │         PROCESSING          │
              └──────────────┬─────────────┘
                             ▼             ⌐S1033
              ┌────────────────────────────┐
              │     SIZE CHECK PROCESSING   │
              └──────────────┬─────────────┘
                             ▼             ⌐S1034
              ┌────────────────────────────┐
              │  FREQUENCY CHECK PROCESSING │
              └──────────────┬─────────────┘
                             ▼
              ╲────────────────────────────╱
               ╲   LOOP CORRESPONDING TO   ╱
                ╲ NUMBER OF BASIC DETECTION╱
                ╱    RESULTS IS ENDED      ╲
               ╱──────────────┬────────────╲
                              ▼
                    ┌──────────────┐
                    │     END      │
                    └──────────────┘
```

[Fig. 38]

```
                    ┌──────────────┐
                    │    START     │
                    └──────┬───────┘
                           ▼
              ╱────────────────────────────╲
             ╱   LOOP UNTIL DETECTION        ╲
             ╲  COMPLETION IS STARTED        ╱
              ╲──────────────┬──────────────╱
                             ▼             ⌐S1041
              ┌────────────────────────────┐
              │     LABELING PROCESSING     │
              └──────────────┬─────────────┘
                             ▼             ⌐S1042
              ┌────────────────────────────┐
              │  DETECTION RECTANGLE        │
              │   CREATING PROCESSING       │
              └──────────────┬─────────────┘
                             ▼             ⌐S1043
              ┌────────────────────────────┐
              │   OUTPUT DETERMINATION      │
              │        PROCESSING           │
              └──────────────┬─────────────┘
                             ▼
              ╲────────────────────────────╱
               ╲  LOOP UNTIL DETECTION     ╱
               ╱  COMPLETION IS ENDED      ╲
                ╲────────────┬────────────╱
                             ▼
                    ┌──────────────┐
                    │     END      │
                    └──────────────┘
```

[Fig. 39A]

| CONDITION | PROCESSING |
|---|---|
| WIDTH OF DETECTION RESULT ≥ VEHICLE MINIMUM WIDTH, AND VEHICLE MAXIMUM WIDTH ≥ WIDTH OF DETECTION RESULT | DETECTION RESULT IS DETERMINED TO BE VALID |
| OTHERS | DETECTION RESULT IS REJECTED |

[Fig. 39B]

| CONDITION 1 | CONDITION 2 | PROCESSING |
|---|---|---|
| "NEAREST POINT DISTANCE" ≥ DISTANCE THRESHOLD | HEIGHT OF DETECTION RESULT ≥ DEPTH THRESHOLD FOR LONG DISTANCE | DETECTION RESULT IS DETERMINED TO BE VALID |
| | OTHERS | DETECTION RESULT IS REJECTED |
| OTHERS | HEIGHT OF DETECTION RESULT ≥ DEPTH THRESHOLD FOR SHORT DISTANCE | DETECTION RESULT IS DETERMINED TO BE VALID |
| | OTHERS | DETECTION RESULT IS REJECTED |

[Fig. 39C]

| CONDITION | PROCESSING |
|---|---|
| NUMBER OF PIXELS HAVING EFFECTIVE PARALLAX IN DETECTION RESULT > AREA OF RECTANGLE OF DETECTION RESULT × 0.2 | DETECTION RESULT IS DETERMINED TO BE VALID |
| OTHERS | DETECTION RESULT IS REJECTED |

[Fig. 40]

```
                    ┌─────────────┐
                    │    START    │
                    └──────┬──────┘
                           ▼
         ╱──────────────────────────────────╲
        ╱      LOOP CORRESPONDING TO          ╲
       ╱       NUMBER OF INTEGRATION           ╲
        ╲    DETECTION RESULTS IS STARTED      ╱
         ╲──────────────────┬─────────────────╱
                            │              ⟋S1051
                    ┌───────▼──────────┐
                    │ REJECTION DETERMINATION │
                    │ PROCESSING ON INTEGRATION│
                    │   DETECTION RESULT       │
                    └───────┬──────────┘
                            │              ⟋S1052
                   ╱────────▼────────╲        NO
                  ╱   IS INTEGRATION   ╲──────────┐
                  ╲  DETECTION RESULT  ╱          │
                   ╲      VALID?      ╱           │
                    ╲────────┬───────╱            │
                         YES │                    │
         ╱──────────────────▼─────────────────╲   │
        ╱      LOOP CORRESPONDING TO           ╲  │
       ╱      NUMBER OF BASIC DETECTION         ╲ │
        ╲       RESULTS IS STARTED             ╱  │
         ╲──────────────────┬─────────────────╱   │
                            │              ⟋S1053 │
                    ┌───────▼──────────┐          │
                    │ MATCHING BETWEEN INTEGRATION│
                    │ DETECTION RESULT AND BASIC  │
                    │    DETECTION RESULT         │
                    └───────┬──────────┘          │
                            │              ⟋S1054 │
          NO       ╱────────▼────────╲            │
     ┌────────────╱      DOES           ╲         │
     │            ╲ INTEGRATION DETECTION╱        │
     │             ╲RESULT OVERLAP WITH ╱         │
     │              ╲ BASIC DETECTION  ╱          │
     │               ╲   RESULT?      ╱           │
     │                ╲──────┬───────╱            │
     │   ⟋S1056          YES │        ⟋S1055      │
┌────▼──────────┐    ┌───────▼──────────┐         │
│ SET ONLY INTEGRATION│ MERGE INTEGRATION DETECTION│        │
│ DETECTION RESULT AS │ RESULT WITH BASIC DETECTION│       │
│  INCLUSIVE FRAME    │ RESULT OR SEPARATION      │        │
└────┬──────────┘    │ DETECTION RESULT          │        │
     │                └───────┬──────────┘        │
     │                        │                   │
     └────────────┬───────────┘                   │
         ╱─────────▼────────────────────────╲     │
        ╱      LOOP CORRESPONDING TO          ╲   │
       ╱      NUMBER OF BASIC DETECTION         ╲ │
        ╲       RESULTS IS ENDED              ╱   │
         ╲──────────────────┬────────────────╱    │
                            ◄─────────────────────┘
         ╱──────────────────▼────────────────╲
        ╱ LOOP CORRESPONDING TO NUMBER         ╲
       ╱  OF INTEGRATION DETECTION              ╲
        ╲     RESULTS IS ENDED                ╱
         ╲──────────────────┬────────────────╱
         ╱──────────────────▼────────────────╲
        ╱      LOOP CORRESPONDING TO          ╲
       ╱      NUMBER OF DETECTION              ╲
        ╲       RESULTS IS STARTED           ╱
         ╲──────────────────┬────────────────╱
                            │              ⟋S1057
                    ┌───────▼──────────┐
                    │ CORRECTION PROCESSING │
                    └───────┬──────────┘
         ╱──────────────────▼────────────────╲
        ╱      LOOP CORRESPONDING TO          ╲
       ╱      NUMBER OF DETECTION              ╲
        ╲       RESULTS IS ENDED             ╱
         ╲──────────────────┬────────────────╱
                    ┌────────▼─────┐
                    │     END      │
                    └──────────────┘
```

[Fig. 41A]

[Fig. 41B]

| CONDITION | CONDITION 2 | PROCESSING |
|---|---|---|
| "NEAREST POINT DISTANCE" > Z1 | "DISTANCE TO CENTER" > Z2, AND "DISTANCE TO CENTER" $\leq$ Z2 | DETERMINED TO BE OUTPUT CANDIDATE |
| | OTHERS | DETERMINED NOT TO BE OUTPUT CANDIDATE |
| OTHERS | "DISTANCE TO CENTER" > Z3, AND "DISTANCE TO CENTER" $\leq$ Z3 | DETERMINED TO BE OUTPUT CANDIDATE |
| | OTHERS | DETERMINED NOT TO BE OUTPUT CANDIDATE |

[Fig. 42]

| CONDITION 1 | CONDITION 2 | PROCESSING |
|---|---|---|
| THERE IS BASIC DETECTION RESULT OVERLAPPING WITH INTEGRATION DETECTION RESULT | SIZE OF INTEGRATION DETECTION RESULT IS SMALLER THAN THAT OF BASIC DETECTION RESULT | INTEGRATION DETECTION RESULT IS REJECTED<br>INCLUSIVE FRAME: BASIC DETECTION RESULT<br>PARTIAL FRAME: SEPARATION DETECTION RESULT |
| | THERE ARE PLURALITY OF SEPARATION DETECTION RESULTS ASSOCIATED WITH BASIC DETECTION RESULT | INCLUSIVE FRAME: INTEGRATION DETECTION RESULT<br>PARTIAL FRAME: SEPARATION DETECTION RESULT |
| | OTHERS | INCLUSIVE FRAME: INTEGRATION DETECTION RESULT<br>PARTIAL FRAME: BASIC DETECTION RESULT |
| OTHERS | – | INCLUSIVE FRAME: INTEGRATION DETECTION RESULT<br>PARTIAL FRAME: NONE |

[Fig. 43]

START

LOOP CORRESPONDING TO NUMBER OF DETECTION RESULTS IS STARTED

S1061
CREATE ID TABLE

S1062
COUNT NUMBER OF PARTIAL FRAMES CORRESPONDING TO VEHICLE SIZE

S1063
IS INTEGRATION DETECTION RESULT INCLUDED?

YES

NO

S1064
INTEGRATION CORRECTION PROCESSING

S1065
IS DISTANCE OF DETECTION RESULT SMALLER THAN PREDETERMINED DISTANCE?

YES

NO

S1066
CORRECTION PROCESSING FOR SHORT DISTANCE

S1067
CORRECTION PROCESSING FOR LONG DISTANCE

LOOP CORRESPONDING TO NUMBER OF DETECTION RESULTS IS ENDED

END

[Fig. 44]

```
         ┌─────────────┐
         │    START    │
         └──────┬──────┘
                │           ⟋S1071
    ┌───────────▼───────────┐
    │ CORRECTION PROCESSING OF │
    │    INCLUSIVE FRAME       │
    └───────────┬───────────┘
                │           ⟋S1072
    ┌───────────▼───────────┐
    │ CORRECTION PROCESSING  │
    │   OF PARTIAL FRAME     │
    └───────────┬───────────┘
                │           ⟋S1073
    ┌───────────▼───────────┐
    │ COUPLING PROCESSING OF │
    │    PARTIAL FRAMES      │
    └───────────┬───────────┘
                │
         ┌──────▼──────┐
         │     END     │
         └─────────────┘
```

[Fig. 45]

CIRCUMSCRIBING RECTANGLE

INCLUSIVE FRAME

[Fig. 46]

```
                        ┌──────────────┐
                        │    START     │
                        └──────┬───────┘
                               │
       ┌───────────────────────▼──────────────────────────┐
      / LOOP CORRESPONDING TO NUMBER OF                     \
     /  PARTIAL FRAMES ASSOCIATED WITH                       \
    /   FOCUSED INCLUSIVE FRAME IS STARTED                    \
   └──────────────────────────┬────────────────────────────┘
                              │                      ςS1710
       ┌──────────────────────▼──────────────────────┐
       ║    EXPANSION PROCESSING OF PARTIAL           ║
       ║    FRAME                                      ║
       └──────────────────────┬──────────────────────┘
                              │                      ςS1720
       ┌──────────────────────▼──────────────────────┐
       │     PIXEL ID UPDATE PROCESSING               │
       └──────────────────────┬──────────────────────┘
                               │
    ┌──────────────────────────▼────────────────────────────┐
     \  LOOP CORRESPONDING TO NUMBER OF                     /
      \  PARTIAL FRAMES ASSOCIATED WITH                    /
       \  FOCUSED INCLUSIVE FRAME IS ENDED                /
        └──────────────────────┬──────────────────────┘
                               │
                        ┌──────▼───────┐
                        │     END      │
                        └──────────────┘
```

[Fig. 47]

| CONDITION 1 | CONDITION 2 | PROCESSING |
|---|---|---|
| CENTER DISTANCE DIFFERENCE < 2[m] | CENTER HORIZONTAL POSITION DIFFERENCE ≤ 6[m] | COUPLING PROCESSING TARGET |
| | OTHERS | NONE |
| OVERLAPPING RATE IN DEPTH DIRECTION OF FRAME IS EQUAL TO OR LARGER THAN 20% | CENTER HORIZONTAL POSITION DIFFERENCE ≤ 6[m] | COUPLING PROCESSING TARGET |
| | OTHERS | NONE |
| OTHERS | – | NONE |

[Fig. 48]

START

IS NUMBER OF PARTIAL FRAMES HAVING VEHICLE SIZE EQUAL TO OR LARGER THAN 1? — S1091

NO

YES

EXPANSION PROCESSING OF PARTIAL FRAME — S1092

UPDATE PROCESSING OF PIXEL ID — S1093

DELETE INCLUSIVE FRAME — S1094

END

[Fig. 49]

```
                    ┌──────────────┐
                    │    START     │
                    └──────┬───────┘
                           │
                           ▼
                   ╱────────────────╲    S1101
                 ╱   IS NUMBER OF     ╲
               ╱   PARTIAL FRAMES HAVING ╲   NO
               ╲  VEHICLE SIZE EQUAL TO  ╱───────────────┐
                 ╲  OR LARGER THAN 1?  ╱                 │
                   ╲────────────────╱                    │
                           │                             │
                          YES                            │
                           │                             ▼
        ┌──────────────────────────┐ S1102   ┌──────────────────────┐ S1103
        │  COUPLING DETERMINATION  │         │      COUPLING        │
        │ PROCESSING OF PARTIAL    │         │   DETERMINATION      │
        │ FRAME HAVING VEHICLE     │         │  PROCESSING OF ALL   │
        │ SIZE AND OTHER           │         │   PARTIAL FRAMES     │
        │ PARTIAL FRAME            │         └──────────┬───────────┘
        └───────────┬──────────────┘                    │
                    │◄──────────────────────────────────┘
                    ▼
            ╱────────────────╲   S1104
          ╱     IS COUPLING    ╲
        ╱  PROCESSING DETERMINED ╲  NO
        ╲    TO BE PERFORMED?    ╱──────────────┐
          ╲────────────────────╱                │
                    │                           │
                   YES                          │
                    ▼         S1105             │
        ┌──────────────────────────┐            │
        │    COUPLING PROCESSING    │           │
        └───────────┬──────────────┘            │
                    │◄───────────────────────────┘
                    ▼         S1106
        ┌──────────────────────────┐
        │   CORRECT PARTIAL FRAME   │
        └───────────┬──────────────┘
                    │
                    ▼
            ┌──────────────┐
            │     END      │
            └──────────────┘
```

[Fig. 50]

X-DIRECTION

PARTIAL FRAME (RIGHT SIDE)

Y-DIREC-TION

INCLU-SIVE FRAME

PARTIAL FRAME (LEFT SIDE)

DISTANCE BETWEEN FRAMES

[Fig. 51]

PARTIAL FRAME (LEFT SIDE)

REGION OF INTEREST

PARTIAL FRAME (RIGHT SIDE)

X-DIRECTION

Y-DIREC-TION

INCLU-SIVE FRAME

[Fig. 52]

REGION OF INTEREST

X-DIRECTION

Y-DIRECTION

INCLUSIVE FRAME

HEIGHT PROFILE

HEIGHT

RELATIVE HEIGHT THRESHOLD
= AVERAGE HEIGHT OF PARTIAL
FRAME AS COUPLING
DESTINATION/4

IMAGE X-AXIS

[Fig. 53]

REGION OF INTEREST

X-DIRECTION

Y-DIREC-TION

HEIGHT PROFILE

HEIGHT

RELATIVE HEIGHT THRESHOLD
= AVERAGE HEIGHT OF PARTIAL
FRAME AS COUPLING
DESTINATION/4

IMAGE X-AXIS

[Fig. 54]

```
                    ┌──────────────┐
                    │    START     │
                    └──────┬───────┘
                           │
                           ▼
              ╱────────────────────╲        S1111
            ╱    IS DISTANCE         ╲
          ╱      BETWEEN FRAMES       ╲      NO
          ╲      SMALLER THAN         ╱ ──────────────────┐
            ╲    THRESHOLD?         ╱                      │
              ╲──────────────────╱                        │
                       │ YES                               │
                       ▼                   S1112           │
            ┌──────────────────────┐                       │
            │ SET REGION OF INTEREST│                      │
            └──────────┬───────────┘                       │
                       │                    S1113          │
                       ▼                                   │
            ┌──────────────────────┐                       │
            │ CALCULATE RELATIVE HEIGHT                     │
            │      THRESHOLD        │                       │
            └──────────┬───────────┘                       │
                       │                    S1114          │
                       ▼                                   │
            ┌──────────────────────┐                       │
            │ CHECK CONTINUITY OF HEIGHT                    │
            └──────────┬───────────┘                       │
                       │                                   │
                       ▼                                   │
              ╱────────────────────╲        S1115          │
            ╱     IS THERE           ╲                     │
          ╱      CONTINUITY OF        ╲      NO             │
          ╲       HEIGHT?            ╱ ──────────────┐      │
            ╲                      ╱                 │      │
              ╲──────────────────╱                  │      │
                       │ YES                         │      ▼
                       ▼          S1116              │   S1117
            ┌──────────────────────┐         ┌──────────────────────┐
            │ COUPLING PROCESSING IS│         │ COUPLING PROCESSING IS│
            │ DETERMINED TO BE PERFORMED     │ DETERMINED NOT TO BE  │
            └──────────┬───────────┘         │    PERFORMED          │
                       │                     └──────────┬───────────┘
                       │◄───────────────────────────────┘
                       ▼
                ┌──────────────┐
                │     END      │
                └──────────────┘
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008065634 A

**Non-patent literature cited in the description**

- Stereo based ROIs generation for detecting pedestrians in close proximity. **T WU MEIQING et al.** 17TH INTERNATIONAL IEEE CONFERENCE ON INTELLIGENT TRANSPORTATION SYSTEMS (ITSC). IEEE, 08 October 2014, 1929-1934